# EUROPEAN PATENT APPLICATION

(11) **EP 4 199 558 A1**
(43) Date of publication of application: **21.06.2023**
(21) Application number: 21865812.8
(22) Date of filing: 17.08.2021
(51) Int. Cl.: H04W 4/80

(54) **AUDIO CONTROL SYSTEM**

(30) Priority: 10.09.2020 CN 202010950808; 18.11.2020 CN 202011292453
(71) Applicant: Huawei Technologies Co., Ltd., Shenzhen, Guangdong 518129 (CN)
(72) Inventor: NI, Guanjun, Shenzhen, Guangdong 518129 (CN); ZHANG, Xiaoqiang, Shenzhen, Guangdong 518129 (CN); ZHU, Yuhong, Shenzhen, Guangdong 518129 (CN); SU, Jiongjin, Shenzhen, Guangdong 518129 (CN)
(74) Representative: Goddar, Heinz J.
(86) International application number: PCT/CN2021/113063
(87) International publication number: WO 2022/052756

(57) **Abstract**

This application provides an audio control system, and relates to the field of communication technologies. The system includes a Bluetooth headset, a first electronic device, and a second electronic device. The first electronic device is configured to send a first media audio stream to the Bluetooth headset in response to a first operation of a user. The Bluetooth headset is configured to receive the first media audio stream sent by the first electronic device, and output the first media audio stream. The second electronic device is configured to output, in response to a second operation of the user, a second media audio stream through a first preset channel other than the Bluetooth headset. The Bluetooth headset is further configured to: when receiving the first operation of the user, perform at least one of the following actions: interrupting the second Bluetooth connection between the Bluetooth headset and the second electronic device, and sending a first message to the second electronic device, where the first message indicates that the Bluetooth headset is occupied. In the solutions of this application, a problem of information loss caused by a service conflict that occurs when a plurality of electronic devices connected to a Bluetooth device all initiate audio services can be avoided.

## Description

This application claims priority to Chinese Patent Application No. 202010950808.1, filed with the China National Intellectual Property Administration on September 10, 2020 and entitled "AUDIO CONTROL SYSTEM", and claims priority to Chinese Patent Application No. 202011292453.8, filed with the China National Intellectual Property Administration on November 18, 2020 and entitled "AUDIO CONTROL SYSTEM", which are incorporated herein by reference in their entireties.

### TECHNICAL FIELD

This application relates to the field of communication technologies, and more specifically, to an audio control method and an audio control system in the field of communication.

### BACKGROUND

Currently, some Bluetooth headsets may support simultaneous connection to a plurality of electronic devices (the following uses a mobile phone 1 and a mobile phone 2 as an example), where the two mobile phones may be connected or may not be connected. When the Bluetooth headset is connected to the two mobile phones, the Bluetooth headset is required to consider how to process service arbitration and preemption between the two mobile phones. Especially when the Bluetooth headset is connected to the two mobile phones but the two mobile phones are not connected, the Bluetooth headset is required for arbitration.

Currently, when both the mobile phone 1 and the mobile phone 2 initiate audio services, for example, the mobile phone 1 initiates an audio service 1, and the mobile phone 2 initiates an audio service 2, a service conflict may occur on the Bluetooth headset. In this case, if the Bluetooth headset currently processes the audio service 1 but does not process the audio service 2, an audio stream transmitted by the mobile phone 2 may be discarded on the Bluetooth headset. If the Bluetooth headset currently processes the audio service 2 but does not process the audio service 1, an audio stream transmitted by the mobile phone 1 may be discarded on the Bluetooth headset. It can be learned that when a plurality of electronic devices connected to a Bluetooth device all initiate audio services, information may be lost.

### SUMMARY

This application provides an audio control system, so as to solve a problem in a related technology of information loss caused by a service conflict that occurs when a plurality of electronic devices connected to a Bluetooth device all initiate audio services.

According to a first aspect, this application provides an audio control system. The system includes a Bluetooth headset, a first electronic device, and a second electronic device. The Bluetooth headset establishes a first Bluetooth connection to the first electronic device, and establishes a second Bluetooth connection to the second electronic device. The first Bluetooth connection and the second Bluetooth connection support media audio stream transmission and call audio stream transmission.

The first electronic device is configured to send a first media audio stream to the Bluetooth headset in response to a first operation of a user.

The Bluetooth headset is configured to receive the first media audio stream sent by the first electronic device, and output the first media audio stream.

The second electronic device is configured to output, in response to a second operation of the user, a second media audio stream through a first preset channel other than the Bluetooth headset.

The Bluetooth headset is further configured to: when receiving the first operation of the user, perform at least one of the following actions: interrupting the second Bluetooth connection between the Bluetooth headset and the second electronic device, and sending a first message to the second electronic device. The first message indicates that the Bluetooth headset is occupied.

According to the foregoing solution, in a case in which a Bluetooth headset establishes Bluetooth connections with two electronic devices, when the Bluetooth headset transmits a media audio stream of a media service with one of the electronic devices, if the other electronic device initiates a media service, for the media services initiated by both devices, the first initiated service first preempts the Bluetooth headset, and the media service initiated later does not preempt the Bluetooth headset. The Bluetooth connection between the Bluetooth headset and the electronic device that fails in preemption is interrupted, or a message is sent to the electronic device that fails in preemption to indicate the electronic device that fails in preemption to disable the Bluetooth headset. In this way, the electronic device that succeeds in preemption may output the media audio stream through the Bluetooth headset, and the electronic device that fails in preemption may output a media audio stream through the electronic device that fails in preemption or another Bluetooth audio device, so as to avoid service concurrency on a Bluetooth headset side. Therefore, a problem in a related technology of information loss caused by a service conflict that occurs when a plurality of electronic devices connected to a Bluetooth device all initiate audio services can be solved.

In a possible implementation, the second electronic device is further configured to:
switch an audio channel of the second electronic device from the Bluetooth headset to the first preset channel if it is detected that the second Bluetooth connection between the Bluetooth headset and the second electronic device is interrupted; or
receive the first message sent by the Bluetooth headset, and switch an audio channel of the second electronic device from the Bluetooth headset to the first preset channel based on the first message.

In a possible implementation, the second electronic device is further configured to display first prompt information when the audio channel of the second electronic device is switched from the Bluetooth headset to the first preset channel. The first prompt information is used for prompting that the audio channel is already switched from the Bluetooth headset to the first preset channel.

In a possible implementation, the Bluetooth headset is further configured to perform a second action if the first media audio stream sent by the first electronic device is not received within preset duration. The second action is any one of the following: when the second Bluetooth connection between the Bluetooth headset and the second electronic device is interrupted, reestablishing the second Bluetooth connection, and sending a second message to the second electronic device, or when the second Bluetooth connection is not interrupted, sending a second message to the second electronic device. The second message indicates that the Bluetooth headset is not occupied.

The second electronic device is further configured to receive the second message sent by the Bluetooth headset, and switch the audio channel of the second electronic device from the first preset channel to the Bluetooth headset based on the second message, or switch the audio channel of the second electronic device to the Bluetooth headset in response to a confirmation operation of the user for the second message. The confirmation operation is used for triggering switching of the audio channel of the second electronic device to the Bluetooth headset.

In a possible implementation, the first electronic device is further configured to display a first audio switching interface in response to the first operation. The first audio switching interface includes at least two audio channel options and channel usage status information. The at least two audio channel options include a Bluetooth headset option. The channel usage status information indicates that the Bluetooth headset is being used.

The second electronic device is further configured to display a second audio switching interface in response to the second operation. The second audio switching interface includes at least two audio channel options and channel usage status information. The at least two audio channel options include the Bluetooth headset option and a first preset channel option. The channel usage status information indicates that the first preset channel is being used.

In a possible implementation, the second electronic device is further configured to send the second media audio stream to the Bluetooth headset in response to a third operation of the user on the second audio switching interface. The third operation is used for triggering the second media audio stream to be output through the Bluetooth headset.

The Bluetooth headset is further configured to receive the second media audio stream sent by the second electronic device, output the second media audio stream, and send the first message to the first electronic device.

The first electronic device is further configured to receive the first message sent by the Bluetooth headset, and switch an audio channel of the first electronic device from the Bluetooth headset to a second preset channel based on the first message.

In a possible implementation, the first electronic device is further configured to receive the first message sent by the Bluetooth headset, determine a service type of a first media service that is currently processed, and perform a third action based on the service type of the first media service.

The first media audio stream is an audio stream of the first media service. The third action is any one of the following: stopping processing the first media service; continuing to process the first media service; continuing to process the first media service, and decreasing an audio volume of the first media service; and stopping processing the first media service, and displaying second prompt information. The second prompt information is used for prompting whether to switch the audio channel from the Bluetooth headset to the second preset channel.

In a possible implementation, the first Bluetooth connection includes an advanced audio distribution profile A2DP connection, and the second Bluetooth connection includes an A2DP connection.

In a possible implementation, the outputting a second media audio stream through a first preset channel other than the Bluetooth headset includes:
sending, by the second electronic device, the second media audio stream to another Bluetooth device, where the another Bluetooth device already establishes a third Bluetooth connection to the second electronic device; or
playing, by the second electronic device, the second media audio stream through a speaker or an earpiece.

According to a second aspect, this application also provides an audio control system. The system includes a Bluetooth headset, a first electronic device, and a second electronic device. The Bluetooth headset establishes a first Bluetooth connection to the first electronic device, and establishes a second Bluetooth connection to the second electronic device. The first Bluetooth connection and the second Bluetooth connection support media audio stream transmission and call audio stream transmission.

The first electronic device is configured to send a first media audio stream to the Bluetooth headset in response to a first operation of a user.

The Bluetooth headset is configured to receive the first media audio stream sent by the first electronic device, output the first media audio stream, and perform a first action. The first action is any one of the following: interrupting the second Bluetooth connection between the Bluetooth headset and the second electronic device, and sending a first message to the second electronic device. The first message indicates that the Bluetooth headset is occupied.

The second electronic device is configured to initiate a first call service, and send a first call audio stream of the first call service to the Bluetooth headset.

The Bluetooth headset is configured to receive the first call audio stream sent by the second electronic device, output the first call audio stream, and perform a second action. The second action is any one of the following: interrupting the first Bluetooth connection between the Bluetooth headset and the first electronic device, and sending the first message to the first electronic device.

According to the foregoing solution, in a case in which a Bluetooth headset establishes Bluetooth connections with two electronic devices, when the Bluetooth headset transmits a media audio stream of a media service with one of the electronic devices, if the other electronic device initiates a call service, because a priority of the call service is set higher than that of the media service, the call service may preempt the Bluetooth headset to output a call audio stream. The Bluetooth connection between the Bluetooth headset and the other electronic device is interrupted, or a message is sent to the other electronic device to indicate the other electronic device to disable the Bluetooth headset. In this way, the electronic device that succeeds in preemption may output the call audio stream through the Bluetooth headset, and the electronic device that fails in preemption may output the media audio stream through the electronic device that fails in preemption or another Bluetooth audio device, so as to avoid service concurrency on a Bluetooth headset side. Therefore, a problem in a related technology of information loss caused by a service conflict that occurs when a plurality of electronic devices connected to a Bluetooth device all initiate audio services can be solved.

In a possible implementation, the first electronic device is further configured to:
switch an audio channel of the first electronic device from the Bluetooth headset to a first preset channel if it is detected that the first Bluetooth connection between the Bluetooth headset and the first electronic device is interrupted; or
receive the first message sent by the Bluetooth headset, and switch an audio channel of the first electronic device from the Bluetooth headset to a first preset channel based on the first message.

In a possible implementation, the Bluetooth headset is further configured to: if it is detected that the first call audio stream is a preset service prompt tone, perform audio mixing on the first media audio stream and the first call audio stream, and output a mixed audio stream.

In a possible implementation, the first electronic device is further configured to receive the first message sent by the Bluetooth headset, determine a service type of a first media service that is currently processed, and perform a third action based on the service type of the first media service.

The first media audio stream is an audio stream of the first media service. The third action is any one of the following: stopping processing the first media service; continuing to process the first media service; continuing to process the first media service, and decreasing an audio volume of the first media service; and stopping processing the first media service, and displaying second prompt information. The second prompt information is used for prompting whether to switch the audio channel from the Bluetooth headset to the first preset channel.

In a possible implementation, the Bluetooth headset is further configured to perform a fourth action if a second call audio stream sent by the second electronic device is not received within preset duration. The fourth action is any one of the following: when the first Bluetooth connection between the Bluetooth headset and the first electronic device is interrupted, reestablishing the first Bluetooth connection, and sending a second message to the first electronic device, or when the first Bluetooth connection is not interrupted, sending a second message to the first electronic device. The second message indicates that the Bluetooth headset is not occupied.

The first electronic device is further configured to receive the second message sent by the Bluetooth headset, and switch the audio channel of the first electronic device from the first preset channel to the Bluetooth headset based on the second message, or switch the audio channel of the first electronic device to the Bluetooth headset in response to a confirmation operation of the user for the second message. The confirmation operation is used for triggering switching of the audio channel of the first electronic device to the Bluetooth headset.

In a possible implementation, the first electronic device is further configured to display a first audio switching interface in response to the first operation. The first audio switching interface includes at least two audio channel options and channel usage status information. The at least two audio channel options include a Bluetooth headset option.

The second electronic device is further configured to display a second audio switching interface when the first call service is initiated. The second audio switching interface includes at least two audio channel options and channel usage status information. The at least two audio channel options include the Bluetooth headset option. The channel usage status information indicates that the Bluetooth headset is being used.

In a possible implementation, the first electronic device is further configured to send the first media audio stream to the Bluetooth headset in response to a second operation of the user on the second audio switching interface. The second operation is used for triggering the first media audio stream to be output through the Bluetooth headset.

The Bluetooth headset is further configured to receive the first media audio stream sent by the first electronic device, output the first media audio stream, and send the first message to the second electronic device.

The second electronic device is further configured to receive the first message sent by the Bluetooth headset, and switch an audio channel of the second electronic device from the Bluetooth headset to a second preset channel based on the first message.

In a possible implementation, the first Bluetooth connection includes an advanced audio distribution profile A2DP connection and a hands-free profile HFP connection, and the second Bluetooth connection includes an A2DP connection and an HFP connection.

In a possible implementation, the Bluetooth headset is further configured to recognize whether a wearer of the Bluetooth headset is an owner of the Bluetooth headset, and send a recognition result to the first electronic device and/or the second electronic device.

The first electronic device and/or the second electronic device are/is further configured to: if the wearer of the Bluetooth headset is the owner, send a call audio stream to the Bluetooth headset when a call service is performed, or if the wearer of the Bluetooth headset is not the owner, skip sending a call audio stream to the Bluetooth headset when a call service is performed.

In a possible implementation, the Bluetooth headset is further configured to:
recognize whether a wearer of the Bluetooth headset is an owner of the Bluetooth headset; and
if the wearer of the Bluetooth headset is the owner, after receiving a call audio stream, output the call audio stream, or
if the wearer of the Bluetooth headset is not the owner, after receiving a call audio stream, skip outputting the call audio stream.

According to the foregoing solution, when a non-owner uses the Bluetooth headset and the first electronic device, and an owner uses the second electronic device, if the second electronic device has a call service (including an incoming call or an outgoing call), because the Bluetooth headset is not currently worn by the owner, the second electronic device does not use the Bluetooth headset to make a call. According to this solution, leakage of call privacy of the owner can be avoided to some extent, and user experience when the non-owner uses the Bluetooth headset can be improved.

In a possible implementation, recognition of whether a wearer of the Bluetooth headset is an owner of the Bluetooth headset by the Bluetooth headset includes: recognizing, by the Bluetooth headset based on a manner of ear canal recognition, bone voiceprint recognition, or voice recognition, whether the wearer of the Bluetooth headset is the owner of the Bluetooth headset.

According to a third aspect, this application also provides an audio control system. The system includes a Bluetooth headset, a first electronic device, and a second electronic device. The Bluetooth headset establishes a first Bluetooth connection to the first electronic device, and establishes a second Bluetooth connection to the second electronic device. The first Bluetooth connection and the second Bluetooth connection support media audio stream transmission and call audio stream transmission.

The first electronic device is configured to initiate a first call service, and send a first call audio stream of the first call service to the Bluetooth headset.

The Bluetooth headset is configured to receive the first call audio stream sent by the first electronic device, output the first call audio stream, and perform a first action. The first action is any one of the following: interrupting the second Bluetooth connection between the Bluetooth headset and the second electronic device, and sending a first message to the second electronic device. The first message indicates that the Bluetooth headset is occupied.

The second electronic device is configured to initiate the first call service, and send a second call audio stream of the first call service to the Bluetooth headset.

The Bluetooth headset is configured to receive the second call audio stream sent by the second electronic device, output the second call audio stream, and perform a second action. The second action is any one of the following: interrupting the first Bluetooth connection between the Bluetooth headset and the first electronic device, and sending the first message to the first electronic device.

According to the foregoing solution, in a case in which a Bluetooth headset establishes Bluetooth connections with two electronic devices, when the Bluetooth headset transmits a call audio stream of a call service with one of the electronic devices, if the other electronic device initiates a call service later, for the call services initiated by both devices, the latter path of call service may preempt the Bluetooth headset prior to the previous path of call service. The Bluetooth connection between the Bluetooth headset and the electronic device that fails in preemption is interrupted, or a message is sent to the electronic device that fails in preemption to indicate the electronic device that fails in preemption to disable the Bluetooth headset. In this way, the electronic device that succeeds in preemption may output a call audio stream through the Bluetooth headset, and the electronic device that fails in preemption may output the call audio stream through the electronic device that fails in preemption or another Bluetooth audio device, so as to avoid service concurrency on a Bluetooth headset side. Therefore, a problem in a related technology of information loss caused by a service conflict that occurs when a plurality of electronic devices connected to a Bluetooth device all initiate audio services can be solved.

In a possible implementation, the first electronic device is further configured to:
switch an audio channel of the first electronic device from the Bluetooth headset to a first preset channel if it is detected that the first Bluetooth connection between the Bluetooth headset and the first electronic device is interrupted; or
receive the first message sent by the Bluetooth headset, and switch an audio channel of the first electronic device from the Bluetooth headset to a first preset channel based on the first message.

In a possible implementation, the first electronic device is further configured to receive the first message sent by the Bluetooth headset, determine a service type of the first call service that is currently processed, and perform a third action based on the service type of the first call service.

The first call audio stream is an audio stream of the first call service. The third action is any one of the following: switching the first call service to call hold; outputting the first call audio stream through the first preset channel; outputting the first call audio stream through the first preset channel, and decreasing a volume of the first call audio stream; and switching the first call service to call hold, and displaying prompt information. The prompt information is used for prompting whether to switch the audio channel from the Bluetooth headset to the first preset channel.

In a possible implementation, the Bluetooth headset is further configured to perform a fourth action if the first call audio stream sent by the second electronic device is not received within preset duration. The fourth action is any one of the following: when the first Bluetooth connection between the Bluetooth headset and the first electronic device is interrupted, reestablishing the first Bluetooth connection, and sending a second message to the first electronic device, or when the first Bluetooth connection is not interrupted, sending a second message to the first electronic device. The second message indicates that the Bluetooth headset is not occupied.

The first electronic device is further configured to receive the second message sent by the Bluetooth headset, and switch the audio channel of the first electronic device from the first preset channel to the Bluetooth headset based on the second message, or switch the audio channel of the first electronic device to the Bluetooth headset in response to a confirmation operation of the user for the second message. The confirmation operation is used for triggering switching of the audio channel of the first electronic device to the Bluetooth headset.

In a possible implementation, the first electronic device is further configured to display a first audio switching interface when the first call service is initiated. The first audio switching interface includes at least two audio channel options and channel usage status information. The at least two audio channel options include a Bluetooth headset option.

The second electronic device is further configured to display a second audio switching interface when the second call service is initiated. The second audio switching interface includes at least two audio channel options and channel usage status information. The at least two audio channel options include the Bluetooth headset option. The channel usage status information indicates that the Bluetooth headset is being used.

In a possible implementation, the first electronic device is further configured to send the first call audio stream to the Bluetooth headset in response to a first operation of the user on the second audio switching interface. The first operation is used for triggering the first call audio stream to be output through the Bluetooth headset.

The Bluetooth headset is further configured to receive the first call audio stream sent by the first electronic device, output the first call audio stream, and send the first message to the second electronic device.

The second electronic device is further configured to receive the first message sent by the Bluetooth headset, and switch an audio channel of the second electronic device from the Bluetooth headset to a second preset channel based on the first message.

In a possible implementation, the first Bluetooth connection includes an advanced audio distribution profile A2DP connection and a hands-free profile HFP connection, and the second Bluetooth connection includes an A2DP connection and an HFP connection.

In a possible implementation, the Bluetooth headset is further configured to recognize whether a wearer of the Bluetooth headset is an owner of the Bluetooth headset, and send a recognition result to the first electronic device and/or the second electronic device.

The first electronic device and/or the second electronic device are/is further configured to: if the wearer of the Bluetooth headset is the owner, send a call audio stream to the Bluetooth headset when a call service is performed, or if the wearer of the Bluetooth headset is not the owner, skip sending a call audio stream to the Bluetooth headset when a call service is performed.

In a possible implementation, the Bluetooth headset is further configured to:
recognize whether a wearer of the Bluetooth headset is an owner of the Bluetooth headset; and
if the wearer of the Bluetooth headset is the owner, after receiving a call audio stream, output the call audio stream, or
if the wearer of the Bluetooth headset is not the owner, after receiving a call audio stream, skip outputting the call audio stream.

According to the foregoing solution, when a non-owner uses the Bluetooth headset and the first electronic device, and an owner uses the second electronic device, if the second electronic device has a call service (including an incoming call or an outgoing call), because the Bluetooth headset is not currently worn by the owner, the second electronic device does not use the Bluetooth headset to make a call. According to this solution, leakage of call privacy of the owner can be avoided to some extent, and user experience when the non-owner uses the Bluetooth headset can be improved.

In a possible implementation, recognition of whether a wearer of the Bluetooth headset is an owner of the Bluetooth headset by the Bluetooth headset includes: recognizing, by the Bluetooth headset based on a manner of ear canal recognition, bone voiceprint recognition, or voice recognition, whether the wearer of the Bluetooth headset is the owner of the Bluetooth headset.

For different service concurrency scenarios, different preemption policies may be used in embodiments of this application: For a service concurrency scenario in which two devices both initiate media services, a preemption policy of first using a headset for the first initiated service and processing, on a local side, the service initiated later is used. For a service concurrency scenario in which two devices separately initiate a media service and a call service, a preemption policy of first using a headset for the high-priority service is used. For a service concurrency scenario in which both devices initiate call services, a preemption policy of first using a headset for a latter path of incoming call and holding a previous path of incoming call on a local side is used. Each scenario complies with a headset preemption policy in which a priority of a manual operation of a user is highest. In the solutions of this application, a problem of information loss caused by a service conflict that occurs when a plurality of electronic devices connected to a Bluetooth device all initiate audio services can be avoided.

### BRIEF DESCRIPTION OF DRAWINGS

FIG. 1 is a schematic diagram depicting an architecture of a system according to an embodiment of this application;
FIG. 2 is a schematic diagram depicting a structure of a wireless device according to an embodiment of this application;
FIG. 3(a) to FIG. 3(c) are schematic diagrams of interaction between a Bluetooth headset and two electronic devices in an audio control system to which an audio control method is applied according to an embodiment of this application;
FIG. 4 is a schematic flowchart 1 of an audio control method according to an embodiment of this application;
FIG. 5A is a schematic diagram of interaction between a Bluetooth headset and two electronic devices in an audio control system to which an audio control method is applied according to an embodiment of this application;
FIG. 5B is another schematic diagram of interaction between a Bluetooth headset and two electronic devices in an audio control system to which an audio control method is applied according to an embodiment of this application;
FIG. 5C is still another schematic diagram of interaction between a Bluetooth headset and two electronic devices in an audio control system to which an audio control method is applied according to an embodiment of this application;
FIG. 5D is yet another schematic diagram of interaction between a Bluetooth headset and two electronic devices in an audio control system to which an audio control method is applied according to an embodiment of this application;
FIG. 5E is still yet another schematic diagram of interaction between a Bluetooth headset and two electronic devices in an audio control system to which an audio control method is applied according to an embodiment of this application;
FIG. 6A and FIG. 6B are a schematic flowchart 2 of an audio control method according to an embodiment of this application;
FIG. 7A is a schematic diagram of interaction between a Bluetooth headset and two electronic devices in an audio control system to which an audio control method is applied according to an embodiment of this application;
FIG. 7B is another schematic diagram of interaction between a Bluetooth headset and two electronic devices in an audio control system to which an audio control method is applied according to an embodiment of this application;
FIG. 7C is still another schematic diagram of interaction between a Bluetooth headset and two electronic devices in an audio control system to which an audio control method is applied according to an embodiment of this application;
FIG. 7D is yet another schematic diagram of interaction between a Bluetooth headset and two electronic devices in an audio control system to which an audio control method is applied according to an embodiment of this application;
FIG. 8A and FIG. 8B are a schematic flowchart 3 of an audio control method according to an embodiment of this application;
FIG. 9A is a schematic diagram of interaction between a Bluetooth headset and two electronic devices in an audio control system to which an audio control method is applied according to an embodiment of this application;
FIG. 9B is another schematic diagram of interaction between a Bluetooth headset and two electronic devices in an audio control system to which an audio control method is applied according to an embodiment of this application;
FIG. 9C is still another schematic diagram of interaction between a Bluetooth headset and two electronic devices in an audio control system to which an audio control method is applied according to an embodiment of this application;
FIG. 9D is yet another schematic diagram of interaction between a Bluetooth headset and two electronic devices in an audio control system to which an audio control method is applied according to an embodiment of this application;
FIG. 10A and FIG. 10B are a schematic flowchart 4 of an audio control method according to an embodiment of this application;
FIG. 11A is a schematic diagram of interaction between a Bluetooth headset and two electronic devices in an audio control system to which an audio control method is applied according to an embodiment of this application;
FIG. 11B is another schematic diagram of interaction between a Bluetooth headset and two electronic devices in an audio control system to which an audio control method is applied according to an embodiment of this application;
FIG. 11C is still another schematic diagram of interaction between a Bluetooth headset and two electronic devices in an audio control system to which an audio control method is applied according to an embodiment of this application;
FIG. 11D is yet another schematic diagram of interaction between a Bluetooth headset and two electronic devices in an audio control system to which an audio control method is applied according to an embodiment of this application;
FIG. 11E is still yet another schematic diagram of interaction between a Bluetooth headset and two electronic devices in an audio control system to which an audio control method is applied according to an embodiment of this application;
FIG. 12A and FIG. 12B are a schematic flowchart 5 of an audio control method according to an embodiment of this application;
FIG. 13A is a schematic diagram of interaction between a Bluetooth headset and two electronic devices in an audio control system to which an audio control method is applied according to an embodiment of this application;
FIG. 13B is another schematic diagram of interaction between a Bluetooth headset and two electronic devices in an audio control system to which an audio control method is applied according to an embodiment of this application;
FIG. 13C is still another schematic diagram of interaction between a Bluetooth headset and two electronic devices in an audio control system to which an audio control method is applied according to an embodiment of this application;
FIG. 13D is yet another schematic diagram of interaction between a Bluetooth headset and two electronic devices in an audio control system to which an audio control method is applied according to an embodiment of this application;
FIG. 14A and FIG. 14B are a schematic flowchart 6 of an audio control method according to an embodiment of this application;
FIG. 15A is a schematic diagram of interaction between a Bluetooth headset and two electronic devices in an audio control system to which an audio control method is applied according to an embodiment of this application;
FIG. 15B is another schematic diagram of interaction between a Bluetooth headset and two electronic devices in an audio control system to which an audio control method is applied according to an embodiment of this application;
FIG. 15C is still another schematic diagram of interaction between a Bluetooth headset and two electronic devices in an audio control system to which an audio control method is applied according to an embodiment of this application;
FIG. 15D is yet another schematic diagram of interaction between a Bluetooth headset and two electronic devices in an audio control system to which an audio control method is applied according to an embodiment of this application;
FIG. 16A and FIG. 16B are a schematic flowchart 7 of an audio control method according to an embodiment of this application;
FIG. 17A is a schematic diagram of interaction between a Bluetooth headset and two electronic devices in an audio control system to which an audio control method is applied according to an embodiment of this application;
FIG. 17B is another schematic diagram of interaction between a Bluetooth headset and two electronic devices in an audio control system to which an audio control method is applied according to an embodiment of this application;
FIG. 17C is still another schematic diagram of interaction between a Bluetooth headset and two electronic devices in an audio control system to which an audio control method is applied according to an embodiment of this application;
FIG. 17D is yet another schematic diagram of interaction between a Bluetooth headset and two electronic devices in an audio control system to which an audio control method is applied according to an embodiment of this application;
FIG. 18A and FIG. 18B are a schematic flowchart 8 of an audio control method according to an embodiment of this application;
FIG. 19A is a schematic diagram of interaction between a Bluetooth headset and two electronic devices in an audio control system to which an audio control method is applied according to an embodiment of this application;
FIG. 19B is another schematic diagram of interaction between a Bluetooth headset and two electronic devices in an audio control system to which an audio control method is applied according to an embodiment of this application;
FIG. 19C is still another schematic diagram of interaction between a Bluetooth headset and two electronic devices in an audio control system to which an audio control method is applied according to an embodiment of this application;
FIG. 20 is a schematic flowchart 9 of an audio control method according to an embodiment of this application;
FIG. 21 is a schematic flowchart 10 of an audio control method according to an embodiment of this application;
FIG. 22 is a schematic diagram of an application scenario of a Bluetooth headset according to an embodiment of this application;
FIG. 23(a) to FIG. 23(e) are schematic diagrams of a setting process of a Bluetooth headset according to an embodiment of this application;
FIG. 24(a) to FIG. 24(c) are schematic diagrams of a setting process of a Bluetooth headset according to another embodiment of this application;
FIG. 25 is a flowchart of a call method according to an embodiment of this application;
FIG. 26 is a flowchart of a call method according to another embodiment of this application;
FIG. 27 is a schematic diagram of an application scenario of a Bluetooth headset according to another embodiment of this application;
FIG. 28 is a flowchart of a call method according to still another embodiment of this application;
FIG. 29 is a flowchart of a call method according to yet another embodiment of this application;
FIG. 30 is a schematic diagram depicting a structure of an audio control system according to an embodiment of this application; and
FIG. 31 is a schematic diagram depicting a structure of an electronic device according to an embodiment of this application.

### DESCRIPTION OF EMBODIMENTS

The following describes the technical solutions in embodiments of this application with reference to the accompanying drawings in embodiments of this application.

In descriptions of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in descriptions of this application, unless otherwise specified, "a plurality of" means two or more than two. In addition, to clearly describe the technical solutions in embodiments of this application, the terms "first", "second", and the like in embodiments of this application are intended to distinguish between different objects, or are intended to distinguish between different processing of a same object, but are not intended to describe a particular order of the objects.

Reference to "an embodiment", "some embodiments", or the like described in this specification of this application indicates that one or more embodiments of this application include a specific feature, structure, or characteristic described with reference to those embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following first explains and describes some nouns or terms involved in the claims and the specification of this application.

Bluetooth baseband technology: It supports two connection types: an asynchronous connectionless (asynchronous connectionless, ACL) type and a synchronous connection oriented (synchronous connection oriented link, SCO) type, which are referred to as an ACL connection and an SCO connection respectively.
(1) The ACL connection: also referred to as an ACL link, it may send data packets in a directional manner, and supports both symmetric and asymmetric connections (one-to-one or one-to-many).
(2) The SCO connection: It is also referred to as an SCO link. The SCO connection is a symmetric connection, and uses reserved timeslots to transmit data packets. Both voice and data may be transmitted through SCO data packets. SCO data packets are mainly used to transmit communication data with a high requirement on time. In addition, an extended SCO (extended SCO, eSCO) link may also be used to transmit communication data with a high requirement on time.

The ACL link is mainly used for packet data transmission (for example, a media service). The SCO link or the eSCO link is mainly used for synchronous voice transmission (for example, a call service). It should be noted that, in the solution provided in embodiments of this application, whether the SCO link or the eSCO link is not limited. For ease of description, the following uses the SCO link as an example to describe this solution.

To implement interconnection between different devices on different platforms, corresponding specifications are formulated for various possible general application scenarios in terms of Bluetooth audio transmission protocol, for example, an advanced audio distribution profile (advanced audio distribution profile, A2DP) and a hands-free profile (hands-free profile, HFP).

(3) The A2DP specification: It supports stereo audio stream transmission. The A2DP specification is a high-quality audio protocol running on the ACL link. The A2DP specification defines the protocol and a process for transmitting high-quality audio information such as mono or stereo audio information over the ACL link. An A2DP specification-based connection between devices may be referred to as an A2DP service specification connection, which is referred to as an A2DP connection for short.

For example, if the A2DP specification is activated between a Bluetooth headset and an electronic device, that is, the Bluetooth headset establishes an A2DP connection to the electronic device, the electronic device may transmit high-quality audio information to the Bluetooth headset based on the A2DP specification through an ACL link.

(4) The HFP specification: It represents a hands-free function, and mainly defines implementation of some functions related to call answering/making. An HFP specification-based connection between devices may be referred to as an HFP service specification connection, which is referred to as an HFP connection for short.

For example, if the HFP specification is activated between the Bluetooth headset and the electronic device, that is, the Bluetooth headset establishes an HFP connection to the electronic device, the electronic device may transmit call audio information to the Bluetooth headset based on the HFP specification through an SCO link, and the Bluetooth headset may control a call function of the electronic device, for example, functions such as answering, hanging up, rejecting, and voice dialing.

It should be noted that the ACL connection and the SCO connection are connections at a physical layer of a Bluetooth audio output protocol, and the A2DP connection and the HFP connection are connections at an application layer of the Bluetooth audio output protocol.

Currently, some Bluetooth headsets may support simultaneous connection to two electronic devices, where the two electronic devices may be connected or may not be connected. When the Bluetooth headset is connected to the two electronic devices, how to process service arbitration and preemption between the two electronic devices needs to be considered. Especially when the Bluetooth headset is connected to the two electronic devices but the two electronic devices are not connected, the Bluetooth headset is required for arbitration. In addition, when both electronic devices initiate audio services (that is, service concurrency), a service conflict may occur on a Bluetooth headset side, and consequently, audio streams cannot be output normally. The following uses an example in which the two electronic devices are a mobile phone 1 and a mobile phone 2 respectively to describe a technical solution used in a related technology.

In an existing solution, when a Bluetooth headset is connected to two mobile phones, the Bluetooth headset establishes only one type of service specification connection (for example, an A2DP connection or an HFP connection) with one mobile phone. For example, the Bluetooth headset establishes an A2DP connection to the mobile phone 1, and establishes an HFP connection to the mobile phone 2. The two mobile phones distinguish different services. That is, in this solution, each mobile phone can only perform one type of service. For example, if the A2DP connection is established between the mobile phone 1 and the Bluetooth headset, audio services such as music and a prompt tone on the mobile phone 2 cannot be heard on the Bluetooth headset. Alternatively, when the HFP connection is established between the Bluetooth headset and the mobile phone 2, calls on the mobile phone 1 cannot be heard on the Bluetooth headset.

The foregoing solution has the following problems: (1) If the two mobile phones need to switch services, a user needs to manually switch the A2DP connection or the HFP connection in Bluetooth Settings of the electronic device. (2) When one mobile phone keeps an HFP connection and an A2DP connection to the Bluetooth headset, the other mobile phone cannot be actively connected to the Bluetooth headset.

In another existing solution, when the Bluetooth headset and the mobile phone 1 are in a media audio service, and the mobile phone 2 initiates a media audio service, the Bluetooth headset first accepts the media audio service, and immediately initiates a pause of the media audio service of the mobile phone 2. If the media audio service (for example, a game service or a video service) does not support pauses, a media audio stream of the mobile phone 2 is discarded by the Bluetooth headset, that is, the audio stream cannot be output normally.

When the Bluetooth headset and the mobile phone 1 are in a media audio service, if the mobile phone 2 receives a call audio service, the media audio service of the mobile phone 1 is paused. If the media audio service does not support pauses, a media audio stream of the mobile phone 1 is discarded by the headset, that is, the audio stream cannot be output normally. After the mobile phone 2 rejects or answers the call, the Bluetooth headset resumes the media audio service with the mobile phone 1.

When the Bluetooth headset and the mobile phone 1 are in a call audio service, the mobile phone 2 initiates a call audio service. If a call voice of the mobile phone 2 is answered on the Bluetooth headset, a call voice of the mobile phone 1 is ended. If the call voice is answered on the mobile phone 2, the call voice of the mobile phone 2 continues to be transmitted to the Bluetooth headset, but cannot be heard, and only the call voice of the mobile phone 1 is heard on the Bluetooth headset.

The foregoing solution has the following problems: If an audio service is a video service, for most applications, the headset cannot initiate a pause, and sounds may continue to be output to the Bluetooth headset. As a result, concurrency of services of the two mobile phones occurs on the Bluetooth headset, and stability is affected. In addition, the sounds of the mobile phone can be output from the mobile phone only after a Bluetooth connection is interrupted.

As described above, when the mobile phone 1 and the Bluetooth headset are in the voice call service, if the mobile phone 2 receives the voice call service, and answers the call on the mobile phone, voices also cannot be heard from the mobile phone. As a result, the call of the mobile phone 2 cannot be answered, and the voices can be heard only after manual switching to the mobile phone.

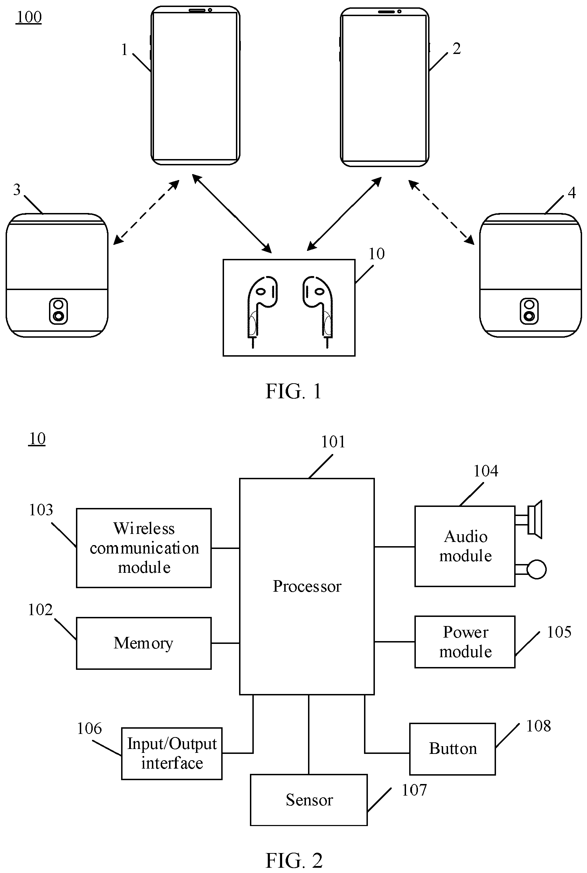

FIG. 1 is a schematic diagram depicting an architecture of a communication system according to each exemplary embodiment of this application. As shown in FIG. 1, a communication system 100 may include a wireless device 10 and at least two electronic devices (for example, 1, 2, 3, and 4). The wireless device 10 may simultaneously keep wireless connections to the at least two electronic devices through a wireless communication technology. For example, the wireless communication technology may be Bluetooth (Bluetooth, BT), or may be conventional Bluetooth, Bluetooth low energy BLE, or a general 2.4G/5G-band wireless communication technology.

The wireless device 10 may be a Bluetooth headset shown in FIG. 1, or certainly may be a wireless speaker, a wireless band, a wireless vehicle-mounted device, wireless smart glasses, a wireless watch, an augmented reality (augmented reality, AR)/virtual reality (virtual reality, VR) device, or the like. The electronic device may be a device such as a mobile phone, a media player (for example, an MP3 or an MP4), a tablet computer, a notebook computer, an ultra-mobile personal computer (ultra-mobile personal computer, UMPC), a personal digital assistant (personal digital assistant, PDA), a television set, or a smartwatch. Device types of the wireless device 10 and the at least two electronic devices are not specifically limited in this embodiment of this application.

In this embodiment of this application, an example in which the wireless device is a Bluetooth headset is used for description. The Bluetooth headset may be of a plurality of types, for example, may be an earbud type, in-ear type, head-mounted type, earmuff type, or supra-aural type Bluetooth headset. The Bluetooth headset may include a first part and a second part that are respectively worn on the left ear and the right ear of a user. The first part and the second part may be connected through a connection wire, for example, a neckband Bluetooth headset, or may be two independent parts, for example, a true wireless stereo (true wireless stereo, TWS) headset.

For example, FIG. 2 is a schematic diagram depicting a structure of the Bluetooth headset 10. The Bluetooth headset 10 may include at least one processor 101, at least one memory 102, a wireless communication module 103, an audio module 104, a power module 105, an input/output interface 106, and the like. The processor may include one or more interfaces, configured for connection to another component of the Bluetooth headset 10. The Bluetooth headset 10 is housed by a headset box. The following specifically describes the components of the Bluetooth headset 10 with reference to FIG. 2.

The memory 102 may be configured to store program code, for example, program code for performing physical connection between the Bluetooth headset 10 and a plurality of electronic devices and service specification connection between the Bluetooth headset 10 and the electronic devices, processing audio services (for example, playing music, or answering/making a call) of the electronic devices, charging the Bluetooth headset 10, or performing wireless pairing connection between the Bluetooth headset 10 and another electronic device. The memory 102 may be further configured to store other information, for example, priorities of the electronic devices.

The processor 101 may be configured to execute the foregoing application code, and invoke related modules to implement functions of the Bluetooth headset 10 in this embodiment of this application. For example, functions such as physical connection and service specification connection between the Bluetooth headset 10 and the plurality of electronic devices, audio playback, call answering/making, and switching of service specification connections with different electronic devices based on the priorities of the devices are implemented. For another example, a service preemption function is supported. For example, when the Bluetooth headset establishes a service specification connection to the electronic device 1, and is processing an audio service 1 (for example, playing music) of the electronic device 1, if the Bluetooth headset receives connection request information of the electronic device 2, the Bluetooth headset may process an audio service 2 (for example, answering/making a call) of the electronic device 2 based on a service specification connection to the electronic device 2, so as to implement the service preemption function of the audio service 2 of the electronic device 2.

The processor 101 may include one or more processing units. Different processing units may be independent components, or may be integrated into one or more processors 101. The processor 101 may be specifically an integrated control chip, or may include a circuit including various active components and/or passive components, and the circuit is configured to perform the functions that belong to the processor 101 and that are described in this embodiment of this application.

The wireless communication module 103 may be configured to support data exchange implemented between the Bluetooth headset 10 and another electronic device or the headset box through the wireless communication technology. The wireless communication technology is, for example, BT, WLAN (for example, Wi-Fi), ZigBee, FM, NFC, IR, or a general 2.4G/5G wireless communication technology.

In some embodiments, the wireless communication module 103 may be a Bluetooth chip. The Bluetooth headset 10 may be paired and establish a wireless connection to a Bluetooth chip of another electronic device through the Bluetooth chip, so as to implement wireless communication between the Bluetooth headset 10 and the another electronic device and service processing through the wireless connection. Generally, the Bluetooth chip may support basic rate (basic rate, BR)/enhanced data rate (enhanced data rate, EDR) Bluetooth and BLE, for example, may receive/send page (page) information and receive/send a BLE broadcast message.

In addition, the wireless communication module 103 may further include an antenna. The wireless communication module 103 receives an electromagnetic wave through the antenna, performs frequency modulation and filtering processing on an electromagnetic wave signal, and sends a processed signal to the processor 101. The wireless communication module 103 may further receive a to-be-sent signal from the processor 101, perform frequency modulation and amplification on the to-be-sent signal, and convert the signal into an electromagnetic wave for radiation through the antenna.

The audio module 104 may be configured to manage audio data, and implement input and output of audio streams through the Bluetooth headset 10. For example, the audio module 104 may obtain an audio stream from the wireless communication module 103, or transmit an audio stream to the wireless communication module 103, to implement, through the Bluetooth headset, functions such as answering or making a call, playing music, enabling/disabling a voice assistant of the electronic device connected to the headset, and receiving/sending voice data of the user. The audio module 104 may include a speaker (or referred to as an earpiece or a receiver) component configured to output an audio stream, a microphone (or referred to as a mike), a microphone radio circuit cooperating with the microphone, and the like. The speaker may be configured to convert an audio electrical signal into a sound signal and play the sound signal. The microphone may be configured to convert a sound signal into an audio electrical signal.

The power module 105 may be configured to provide system power of the Bluetooth headset 10 to supply power to each module of the Bluetooth headset 10, support the Bluetooth headset 10 in receiving a charging input, and the like. The power module 105 may include a power management unit (power management unit, PMU) and a battery. The power management unit may receive an external charging input, perform voltage transformation on an electrical signal input from a charging path, and provide a transformed electrical signal to the battery for charging, and may further perform voltage transformation on an electrical signal provided by the battery, and provide a transformed electrical signal to other modules such as the audio module 104 and the wireless communication module 103, so as to prevent battery overcharge, overdischarge, a short circuit, overcurrent, or the like. In some embodiments, the power module 105 may further include a wireless charging coil, configured to wirelessly charge the Bluetooth headset 10. In addition, the power management unit may be further configured to monitor parameters such as a battery capacity, a battery cycle count, and a battery health status (electric leakage or impedance).

The plurality of input/output interfaces 106 may be configured to provide a wired connection for charging or communication between the Bluetooth headset 10 and the headset box. In some embodiments, the input/output interface may be a USB port. In some other embodiments, the input/output interface 106 may be an electrical headset connector. When the Bluetooth headset 10 is placed in the headset box, the Bluetooth headset 10 may establish an electrical connection to an electrical connector in the headset box through the electrical headset connector, so as to charge the battery in the Bluetooth headset 10. In some other embodiments, after the electrical connection is established, the Bluetooth headset 10 may further perform data communication with the headset box, for example, may receive a pairing instruction from the headset box.

In addition, the Bluetooth headset 10 may further include a sensor 107. For example, the sensor 107 may be a distance sensor or an optical proximity sensor, and may be configured to determine whether the Bluetooth headset 10 is worn by the user. For example, the Bluetooth headset 10 may detect, by using the distance sensor, whether there is an object near the Bluetooth headset 10, to determine whether the Bluetooth headset 10 is worn by the user. When determining that the Bluetooth headset 10 is worn, the Bluetooth headset 10 may turn on the speaker.

For another example, the sensor 107 may further include a bone conduction sensor, to form a bone conduction headset. By using the bone conduction sensor, the Bluetooth headset 10 may obtain a vibration signal of a vibrating bone block of a vocal part of a human body, and obtain a voice signal through parsing to implement a voice function, so as to receive a voice instruction of the user. The Bluetooth headset 10 may further perform voice authentication based on a user voice signal obtained by the bone conduction headset, to attempt to authenticate a user identity in a service scenario such as a payment transaction.

For another example, the sensor 107 may further include: a touch sensor, configured to detect a touch operation of the user; a fingerprint sensor, configured to detect a user fingerprint, recognize a user identity, and the like; an ambient optical sensor, configured to adaptively adjust some parameters (such as a volume) based on perceived luminance of ambient light; and another possible sensor.

In some embodiments, the touch sensor may detect the touch operation of the user such as single-tap, double-tap, multi-tap, touch and hold, and heavy press, and may further perform fingerprint recognition for the user, to attempt to authenticate the user identity in a service scenario such as a payment transaction scenario.

It may be understood that the structure shown in this embodiment of this application does not constitute a specific limitation on the Bluetooth headset 10. The Bluetooth headset may have more or fewer components than those shown in FIG. 2, or combine two or more components, or have different component configurations. For example, an outer surface of the Bluetooth headset 10 may further include components such as a button 108, an indicator light (which may indicate a battery level, an incoming/outgoing call, a pairing mode, and another status), a display (which may prompt the user related information), and a dust filter (which may be used together with the receiver). The button 108 may be a physical button, a touch button (used in cooperation with the touch sensor), or the like, and is configured to trigger operations such as power-on, power-off, pause, play, record, start pairing, and reset.

The various components shown in FIG. 2 may be implemented in hardware, software, or a combination of hardware and software, including one or more signal processing or application-specific integrated circuits. For example, when the Bluetooth headset is a TWS headset, the Bluetooth headset 10 may include a headset body 01 (also referred to as a left earbud or the first part) worn on the left ear of the user and a headset body 02 (also referred to as a right earbud or the second part) worn on the right ear. The headset body may include a housing and an inner part. The inner part is disposed in a cavity formed by the housing. The inner part may include components in modules such as the audio module, the power module, and the wireless communication module.

When the Bluetooth headset is a TWS headset, the user may use the TWS headset in a binaural mode or an uniaural mode. In the uniaural mode, the user wears the left earbud or the right earbud to perform an audio service such as listening to music or answering/making a call. In the binaural mode, the user may wear the two earbuds to listen to music or perform another audio service. In the binaural mode, the two earbuds include a primary earbud and a secondary earbud. In addition, in a process of using the TWS headset, the primary and secondary roles of the two earbuds may be further switched based on different conditions. For example, the earbud with a relatively high battery level may be switched to the primary earbud, and the earbud with a relatively low battery level may be switched to the secondary earbud.

In some embodiments, the Bluetooth headset is usually housed by the headset box. One or more magnets may be disposed inside the headset box, so as to attract the headset body into the cavity in the headset box. The headset box may include a battery and a plurality of input/output interfaces. In some embodiments, the input/output interface may be a box electrical connector. After a pair of box electrical connectors in the headset box establish electrical connections to two electrical headset connectors in the headset body, the headset box may charge the battery in the headset body by using the battery of the headset box.

In some other embodiments, at least one touch control may be disposed on the headset box, and may be configured to trigger a function such as pairing and resetting the Bluetooth headset or charging the Bluetooth headset. The headset box may further be provided with one or more battery level indicators, to prompt the user a power level of the battery in the headset box and a power level of the battery in each headset body in the headset box.

In some other embodiments, the headset box may further include components such as a processor and a memory. The memory may be configured to store application code, and the processor of the headset box controls the application code to be executed, to implement functions of the headset box. For example, the processor of the headset box executes the application code stored in the memory to charge the Bluetooth headset, and the like after detecting that the Bluetooth headset is put in the headset box and a cover of the headset box is closed.

In addition, a charging interface may be further disposed on the headset box, to charge the battery of the headset box. The headset box may further include a wireless charging coil, configured to wirelessly charge the battery of the headset box. It may be understood that the headset box may further include other components. Details are not described herein.

It may be understood that the components shown in FIG. 2 do not constitute a specific limitation on the Bluetooth headset 10. The Bluetooth headset 10 may further include more or fewer components than those shown in the figure, or combine some components, or split some components, or have different component arrangements.

It should be noted that the electronic device in this embodiment of this application may be a mobile terminal, or may be a non-mobile terminal. For example, the mobile terminal may be a mobile phone, a tablet computer, a notebook computer, a palmtop computer, a vehicle terminal, a wearable device, an ultra-mobile personal computer (ultra-mobile personal computer, UMPC), a netbook, a personal digital assistant (personal digital assistant, PDA), or the like. The non-mobile terminal may be a personal computer (personal computer, PC), a television (television, TV), a teller machine, a self-service machine, or the like. This is not specifically limited in this embodiment of this application.

Based on the foregoing application scenario, system architecture, and hardware configuration, an embodiment of this application provides an audio control system and an audio control method. The audio control system includes a Bluetooth headset, a first electronic device (referred to as an electronic device 1), and a second electronic device (referred to as an electronic device 2). The Bluetooth headset establishes a first Bluetooth connection to the first electronic device, and establishes a second Bluetooth connection to the second electronic device. The first Bluetooth connection and the second Bluetooth connection support media audio stream transmission and call audio stream transmission.

It should be noted that an execution body of the audio control method provided in this embodiment of this application may be the Bluetooth headset, or may be a function module and/or a function entity capable of implementing the method in the Bluetooth headset. This may be specifically determined based on an actual use requirement, and is not limited in this embodiment of this application. The following describes the audio control method provided in this embodiment of this application by using an example in which the execution body is the Bluetooth headset.

The following describes an example of the audio control method provided in this embodiment of this application with reference to accompanying drawings.

In this embodiment of this application, an audio service may include a plurality of types. For example, the audio service may include a media service, a call service (also referred to as a voice call service or a voice service), and the like. The media service may include services such as playing music, recording, sound in a video file, background music in a game, an incoming call prompt tone, an information prompt tone, a voice message, navigation voice broadcast, intelligent broadcast, an alarm clock, and a keypad tone, and certainly may further include any other possible service. The call service may include: in a scenario such as a telephone call (including an incoming call and an outgoing call), a video call, an audio call, a voice message, a game, or a voice assistant, playing voice data of a peer end for a user, or collecting voice data of the user and sending the voice data to the peer end. It should be noted that, in the following, an audio stream corresponding to a media service is referred to as a media audio stream, and an audio stream corresponding to a call service is referred to as a call audio stream.

When the electronic device 1 initiates an audio service, if an audio service connection (for example, an A2DP connection) is established between the electronic device 1 and a wireless device, the wireless device may automatically process the audio service of the electronic device 1 based on the audio service connection. If an audio service connection is currently also established between the wireless device and the electronic device 2, the wireless device may interrupt the audio service connection to the electronic device 2, and process the audio service of the electronic device 1 based on the audio service between the wireless device and the electronic device 1. Therefore, the wireless device may automatically switch to process audio services of a plurality of (which may be more than two) electronic devices, and the plurality of electronic devices may share one wireless device.

In this embodiment of this application, a plurality of electronic devices may share one Bluetooth headset. It is assumed that Bluetooth transmission protocol specifications A2DP and HFP are activated between the Bluetooth headset and both the electronic device 1 and the electronic device 2, where the A2DP is a transmission specification supporting audio services, and the HFP is a hands-free specification supporting call services. In other words, the Bluetooth headset keeps A2DP connections and HFP connections (dual connections) to both of the two electronic devices. In this embodiment of this application, in consideration of security, the plurality of electronic devices may be associated with a same account or different accounts. The account may be a cloud account, a phone number, or the like. That is, the plurality of electronic devices are all trusted devices connected to the Bluetooth headset.

In a case in which the Bluetooth headset keeps dual connections to the two electronic devices, when the electronic device 1 initiates a media service, and the electronic device 2 does not initiate an audio service, the electronic device 1 may transmit a media audio stream to the Bluetooth headset based on the A2DP connection to the Bluetooth headset, and the Bluetooth headset outputs the media audio stream. When the electronic device 1 initiates a call service, and the electronic device 2 does not initiate an audio service, the electronic device 1 may transmit a call audio stream to the Bluetooth headset based on the HFP connection to the Bluetooth headset, and the Bluetooth headset outputs the call audio stream, so as to implement a hands-free call through the Bluetooth headset.

Alternatively, in a case in which the Bluetooth headset keeps dual connections to the two electronic devices, when the electronic device 2 initiates a media service, and the electronic device 1 does not initiate an audio service, the electronic device 2 may transmit an audio stream to the Bluetooth headset based on the A2DP connection to the Bluetooth headset, and the Bluetooth headset outputs the media audio stream. When the electronic device 2 initiates a call service, and the electronic device 1 does not initiate an audio service, a call audio stream may be transmitted to the Bluetooth headset based on the HFP connection to the Bluetooth headset, and the Bluetooth headset outputs the call audio stream, so as to implement a hands-free call through the Bluetooth headset.

However, in a scenario in which both the electronic device 1 and the electronic device 2 initiate audio services, the Bluetooth headset may be preempted by the two electronic devices, resulting in a problem that audio streams cannot be output normally due to concurrency of the audio services.

In view of this, this embodiment of this application provides the audio control method. When the Bluetooth headset keeps dual connections to a plurality of electronic devices, according to the audio control method provided in this embodiment of this application, the Bluetooth headset may automatically switch to process audio services of the plurality of electronic devices, thereby avoiding the problem that audio streams cannot be output normally due to concurrency of the audio services.

The following describes in detail a specific implementation of how the Bluetooth headset switches to process audio services of the two electronic devices when the Bluetooth headset is connected to both electronic devices.

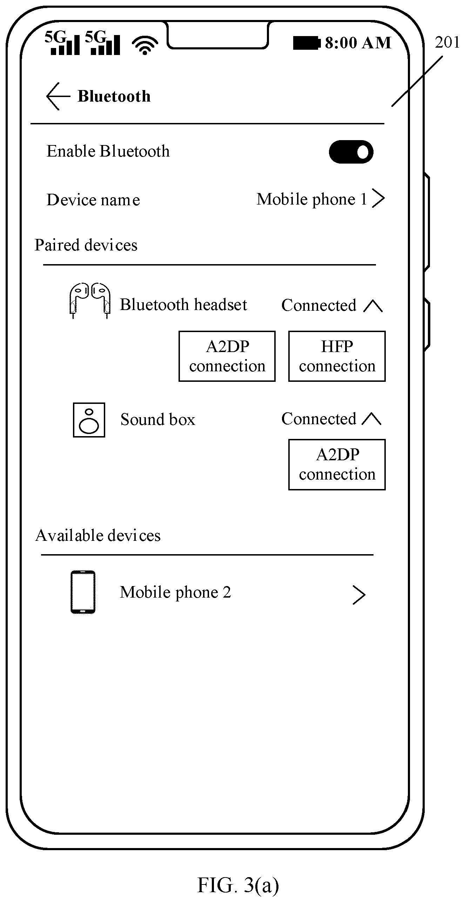

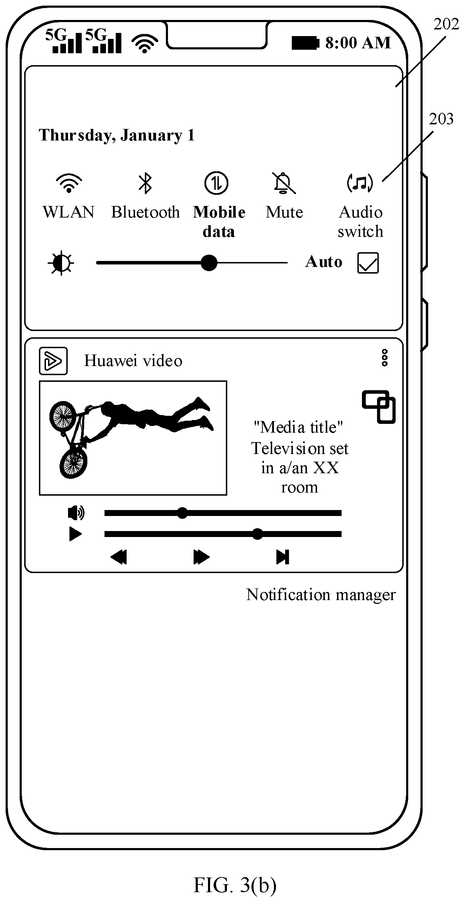

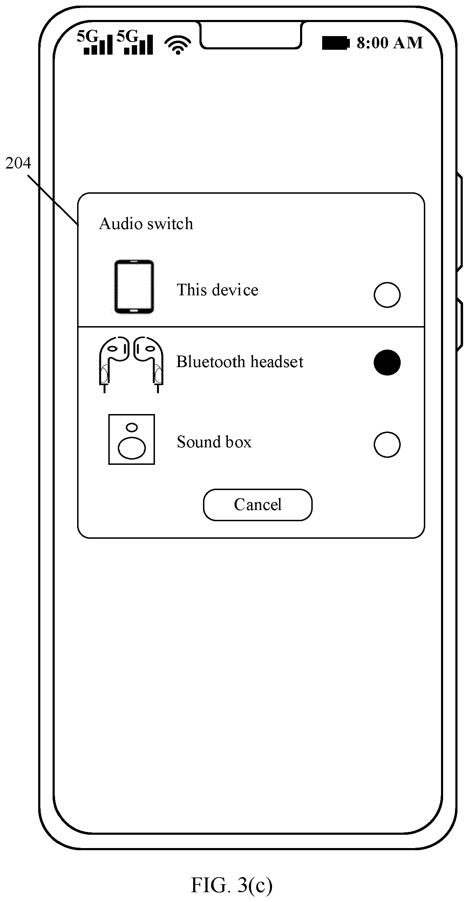

First, FIG. 3(a) to FIG. 3(c) are schematic diagrams of an audio switching interface when an electronic device is connected to the Bluetooth headset. FIG. 3(a) is a schematic diagram of a Bluetooth setting interface of the electronic device. As shown in FIG. 3(a), a Bluetooth function is enabled on the electronic device, and the electronic device is paired and connected to the Bluetooth headset. For example, the electronic device establishes an A2DP connection and an HFP connection to the Bluetooth headset. For example, the electronic device is further paired and connected to a sound box. For example, the electronic device establishes an A2DP connection to the sound box. FIG. 3(b) is a schematic diagram of a sliding notification bar interface of the electronic device. As shown in FIG. 3(b), an "Audio Switch" control 203 may be displayed in a sliding notification bar interface 202. If receiving an operation of a user on the "Audio Switch" control 203, as shown in FIG. 3(c), the electronic device may display an audio switching interface 204. The audio switching interface 204 may include a name of a device that establishes an A2DP connection to the electronic device, and a name of a device that establishes an A2DP connection and an HFP connection to the electronic device. For example, the audio switching interface 204 may include a "This Device" option, a "Bluetooth Headset" option, and a "Sound Box" option. The electronic device may receive an operation of the user on the foregoing options, and switch different audio output modes.

Optionally, a sound output channel for an audio sound each time the electronic device initiates an audio service may be preset. For example, when the electronic device establishes a Bluetooth connection to the Bluetooth headset, the Bluetooth headset is used by default as a sound output channel for an audio sound when the electronic device initiates an audio service. Certainly, the user may select the sound output channel for the audio sound of the electronic device from the options in the audio switching interface based on an actual use requirement. For example, it is assumed that the electronic device 1 currently plays an audio sound through the electronic device 1. In this case, the electronic device 1 may switch from a local channel to a Bluetooth headset channel in response to an operation of the user on the "Bluetooth Headset" option, and output the audio sound through the Bluetooth headset channel. For another example, the electronic device 2 currently plays an audio sound through the Bluetooth headset. If the user needs to switch the audio sound to a local sound output channel, the user may select the "This Device" option. In this case, the electronic device 2 may output the audio sound through the local sound output channel (for example, a speaker or an earpiece) in response to the operation of the user. It should be noted that the audio switching options are described herein as an example. It may be understood that in actual implementation, this embodiment of this application may not be limited thereto. For example, the "This Device" option may be replaced with a "Speaker" option and an "Earpiece" option. This may be specifically determined based on an actual use requirement, and is not limited in this embodiment of this application.

It should be further noted that, for ease of description, the following describes how to process concurrent audio services of a plurality of electronic devices in this embodiment of this application by using an example in which both the electronic device 1 and the electronic device 2 are set to play audio sounds through the Bluetooth headset when initiating audio services.

In this embodiment of this application, it is assumed that the Bluetooth headset keeps dual connections to both the electronic device 1 and the electronic device 2, and the two electronic devices are both set to play audio sounds through the Bluetooth headset when initiating audio services. As shown in FIG. 3(a) to FIG. 3(c), "Bluetooth Headset" is selected as a sound output device in audio switching interfaces of the electronic device 1 and the electronic device 2. In this case, the Bluetooth headset follows different preemption policies in different cases.

### (1) First initiate first use

If the Bluetooth headset currently does not process an audio service, that is, the Bluetooth headset is in an idle state, the Bluetooth headset may support outputting an audio stream transmitted by any one of the two electronic devices. In this case, the Bluetooth headset may follow the preemption policy of first initiate first use. It should be noted that when the Bluetooth headset is in the idle state, the Bluetooth headset is still connected to the electronic device, and in this case, no actual audio data is transmitted between the Bluetooth headset and the electronic device.

For example, when the Bluetooth headset is in the idle state, if the electronic device 1 first initiates a media service (for example, receives an operation of the user such as playing a song or playing a video on the electronic device 1), the electronic device 1 plays a media sound through the Bluetooth headset, and correspondingly, the user may listen to the media sound through the Bluetooth headset.

For another example, when the Bluetooth headset is in the idle state, if the electronic device 2 first initiates a call service (for example, an incoming call or an outgoing call), the electronic device 2 plays a call voice through the Bluetooth headset, and correspondingly, the user wearing the Bluetooth headset may answer the call voice through the Bluetooth headset, so as to implement a hands-free call.

### (2) High-priority service preferred

If the Bluetooth headset currently processes an audio service initiated by one electronic device, that is, the Bluetooth headset is in a working state, and in this case, the other electronic device also initiates an audio service, which electronic device in the two electronic devices occupies or uses the Bluetooth headset may be determined based on priorities of the audio services.

Optionally, the headset preemption policy may be determined based on processing priorities of the media service and the call service. For example, the high-priority service may first preempt a Bluetooth headset sound output channel. The processing priorities of the media service and the call service may be preset, for example, may be preset in a factory, or may be set by the user. For example, the processing priority of the call service is higher than that of the media service. For ease of description, an example in which the priority of the call service is higher than that of the media service is used below for description.

For different audio services, the Bluetooth headset may follow a preemption policy of high-priority audio service preferred. For example, it is assumed that the electronic device 1 is playing a song through the Bluetooth headset (that is, initiates a media service first). In this process, if the electronic device 2 receives an incoming call signal (that is, initiates a call service later), where a priority of the call service is higher than that of the media service. In this case, the Bluetooth headset may automatically switch processing, that is, stop processing the media service initiated by the electronic device 1, and switch to processing the call service initiated by the electronic device 2. In other words, the electronic device 2 may preempt the Bluetooth headset, and output a call voice through the Bluetooth headset, and correspondingly, the user wearing the Bluetooth headset may perform a hands-free call through the Bluetooth headset.

Optionally, when an audio service is initiated, the Bluetooth headset may be automatically started to work or the A2DP connection may be automatically started based on a priority of the audio service. For example, when the Bluetooth headset is processing a low-priority service 1, or the Bluetooth headset is in the idle state, if a high-priority service 2 is initiated, the Bluetooth headset may be automatically started to process the service 2. If no A2DP connection is established when the high-priority service 2 is initiated, or the A2DP connection is interrupted, the service 2 may automatically start reestablishment of an A2DP connection, and then the Bluetooth headset is started to process the service 2.

Optionally, an audio service set with a high priority may include services such as an alarm clock reminder, a conference reminder, and a memo reminder, and certainly may further include any other possible service. This may be specifically determined based on an actual use requirement, and is not limited in this embodiment of this application. For example, it is assumed that a priority of the alarm clock reminder service is higher than that of a music service. When the electronic device plays music through the Bluetooth headset, if the electronic device initiates the high-priority alarm clock reminder service, the high-priority alarm clock reminder service may automatically start the Bluetooth headset, and output an alarm clock reminder prompt tone through the Bluetooth headset.

Optionally, when both electronic devices initiate media services, the Bluetooth headset may follow the preemption policy of first initiate first use. For example, it is assumed that the electronic device 1 is playing a song through the Bluetooth headset (that is, initiates a media service first). In this process, if the electronic device 2 also initiates a media service (that is, initiates the media service later), both the electronic device 2 and the electronic device 1 initiate the media services. In this case, the electronic device 2 that initiates the media service later does not preempt the Bluetooth headset, but outputs a media audio stream through the electronic device 2 (for example, a speaker or an earpiece). Certainly, in this embodiment of this application, an implementation in which the electronic device 2 outputs the media audio stream through another sound output channel other than the Bluetooth headset and the electronic device 2 is not excluded. This can avoid a problem that the media audio stream of the electronic device 2 cannot be output normally due to service concurrency.

Optionally, when both electronic devices initiate call services, a latter path of call may preempt the Bluetooth headset prior to a previous path of call. For example, the electronic device that fails in preemption may switch a status of the current call service to call hold, or may switch a call voice to a sound output channel other than the Bluetooth headset, or display a message prompt box to prompt the user that a call voice has been switched to an earpiece sound output channel, or prompt the user whether to switch a current call voice from the headset channel to another sound output channel, for the user to select.

Optionally, in the foregoing solution in which audio services separately initiated by the two electronic devices preempt the Bluetooth headset, the Bluetooth headset may output audio streams corresponding to the two audio services in a mixed manner (that is, audio mixing), or may not perform audio mixing. This may be specifically determined based on an actual use requirement, and is not limited in this embodiment of this application. For example, it is assumed that the Bluetooth headset currently outputs a media audio stream of the electronic device 1. If the electronic device 2 receives an incoming call, the Bluetooth headset may output both the media audio stream of the electronic device 1 and an incoming call prompt tone of the electronic device 2. Alternatively, the Bluetooth headset may output only the media audio stream of the electronic device 1, but does not output an incoming call prompt tone of the electronic device 2, and the incoming call prompt tone may be output on a local side of the electronic device 2.

### (3) Manual preemption, user operation preferred

In the preemption policy of user operation preferred, priorities of audio services may not be distinguished, and the Bluetooth headset first processes the audio service of the electronic device selected by the user.

For example, it is assumed that the Bluetooth headset is processing an audio service initiated by the electronic device 1. If the electronic device 2 receives an operation of selecting the Bluetooth headset as the sound output device by the user, the Bluetooth headset may follow the preemption policy of user operation preferred, without considering priorities of audio services. That is, the Bluetooth headset first processes the audio service initiated by the electronic device 2, and stops processing the audio service initiated by the electronic device 1. In this case, the electronic device 1 may output an audio stream through the electronic device 1 or another audio output channel.

For another example, it is assumed that the Bluetooth headset is processing an audio service (for example, a media service or a call service) initiated by the electronic device 1, and in this case, the electronic device 2 does not initiate an audio service (that is, is in a service-free state). In this case, if the user selects to switch audio to the Bluetooth headset on the electronic device 2, the Bluetooth headset may follow the preemption policy of user operation preferred. That is, the Bluetooth headset is preempted by the electronic device 2, and stops processing the audio service initiated by the electronic device 1. In this case, the electronic device 1 may output an audio stream through the electronic device 1 or another audio output channel.

For still another example, it is assumed that the electronic device 1 currently does not initiate any audio service (that is, is in a service-free state) and is set to play an audio sound through the Bluetooth headset when initiating an audio service, and in this case, the electronic device 2 does not initiate any audio service and is set to play an audio sound through the electronic device 2 when initiating an audio service. In this case, if the user selects to switch audio to the Bluetooth headset on the electronic device 2, the Bluetooth headset may follow the preemption policy of user operation preferred. That is, the Bluetooth headset is preempted by the electronic device 2.

Optionally, in a scenario in which the Bluetooth headset is preempted due to service concurrency, the electronic device that fails in preemption may perform at least one of the following operations: switching a currently played audio sound to another sound output channel, for example, a speaker channel or an earpiece channel of the electronic device, or a sound output channel like a sound box in Bluetooth connection, where a switching sequence may be specifically determined based on preset priorities; displaying a pop-up box to indicate that the currently played audio sound has been switched to another sound output channel or to ask whether to switch the currently played audio sound to another sound output channel; stopping or stopping the currently played audio service; muting the currently played audio sound; and voluming down the currently played audio sound. It may be understood that the foregoing operations are examples. This embodiment of this application includes but is not limited to the operations listed above. This may be specifically determined based on an actual use requirement, and is not limited in this embodiment of this application.

Optionally, in a scenario in which the Bluetooth headset is preempted due to service concurrency, the electronic device that fails in preemption may further perform the following operation: first determining a type of the currently processed audio service, and then determining, based on the service type, whether to execute the following first processing policy or second processing policy.

The first processing policy: If the electronic device determines that the currently processed audio service is a first-type media service, such as a video or a game, the electronic device 1 continues the audio service (for example, continues to display a game video), and automatically switches the audio sound to the local channel for output. Optionally, the electronic device displays a pop-up box to prompt the user that current audio has been switched from a headset channel to another channel (for example, the electronic device) for output.

The second processing policy: If the electronic device determines that the currently processed audio service is a second-type media service, such as music or an alarm clock, the electronic device 1 pauses the audio service (pauses playing music), and displays a pop-up box to prompt the user whether to switch current audio from a headset channel to another channel (for example, the electronic device) for output.

It should be noted that the media service in the audio service may include playing music, recording, a video, background music in a game, an information prompt tone, a voice message, navigation voice broadcast, intelligent broadcast, an alarm clock, a keypad tone, and the like, and certainly may further include any other possible service. It may be understood that the first-type media service and the second-type media service are not limited to the services listed above. Specific service type division may be set based on an actual use requirement. This is not limited in this embodiment of this application.

In a possible implementation, in a scenario in which the Bluetooth headset is preempted due to service concurrency, the device that fails in preemption may display a message prompt box 1, to prompt the user that the Bluetooth headset is occupied, or prompt the user that a current audio output channel is switched to a preset secondary sound output channel (for example, the device that fails in preemption). Optionally, the electronic device that fails in preemption may hide the message prompt box 1 after preset duration.

In another possible implementation, in a scenario in which the Bluetooth headset is preempted due to service concurrency, the electronic device that fails in preemption may display a message prompt box 2, to prompt the user whether to switch a current audio output channel from the Bluetooth headset channel to a preset secondary sound output channel (for example, the electronic device that fails in preemption). The user may perform an operation on the message prompt box 2 to confirm or cancel switching. Optionally, if no user operation is received within preset duration, the electronic device that fails in preemption may hide the message prompt box 2. It should be noted that the message prompt box 2 needs to be operated by the user to trigger switching confirmation or switching cancellation, and the message prompt box 1 is only used as a prompt, and does not need to be operated by the user.

Optionally, when one electronic device initiates an audio service, whether the audio service is a continuous audio service or a non-continuous audio service is first detected. The A2DP connection between the Bluetooth device and the device that fails in preemption is interrupted only when the device that succeeds in preemption initiates continuous audio such as music, a video, and a game. The A2DP connection between the Bluetooth device and the device that fails in preemption may not be interrupted when the device that succeeds in preemption initiates non-continuous audio such as a message prompt tone or a keypad tone. A method for detecting a continuous audio service includes: The device that succeeds in preemption actively notifies the Bluetooth headset whether the initiated service is a continuous audio service, or the Bluetooth headset determines, through delay detection, whether the initiated service is a continuous audio service. For example, the electronic device 1 receives a prompt tone, and the service lasts for a very short time. Therefore, it is unnecessary to immediately interrupt the A2DP connection between the Bluetooth headset and the electronic device 1. If it is detected that the initiated service ends within the preset duration (for example, 5 seconds or 10 seconds), it may be determined that the service is a temporary short audio service, and therefore, the A2DP connection between the Bluetooth headset and the electronic device 1 may not be interrupted. If it is detected that the initiated service does not end within the preset duration, it may be determined that the service is a continuous audio service, and therefore, the A2DP between the Bluetooth headset and the electronic device 1 is interrupted.

In this embodiment of this application, generally, when both the electronic device 1 and the electronic device 2 initiate audio services, the following possible scenarios may exist: a first scenario: a service concurrency scenario of [a media service and a media service]; a second scenario: a service concurrency scenario of [a media service and a call service]; and a third scenario: a service concurrency scenario of [a call service and a call service]. In different service concurrency scenarios, different preemption policies may be used in this embodiment of this application. The following describes in detail a specific implementation of the audio control method with reference to the foregoing several possible scenarios and preemption policies.

### The first scenario: the service concurrency scenario of [a media service and a media service]

In the first scenario, it is assumed that the electronic device 1 first initiates a media service, and the electronic device 2 initiates a media service later. Because the media service and the media service have a same service priority, the preemption policy is that the headset channel is first preempted by the first initiated service.

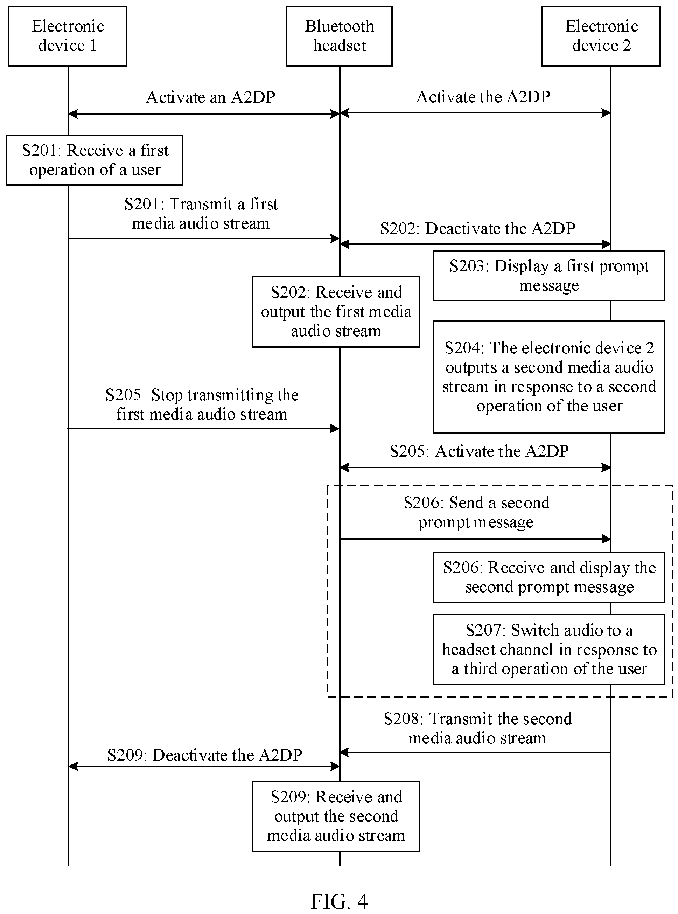

FIG. 4 is a schematic flowchart of switching an audio service by the Bluetooth headset when the Bluetooth headset is connected to both the electronic device 1 and the electronic device 2. As shown in FIG. 4, the A2DP specification is activated between the Bluetooth headset and both the electronic device 1 and the electronic device 2. It should be noted that the Bluetooth headset may activate the A2DP specification between the Bluetooth headset and the electronic device 1 and/or the electronic device 2 when detecting a trigger operation of the user (for example, the user wears the headset). An initial state of the Bluetooth headset is the idle state. It should be noted that, in the first scenario, because no call service is involved, whether the HFP specification is activated between the Bluetooth headset and both the electronic device 1 and the electronic device 2 may not be considered.

With reference to FIG. 4, the following describes an example of the audio control method provided in this embodiment of this application. As shown in FIG. 4, the audio control method may include the following steps S201 to S204.

S201: The electronic device 1 receives a first operation of the user, and transmits a first media audio stream to the Bluetooth headset in response to the first operation.

Optionally, the first operation may be an operation of the user for triggering the electronic device 1 to start an audio service, for example, an operation (for example, a tap operation or a drag operation) of the user on a music playback icon, a video playback icon, a game application icon, or the like on a screen of the electronic device 1, and another example, an operation of wearing the Bluetooth headset by the user. Certainly, the first operation may alternatively be any other operation that meets an actual use requirement, and may be specifically determined based on the actual use requirement. This is not limited in this embodiment of this application.

S202: The Bluetooth headset receives and outputs the first media audio stream, and deactivates the A2DP specification between the Bluetooth headset in and the electronic device 2.

Deactivation of the A2DP specification between the Bluetooth headset and the electronic device 2 may include the following meanings: the A2DP connection between the Bluetooth headset and the electronic device 2 is interrupted; or an ACL connection between the Bluetooth headset and the electronic device 2 is interrupted. This may be specifically determined based on the actual use requirement, and is not limited in this embodiment of this application.

In this embodiment of this application, when the electronic device 1 receives the first operation of the user, the electronic device 1 obtains the first media audio stream in response to the first operation, and transmits the first media audio stream to the Bluetooth headset based on the A2DP specification through an ACL link, that is, the electronic device 1 first initiates the media service, and first occupies the Bluetooth headset. Correspondingly, after receiving the first media audio stream, the Bluetooth headset outputs the first media audio stream, for example, plays music, and deactivates the A2DP specification between the Bluetooth headset and the electronic device 2.

It should be noted that, in this embodiment of this application, an execution sequence of outputting the first media audio stream by the Bluetooth headset and deactivating the A2DP specification between the Bluetooth headset and the electronic device 2 is not limited. The Bluetooth headset may first output the first media audio stream, and then deactivate the A2DP specification between the Bluetooth headset and the electronic device 2. Alternatively, the Bluetooth headset may first deactivate the A2DP specification between the Bluetooth headset and the electronic device 2, and then output the first media audio stream. Alternatively, the Bluetooth headset may simultaneously perform the two actions.

S203: The electronic device 2 displays a first prompt message when the A2DP is deactivated between the Bluetooth headset and the electronic device 2.

The first prompt message may be used to indicate that the Bluetooth headset sound output channel has been occupied, or used to indicate that an audio output channel of the electronic device 2 has been switched from the Bluetooth headset sound output channel to a secondary sound output channel. Optionally, the first prompt message may be hidden or undisplayed after the preset duration.

In addition, the secondary sound output channel may be a sound output channel whose priority is lower than that of the Bluetooth headset. For example, preset sound output channels are sequentially the Bluetooth headset, the electronic device, and the sound box in descending order of priorities, and the secondary sound output channel is the electronic device.

It should be noted that the first prompt message may not be displayed when the A2DP is deactivated between the Bluetooth headset and the electronic device 2. This may be specifically determined based on the actual use requirement, and is not limited in this embodiment of this application.

S204: The electronic device 2 receives a second operation of the user, and outputs a second media audio stream through the electronic device 2 or another sound output channel in response to the second operation.

The second operation may be an operation of the user for triggering the electronic device 2 to start an audio service, for example, an operation of the user on a music playback icon, a video playback icon, a game application icon, or the like on a screen of the electronic device 2. The second operation may be a tap operation, a drag operation, or any other operation that meets the actual use requirement. This may be specifically determined based on the actual use requirement, and is not limited in this embodiment of this application.

In this embodiment of this application, when the Bluetooth headset is occupied by the electronic device 1, if the electronic device 2 receives the second operation of the user, the electronic device 2 obtains the second media audio stream in response to the second operation, and outputs the second media audio stream (for example, playing a video sound) through the electronic device 2 (for example, the speaker or the earpiece). That is, in a case in which the Bluetooth headset processes a media service initiated by the electronic device 1, if the electronic device 2 initiates a media service later, a media audio stream may be output through the electronic device 2, and service concurrency does not occur on the Bluetooth headset side. Compared with a case in which audio streams cannot be output normally in a case of service concurrency in a related technology, in this embodiment of this application, it can be ensured that audio streams are all output normally in the case of service concurrency, so that an audio playback effect in the case of service concurrency when a plurality of electronic devices share the Bluetooth headset can be improved.

It should be noted that FIG. 4 is described by using an example in which the electronic device 2 switches from the Bluetooth headset channel to the electronic device 2 and then plays the audio stream through the electronic device 2. If the electronic device 2 switches from the Bluetooth headset channel to another possible sound output channel, for example, a sound box channel, the electronic device 2 may play the audio stream through the another possible sound output channel in response to the second operation.

Optionally, after step S204, the audio control method provided in this embodiment of this application may further include the following steps S205 to S208.

S205: The Bluetooth headset activates the A2DP specification between the Bluetooth headset and the electronic device 2 when the electronic device 1 stops transmitting the first media audio stream to the Bluetooth headset.

Optionally, a reason for triggering the electronic device 1 to stop transmitting the first media audio stream to the Bluetooth headset may include but is not limited to any one of the following: the user triggers stopping of music playback, or music is automatically stopped when ending, or the user takes off the Bluetooth headset.

When the electronic device 1 stops transmitting the first media audio stream to the Bluetooth headset, the Bluetooth headset is in the idle state, and in this case, the electronic device 2 currently has the media service and outputs the media audio stream through the electronic device 2. In this case, the Bluetooth headset may perform audio service switching based on any one of the following audio service switching policies.

Policy 1: Switch automatically. When the Bluetooth headset is in the idle state, the A2DP specification is activated between the Bluetooth headset and the electronic device 2, and then the electronic device 2 transmits the second media audio stream to the Bluetooth headset based on the A2DP specification through an ACL link. In addition, the Bluetooth headset deactivates the A2DP specification between the Bluetooth headset and the electronic device 1. Correspondingly, after receiving the second media audio stream, the Bluetooth headset outputs the second media audio stream. In Policy 1, the Bluetooth headset may intelligently switch to process the media services initiated by the two electronic devices, so that the audio playback effect when a plurality of electronic devices share the Bluetooth headset can be improved. In a case of automatic switching, the electronic device that fails in preemption may display a prompt message, to indicate that the Bluetooth headset is occupied, or indicate that the current audio output channel has been switched to the preset secondary sound output channel.

Policy two: Switch based on a user requirement. When the Bluetooth device is in the idle state, the Bluetooth device may send a second prompt message to the electronic device. The second prompt message is used to prompt the user whether to switch the current audio output channel from the Bluetooth headset channel to the preset secondary sound output channel. The electronic device may receive and display the second prompt message for the user to view and select, and the user may perform an operation on the second prompt message to confirm switching or cancel switching.

For example, when the Bluetooth headset is in the idle state, the Bluetooth headset may send a message to the electronic device 2, to indicate whether to switch audio to the Bluetooth headset. If the electronic device 2 may receive a confirmation operation of the user for confirming to switch the audio to the Bluetooth headset, the A2DP specification may be further activated between the Bluetooth headset and the electronic device 2. The following describes three possible implementations of how to activate the A2DP specification.

In a possible implementation, if the electronic device 2 receives the confirmation operation, the electronic device 2 feeds back, to the Bluetooth headset, that the electronic device 2 confirms to switch the audio to the Bluetooth headset, so that the Bluetooth headset activates the A2DP specification between the Bluetooth headset and the electronic device 2, and deactivates the A2DP specification between the Bluetooth headset and the electronic device 1. Then, the electronic device 2 transmits the second media audio stream to the Bluetooth headset based on the A2DP specification through the ACL link. Correspondingly, the Bluetooth headset outputs the second media audio stream after receiving the second media audio stream.

In another possible implementation, if the electronic device 2 receives the confirmation operation, the electronic device activates the A2DP specification between the Bluetooth headset and the electronic device 2, and then transmits the second media audio stream to the Bluetooth headset based on the A2DP specification through the ACL link. Correspondingly, after receiving the second media audio stream, the Bluetooth headset outputs the second media audio stream, for example, plays a video sound, and deactivates the A2DP specification between the Bluetooth headset and the electronic device 1.

In still another possible implementation, once the Bluetooth headset is in the idle state, the Bluetooth headset automatically activates the A2DP specification between the Bluetooth headset and the two electronic devices, without waiting for a confirmation of the user for audio switching to the Bluetooth headset. Therefore, the Bluetooth headset in the idle state keeps the A2DP connections to both the electronic device 1 and the electronic device 2. Then, the Bluetooth headset can process an audio service initiated by any electronic device in Bluetooth connection at any time. In the context of this application, this implementation is used as an example for description.

In Policy 2, the Bluetooth headset may switch, based on the actual requirement of the user, to process the media services initiated by the two electronic devices. Such an audio service switching policy can meet the actual use requirement of the user, and improve user experience.

Refer to FIG. 4. Policy 2 corresponds to steps S206 to S207 in FIG. 4, and Policy 1 corresponds to steps S208 to S209 in FIG. 4.

S206: The Bluetooth device sends the second prompt message to the electronic device 2, and the electronic device 2 receives and displays the second prompt message.

The second prompt message is used to indicate whether to switch the audio output channel to the Bluetooth headset. For example, the second prompt message is in a form of a prompt box, and the second prompt message may include a confirm option for confirming switching to the Bluetooth headset and a cancel option for canceling switching to the Bluetooth headset.

S207: The electronic device 2 receives a third operation of the user on the second prompt message.

The third operation is used to trigger switching of the audio output channel to the Bluetooth headset. For example, the third operation may be an operation of the user on the confirm option.

S208: The electronic device 2 transmits the second media audio stream to the Bluetooth device.

S209: The Bluetooth device receives and outputs the second media audio stream, and deactivates the A2DP specification between the Bluetooth device and the electronic device 1.

It should be noted that an execution sequence of outputting the second media audio stream by the Bluetooth headset and deactivating the A2DP specification between the Bluetooth headset and the electronic device 1 is not limited in this embodiment of this application.

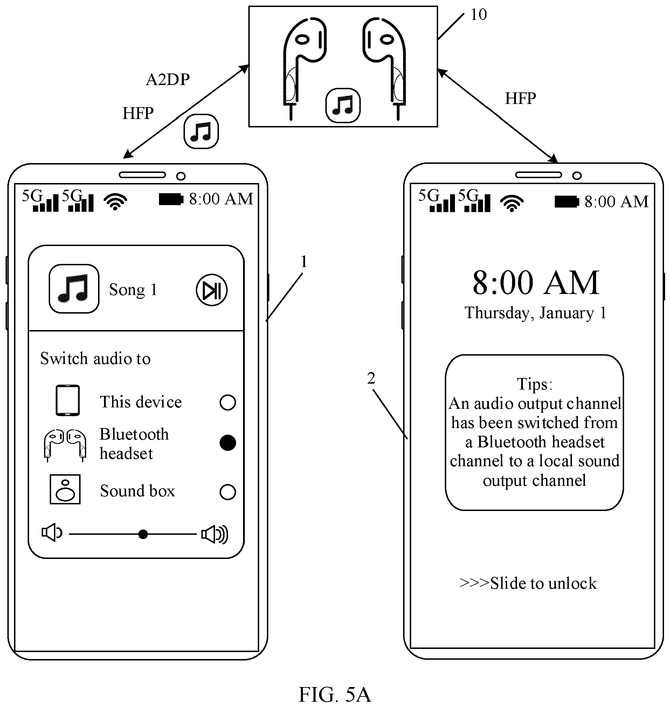

FIG. 5A to FIG. 5E are respectively schematic diagrams of an application scenario of the audio control method shown in FIG. 4. With reference to FIG. 4 and FIG. 5A to FIG. 5E, the following describes examples of the application scenario of the audio control method provided in this embodiment of this application.

As shown in FIG. 5A, if the user performs an operation on the electronic device 1 to trigger playback of a song 1, the electronic device 1 initiates a media service in response to the operation of the user, and transmits a media audio stream of the song 1 to the Bluetooth headset based on the A2DP specification through the ACL link. The A2DP specification is deactivated between the Bluetooth headset and the electronic device 2. As shown in FIG. 5A, the electronic device 1 displays an audio control interface, which includes audio switching options such as a "This Device" option, a "Bluetooth Headset" option, and a "Sound Box" option, and may further include a volume adjustment control, a pause button, a "Next" control, and the like. The "Bluetooth Headset" option is in a selected state, so that the user may learn that the audio stream of the electronic device 1 is currently output through the Bluetooth headset. In addition, the user may select another option from these options based on a requirement, so as to trigger the electronic device 1 to switch an output channel of the audio stream. For example, if the user selects the "This Device" option, the electronic device 1 may switch the audio stream of the electronic device 1 to the electronic device 1 for output. Optionally, the media audio stream is generally played through the speaker of the electronic device 1 by default.

It should be noted that the audio control interface may be an interface displayed when the screen of the electronic device 1 is in a locked state, or may be an interface displayed when the screen of the electronic device 1 is in an unlocked state. It should be further noted that the electronic device 2 currently has no audio service, and may be in a screen-on state, or may be in a screen-off state. In this case, the electronic device 2 may display a prompt message to indicate that the audio output channel has been switched from the Bluetooth headset channel to the local sound output channel.

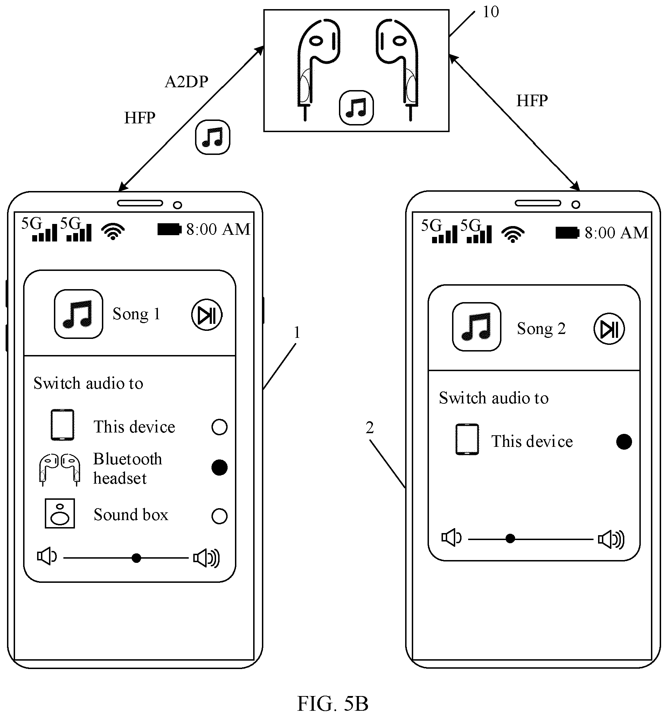

Further, as shown in FIG. 5B, if the electronic device 2 receives an operation of the user for playing a song 2, the electronic device 2 plays the song 2 through the electronic device 2 (for example, the speaker) in response to the operation of the user. As shown in FIG. 5B, the electronic device 2 may display an audio control interface, which includes audio switching options such as a "This Device" option and a "Bluetooth Headset" option, and further includes a volume adjustment control, a pause button, a "Next" control, and the like. The "This Device" option is in the selected state, so that the user may learn that an audio stream of the electronic device 2 is currently output through the electronic device 2. Because the A2DP specification is currently deactivated between the Bluetooth headset and the electronic device 2, audio cannot be switched to the Bluetooth headset in this case. Therefore, the "Bluetooth Headset" option may not be displayed in the audio control interface, or the "Bluetooth Headset" option may be grayed out, that is, the "Bluetooth Headset" option is unavailable. Specifically, whether to display the audio control interface may be determined based on the actual use requirement. This is not limited in this embodiment of this application.

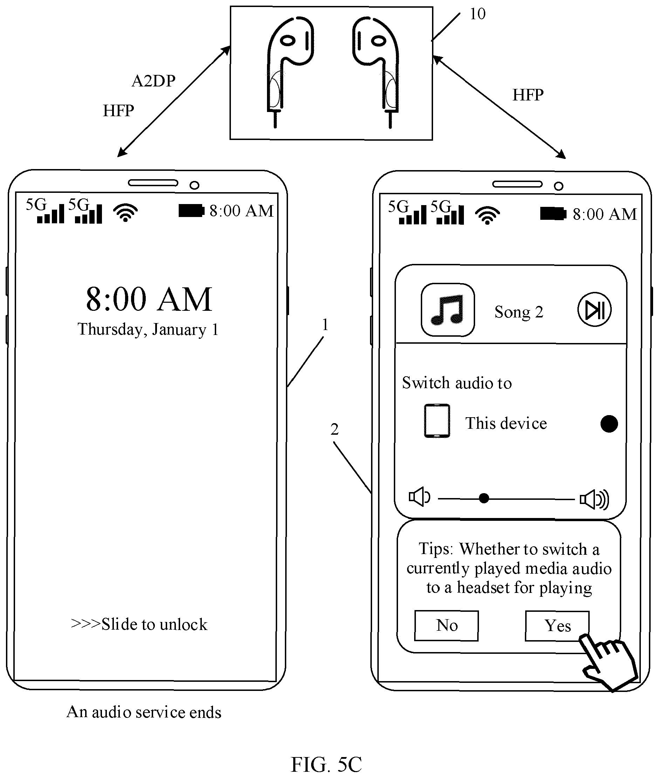

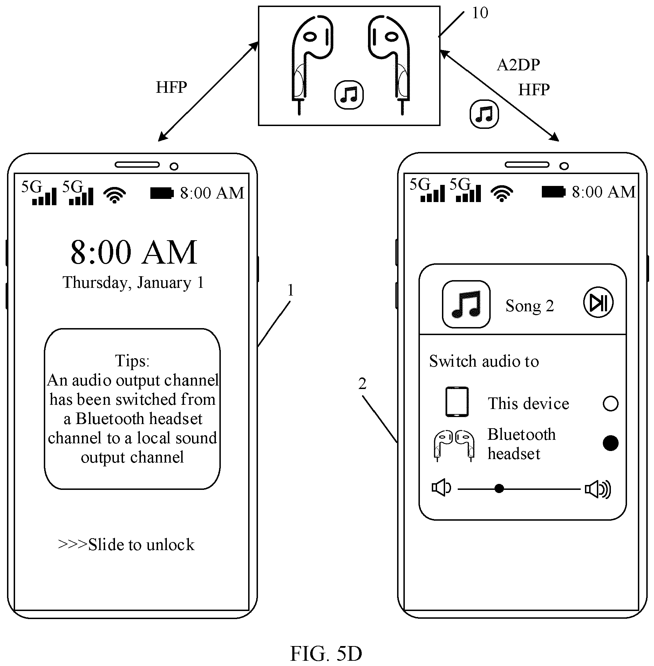

Further, as shown in FIG. 5C, if the audio service of playing the song 1 on the electronic device 1 ends, the electronic device 1 stops, in response to the operation of the user, transmitting the media audio stream of the song 1 to the Bluetooth headset. In this case, the Bluetooth headset is in the idle state, and may send a prompt message to the electronic device 2, to indicate whether to switch the currently played media audio to the headset for playing. Correspondingly, the electronic device 2 may display the prompt message. If the user selects "yes" to confirm to switch audio to the headset for playing, as shown in FIG. 5D, in response to the operation of the user, the A2DP specification is activated between the electronic device 2 and the Bluetooth headset, and then the electronic device 2 transmits the media audio stream of the song 2 to the Bluetooth headset based on the A2DP specification through the ACL link. In this case, the A2DP specification is deactivated between the Bluetooth headset and the electronic device 1, and the "Bluetooth Headset" option may not be displayed in the audio control interface of the electronic device 1.

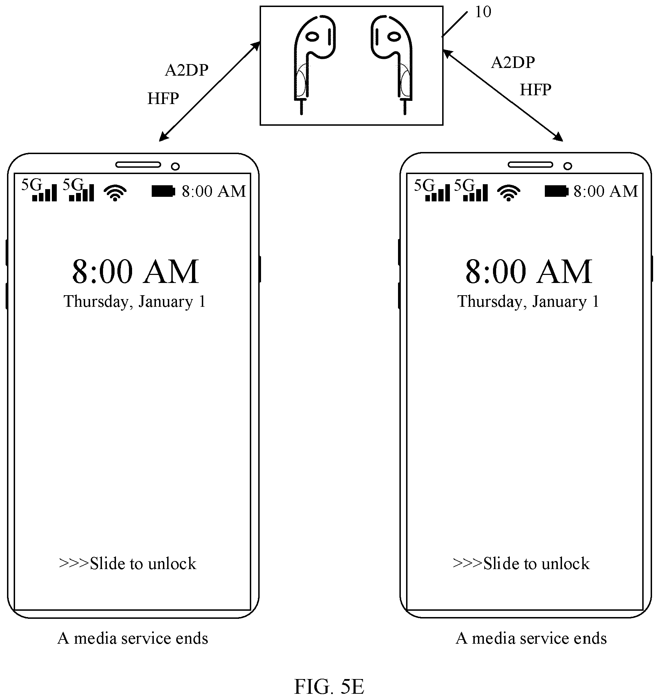

Further, optionally, as shown in FIG. 5E, if the media service of the electronic device 2 ends, the electronic device 2 stops transmitting the media audio stream to the Bluetooth headset. In this case, because neither the electronic device 1 nor the electronic device 2 has an audio service, the Bluetooth headset returns to the idle state. In this case, the Bluetooth headset may reactivate the A2DP specification between the Bluetooth headset and the electronic device 1, and maintain the A2DP specification between the Bluetooth headset and the electronic device 2. That is, the Bluetooth headset in the idle state keeps the A2DP connections to both the electronic device 1 and the electronic device 2. Therefore, the Bluetooth headset may process an audio service initiated by any electronic device in Bluetooth connection at any time.

It should be noted that the foregoing describes an implementation of the audio control method provided in this embodiment of this application. In an implementation process of the method, the A2DP specification needs to be deactivated/reactivated between the Bluetooth headset and the electronic device 1 or the electronic device 2. Therefore, the Bluetooth headset may properly switch audio services of different electronic devices in the case of service concurrency, and it can be ensured that audio streams are output normally. However, this embodiment of this application is not limited thereto. The following provides two implementation solutions of the audio control method provided in this embodiment of this application as an example.

The first solution: Activate/Deactivate the A2DP specification.

It is assumed that the A2DP specification is activated between the Bluetooth headset and both the electronic device 1 and the electronic device 2. When one of the electronic devices (for example, the electronic device 1) initiates a media service and occupies the Bluetooth headset, the Bluetooth headset may deactivate the A2DP specification between the Bluetooth headset and the other electronic device (for example, the electronic device 2). It should be noted that FIG. 4 and FIG. 5A to FIG. 5E, and corresponding specific solution descriptions are all based on the first solution.

In the first solution, if the electronic device 1 initiates an audio service, the headset actively interrupts the A2DP connection to the electronic device 2 after starting the service. After the A2DP connection between the headset and the electronic device 2 is interrupted, when the electronic device 2 plays audio, sounds may be directly output on the electronic device 2. If the electronic device 2 needs to output the sounds on the headset, the service of the electronic device 1 needs to be stopped first. When the audio service of the electronic device 1 ends, the headset actively establishes an A2DP connection to the electronic device 2. In this case, if the electronic device 2 is in an audio service, sounds may be transmitted to the headset for output, and similarly, the headset determines whether to interrupt the audio A2DP connection to the electronic device 1. Compared with a case in which an audio stream is swallowed in the case of service concurrency in the related technology, in the solution provided in this embodiment of this application, when a mobile phone is in a headset service, if another mobile phone initiates an audio service, sounds may be output normally on the mobile phone, and the sounds of the service may not be swallowed by the headset (for example, audio that cannot be paused, like a video or a prompt tone).

The second solution: Indicate to disable the Bluetooth headset channel.

It is assumed that the A2DP specification is activated between the Bluetooth headset and both the electronic device 1 and the electronic device 2. When one electronic device (for example, the electronic device 1) first initiates a media service and occupies the Bluetooth headset, the Bluetooth headset may send a message to the other electronic device (for example, the electronic device 2) to notify that the Bluetooth headset is occupied, and the other electronic device disables the Bluetooth headset channel based on the notification message, and automatically switches to the secondary sound output channel (for example, the other electronic device). In some embodiments, the electronic device 2 may also actively query a current working state of the Bluetooth headset, and when learning that the headset is currently working, may automatically switch to the secondary sound output channel (for example, the electronic device 2). It can be learned that in the second solution, the Bluetooth headset does not need to deactivate the A2DP specification between the Bluetooth headset and the electronic device.

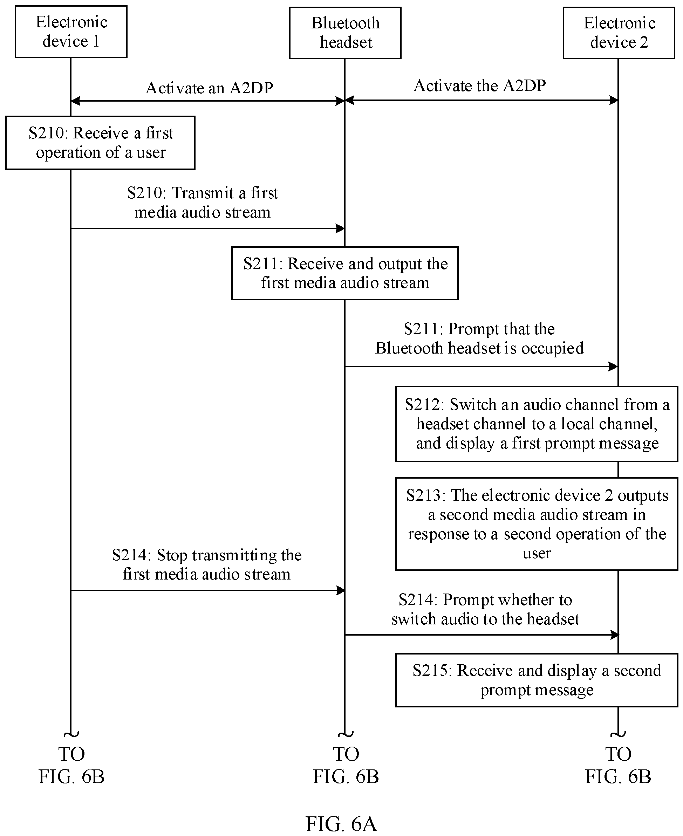

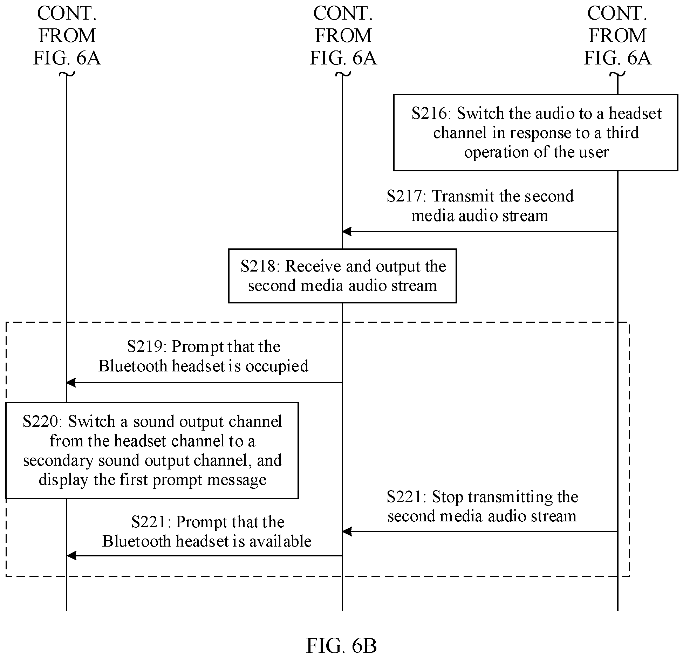

Based on the second solution and with reference to FIG. 6A and FIG. 6B, the following describes an example of a possible implementation of the audio control method provided in this embodiment of this application. FIG. 6A and FIG. 6B are a schematic flowchart of switching an audio service by the Bluetooth headset when the Bluetooth headset is connected to both the electronic device 1 and the electronic device 2. The A2DP specification is activated between the Bluetooth headset and both the electronic device 1 and the electronic device 2. As shown in FIG. 6A and FIG. 6B, the audio control method may include the following steps S210 to S220.

S210: The electronic device 1 receives a first operation of the user, and transmits a first media audio stream to the Bluetooth headset in response to the first operation.

For a description of step S210, refer to the description of step S201 in FIG. 4. Details are not described herein again.

S211: The Bluetooth headset receives and outputs the first media audio stream, and sends a first prompt message to the electronic device 2, so as to prompt that the Bluetooth headset is occupied.

A difference between step S211 and step S202 in FIG. 4 lies in that the Bluetooth headset does not need to deactivate the A2DP specification between the Bluetooth headset and the electronic device 2, but sends a message to the electronic device 2 for notification, so as to indicate the electronic device 2 to switch an audio output channel to another sound output channel.

When the electronic device 1 receives the first operation of the user, the electronic device 1 transmits, in response to the first operation, the first media audio stream to the Bluetooth headset based on the A2DP specification through the ACL link. That is, the electronic device 1 first initiates a media service, and first occupies the Bluetooth headset. Correspondingly, the Bluetooth headset outputs the first media audio stream after receiving the first media audio stream.

S212: The electronic device 2 receives the first prompt message, and switches an audio channel from the headset channel to a secondary sound output channel based on the first prompt message. Optionally, the electronic device 2 may display the first prompt message.

The Bluetooth headset sends the first prompt message to the electronic device 2, to prompt that the Bluetooth headset is occupied. After receiving the prompt message, the electronic device 2 disables the Bluetooth headset channel, and automatically switches to the secondary sound output channel (for example, the electronic device 2). In this case, if the electronic device 2 initiates an audio service, an audio stream is output not through the Bluetooth headset but through the secondary sound output channel.

S213: The electronic device 2 receives a second operation of the user, and outputs a second media audio stream through the electronic device 2 or another sound output channel in response to the second operation.

For a description of step S213, refer to the description of step S204 in FIG. 4. Details are not described herein again.

When the Bluetooth headset is occupied by the electronic device 1, if the electronic device 2 receives the second operation of the user, for example, tapping a video playback icon on the screen of the electronic device 2 by the user, the electronic device 1 obtains the second media audio stream corresponding to the video playback icon in response to the second operation, and outputs the second media audio stream through the electronic device 1 (for example, the speaker or the earpiece). That is, in a case in which the Bluetooth headset processes a media service initiated by the electronic device 1, if the electronic device 2 initiates a media service later, a media audio stream may be output through the electronic device 2. Compared with the case in which audio streams cannot be output normally in the case of service concurrency in the related technology, in this embodiment of this application, it can be ensured that audio streams are all output in the case of service concurrency, so that an audio playback effect in the case of service concurrency when a plurality of electronic devices share the Bluetooth headset can be improved.

S214: When the electronic device 1 stops transmitting the first media audio stream to the Bluetooth headset, the Bluetooth headset sends a second prompt message to the electronic device 2, to indicate whether to switch audio to the Bluetooth headset.

A difference between step S214 and step S205 in FIG. 4 lies in that the Bluetooth headset in the idle state does not need to activate the A2DP specification between the Bluetooth headset and the electronic device 2, but sends a message to the electronic device 2 for notification, so as to prompt that the Bluetooth headset is available and whether the electronic device 2 switches the audio to the headset channel.

S215: The electronic device 2 receives and displays the second prompt message.

S216: The electronic device 2 receives a third operation of the user on the second prompt message, and switches the audio output channel to the headset channel in response to the third operation.

When the electronic device 1 stops transmitting the first media audio stream to the Bluetooth headset, for example, the user triggers stopping of music playback, or music is automatically stopped when ending, or the user takes off the Bluetooth headset, the Bluetooth headset is in the idle state, and in this case, the electronic device 2 currently has the media service and outputs the media audio stream through the electronic device 2. In this case, the Bluetooth headset may perform audio service switching based on any one of the following audio service switching policies.

Policy 1: Switch automatically. When the Bluetooth headset is in the idle state, the Bluetooth headset may notify the electronic device 2 that the Bluetooth headset is currently available. After receiving the notification, the electronic device 1 may automatically enable the Bluetooth headset channel, and then transmit the second media audio stream to the Bluetooth headset based on the A2DP specification through the ACL link. Correspondingly, after receiving the second media audio stream, the Bluetooth headset outputs the second media audio stream, for example, plays a video sound. In this embodiment of this application, the Bluetooth headset may intelligently switch to process the media services initiated by the two electronic devices, so that an audio playback effect when a plurality of electronic devices share the Bluetooth headset can be improved.

Policy two: Switch based on a user requirement. As shown in FIG. 6A and FIG. 6B, when the Bluetooth headset is in the idle state, the Bluetooth headset may send a message to the electronic device 2, to indicate whether to switch the audio to the Bluetooth headset. If the electronic device 2 receives the third operation of the user for confirming to switch the audio to the Bluetooth headset, the electronic device 2 enables the Bluetooth headset channel in response to the third operation, and transmits the second media audio stream to the Bluetooth headset based on the A2DP specification through the ACL link. Correspondingly, after receiving the second media audio stream, the Bluetooth headset outputs the second media audio stream, for example, plays a video sound. In this embodiment of this application, the Bluetooth headset may switch, based on the actual requirement of the user, to process the media services initiated by the two electronic devices. Such an audio service switching policy can meet the actual use requirement of the user, and improve user experience.

S217: The electronic device 2 transmits the second media audio stream to the Bluetooth device.

For descriptions of steps S215 to S217, refer to the description of step S204 in FIG. 4. Details are not described herein again.

S218: The Bluetooth device receives and outputs the second media audio stream.

A difference between step S218 and step S205 in FIG. 4 lies in that after being preempted by the media service of the electronic device 2, the Bluetooth headset does not need to deactivate the A2DP specification between the Bluetooth headset and the electronic device 1.

Optionally, after step S218, the audio service switching method provided in this embodiment of this application may further include the following steps S219 to S221.

S219: The Bluetooth headset sends the first prompt message to the electronic device 1, so as to prompt that the Bluetooth headset is occupied.

S220: The electronic device 1 receives the first prompt message, and switches an audio channel from the headset channel to the secondary sound output channel based on the first prompt message.

Optionally, the electronic device 1 may display the first prompt message, so that the user may view and learn that the audio output channel is occupied or has been switched.

S221: When the electronic device 2 stops transmitting the second media audio stream to the Bluetooth headset, the Bluetooth headset sends the second prompt message to the electronic device 1, to indicate whether to switch the audio output channel to the headset channel.

Steps S219 to S221 are similar to steps S211 to S214. The Bluetooth headset sends the prompt message to the electronic device 1, so as to prompt that the Bluetooth headset is occupied. After receiving the prompt message, the electronic device 1 disables the Bluetooth headset channel, and automatically switches to the secondary sound output channel (for example, the electronic device 1). In this case, if the electronic device 1 initiates an audio service, an audio stream is not output through the Bluetooth headset. Further, when the electronic device 2 stops transmitting the second media audio stream to the Bluetooth headset, the Bluetooth headset is in the idle state. In this case, the Bluetooth headset may send a message to the electronic device 1 to prompt that the Bluetooth headset is available, and then the electronic device 1 may enable the Bluetooth headset channel after receiving the message.

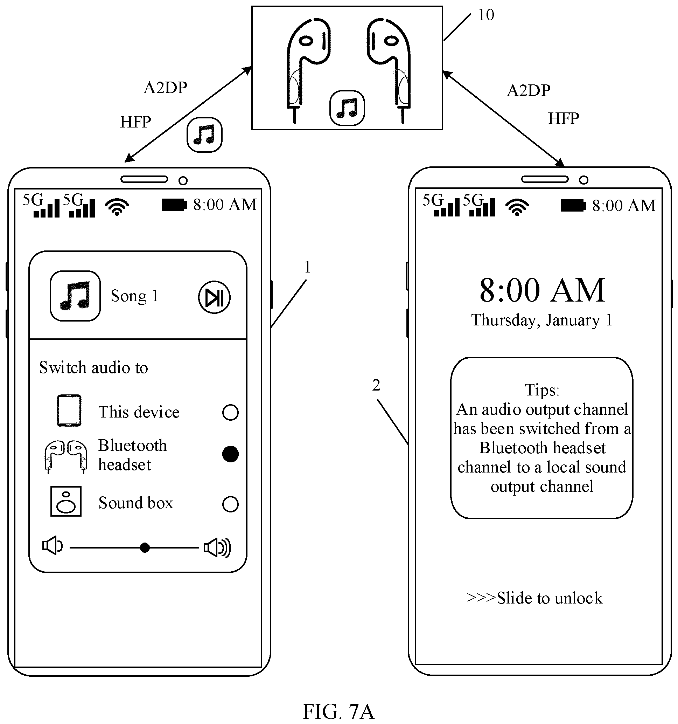

FIG. 7A to FIG. 7D are respectively schematic diagrams of an application scenario of the audio control method shown in FIG. 6A and FIG. 6B. With reference to FIG. 6A and FIG. 6B and FIG. 7A to FIG. 7D, the following describes examples of the application scenario of the audio control method provided in the second solution of this embodiment of this application.

As shown in FIG. 7A, if the user performs an operation on the electronic device 1 to trigger playback of a song 1, the electronic device 1 initiates a media service in response to the operation of the user, and transmits a media audio stream of the song 1 to the Bluetooth headset based on the A2DP specification through the ACL link. The A2DP specification is kept in an activated state between the Bluetooth headset and both the electronic device 1 and the electronic device 2. As shown in FIG. 7A, the electronic device 1 displays an audio control interface, which includes audio switching options such as a "This Device" option, a "Bluetooth Headset" option, and a "Sound Box" option, and may further include a volume adjustment control, a pause button, a "Next" control, and the like. The "Bluetooth Headset" option is in a selected state, so that the user may learn that the audio stream of the electronic device 1 is currently output through the Bluetooth headset. In addition, the user may select another option from these options based on a requirement, so as to trigger the electronic device 1 to switch an output channel of the audio stream. For example, if the user selects the "This Device" option, the electronic device 1 may switch the audio stream of the electronic device 1 to the electronic device 1 for output. For example, the media audio stream is generally played through the speaker of the electronic device 1 by default.

It should be noted that the audio control interface may be an interface displayed when the screen of the electronic device 1 is in a locked state, or may be an interface displayed when the screen of the electronic device 1 is in an unlocked state. It should be further noted that the electronic device 2 currently has no audio service, and may be in a screen-on state, or may be in a screen-off state. Because the electronic device 1 is occupying the Bluetooth headset, the electronic device 2 is indicated to disable the Bluetooth headset, and automatically switches from the Bluetooth headset sound output channel to the preset secondary sound output channel (for example, the electronic device 2). The electronic device 2 may display a prompt message to indicate that the audio output channel has been switched from the Bluetooth headset channel to the local sound output channel.

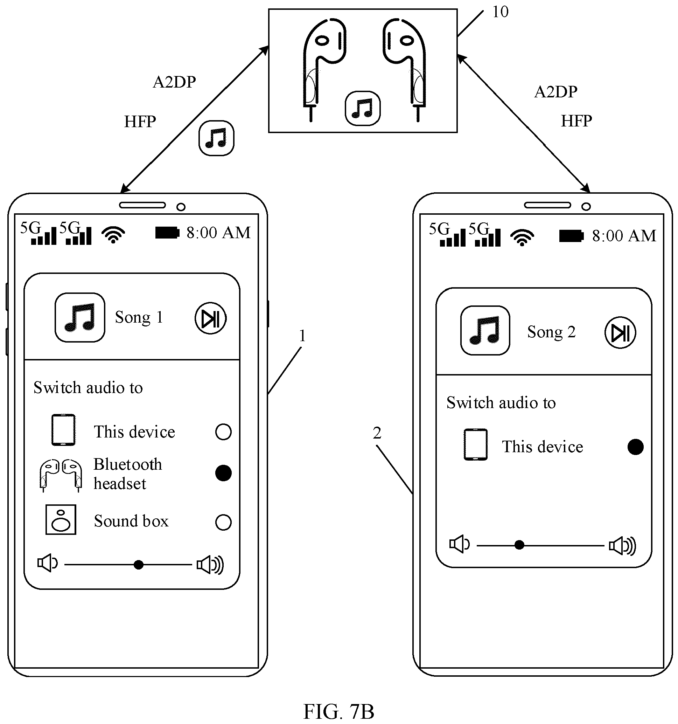

Further, as shown in FIG. 7B, if the electronic device 2 receives an operation of the user for playing a song 2, the electronic device 2 plays the song 2 through the electronic device 2 (for example, the speaker) in response to the operation of the user. The electronic device 2 may display an audio control interface in which a "This Device" option is in the selected state, so that the user may view and learn that an audio stream of the electronic device 2 is currently output through the electronic device 2.

In some embodiments, when the electronic device 2 receives an operation of the user for playing a voice or a media service, the electronic device 2 pops up an audio control interface in response to the operation. The audio control interface includes an audio channel currently available to the electronic device 2, for example, audio channels such as a "This Device" option and a "Bluetooth Headset" option. In response to a selection operation of the user on the audio channels, the electronic device 2 performs an operation of playing the voice or the media service.

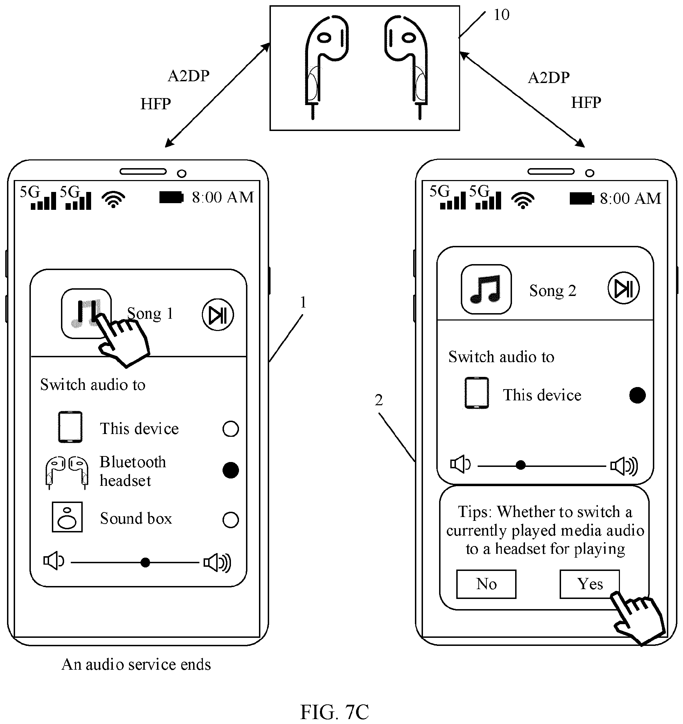

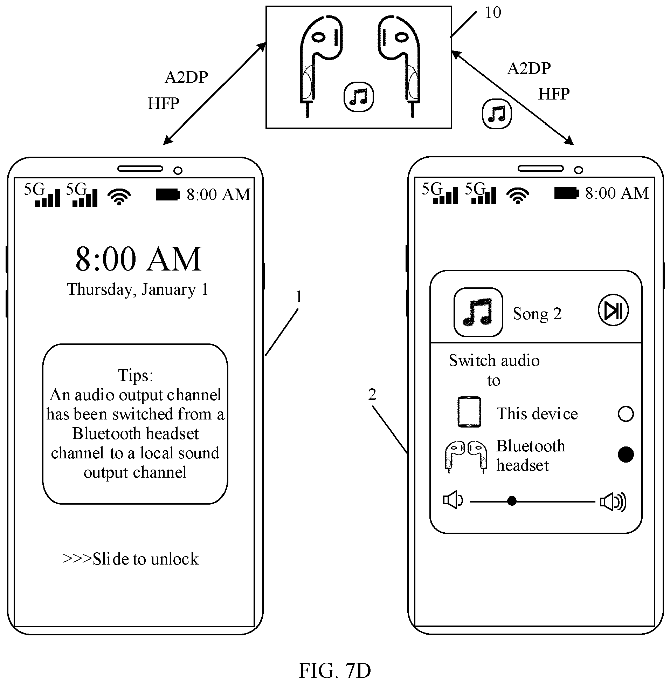

Further, as shown in FIG. 7C, if the electronic device 1 receives an operation of the user for stopping playback of the song 1, the electronic device 1 stops, in response to the operation of the user, transmitting the media audio stream of the song 1 to the Bluetooth headset. In this case, the Bluetooth headset is in the idle state, and may send a prompt message to the electronic device 2, to indicate whether to switch currently played media audio to the headset for playing. Correspondingly, the electronic device 2 may display the prompt message for the user to select. If the user selects "yes" to confirm to switch the audio to the headset for playing, as shown in FIG. 7D, in response to the operation of the user, the electronic device 2 transmits the media audio stream of the song 2 to the Bluetooth headset based on the A2DP specification through the ACL link. The Bluetooth headset receives and outputs the media audio stream of the song 2, and sends a message to the electronic device 1, so as to notify that the Bluetooth headset has been occupied. After receiving the message, the electronic device 1 disables the Bluetooth headset channel, and switches from the Bluetooth headset sound output channel to the preset secondary sound output channel (for example, the electronic device 1). As shown in FIG. 7D, the electronic device 1 displays the prompt message to indicate that the audio output channel has been switched from the Bluetooth headset channel to the local sound output channel. In this case, if the user performs an operation on the electronic device 1 to trigger continuous playback of the song 1, the electronic device 1 plays the song 1 through the electronic device 1. Therefore, when both the electronic device 1 and the electronic device 2 initiate media services, a conflict caused by preemption of the Bluetooth headset is avoided, and a problem that audio streams cannot be output normally is also avoided.

Still further, if the audio service of the electronic device 2 ends, the electronic device 2 stops transmitting the media audio stream of the song 2 to the Bluetooth headset. In this case, because neither the electronic device 1 nor the electronic device 2 has an audio service, the Bluetooth headset returns to the idle state.

In conclusion, in the first solution of the first scenario, the A2DP specification needs to be deactivated and then reactivated in the case of service concurrency, that is, the A2DP connection is interrupted and then reestablished. In the second solution of the first scenario, in the case of service concurrency, the A2DP specification may not need to be deactivated, but the electronic device that fails in preemption is notified, by sending a message, that the Bluetooth headset is occupied. In this embodiment of this application, the Bluetooth headset may intelligently switch to process the media services initiated by the two electronic devices, so that the problem that audio streams cannot be output normally in the case of service concurrency is avoided, and an audio playback effect when a plurality of electronic devices share the Bluetooth headset can be improved.

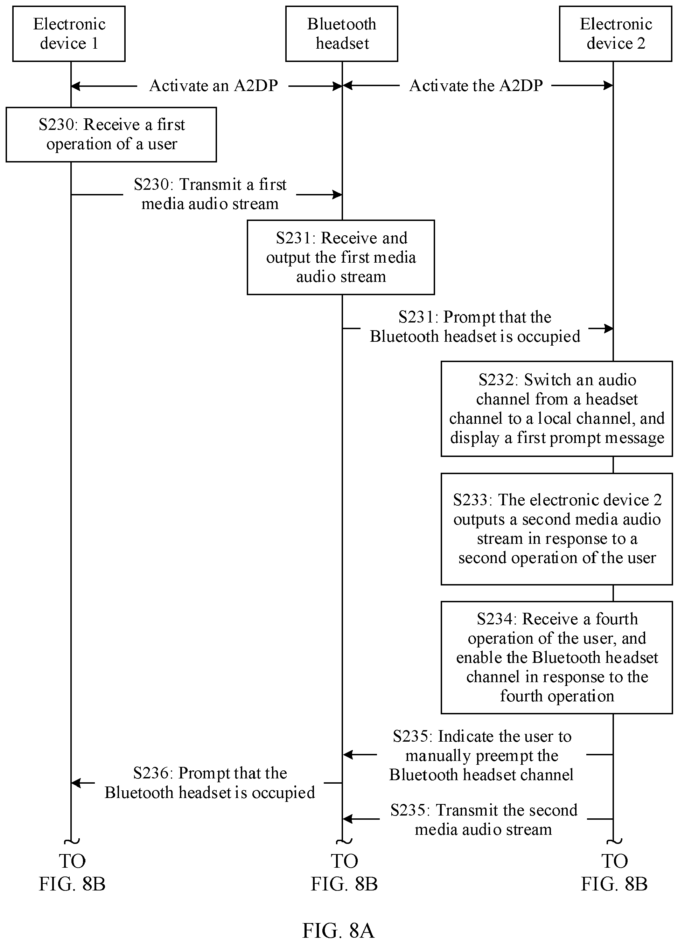

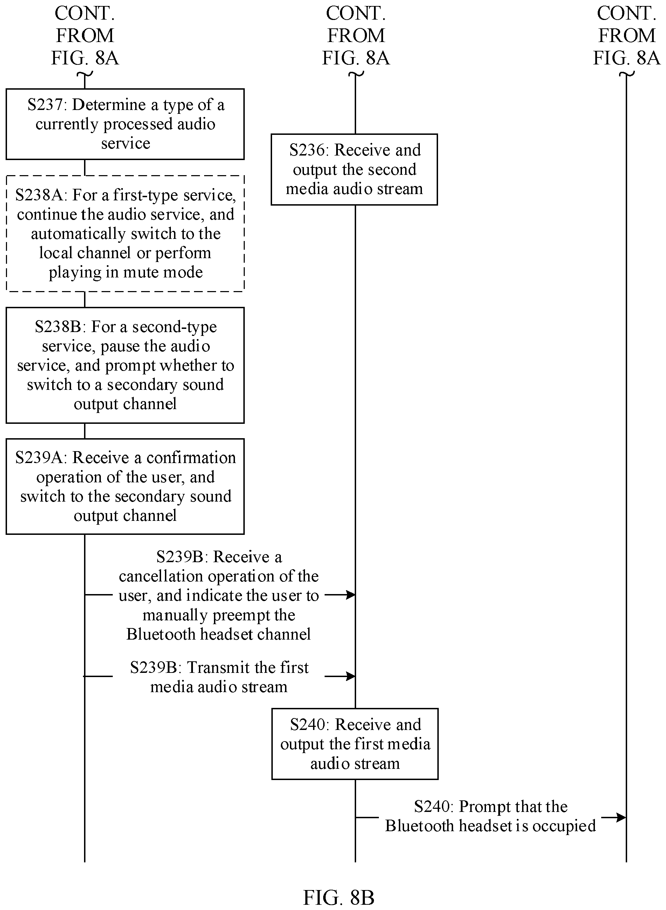

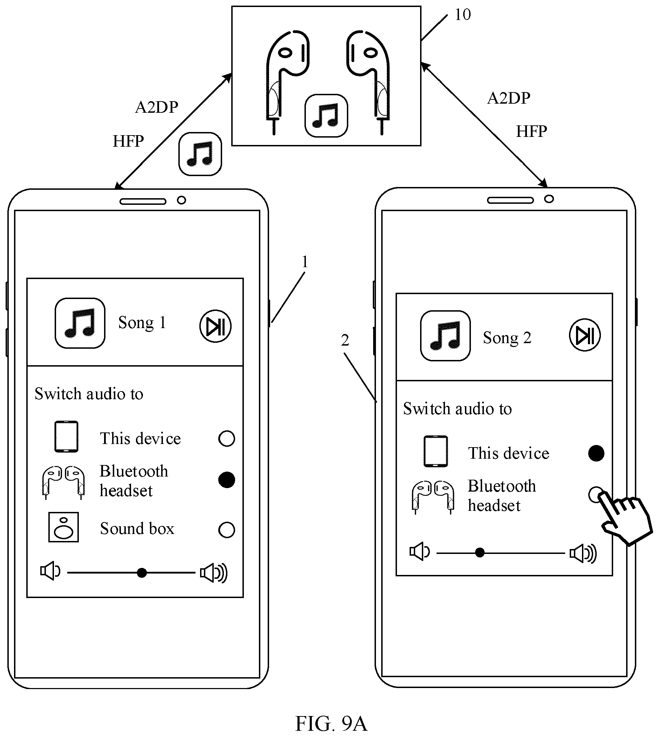

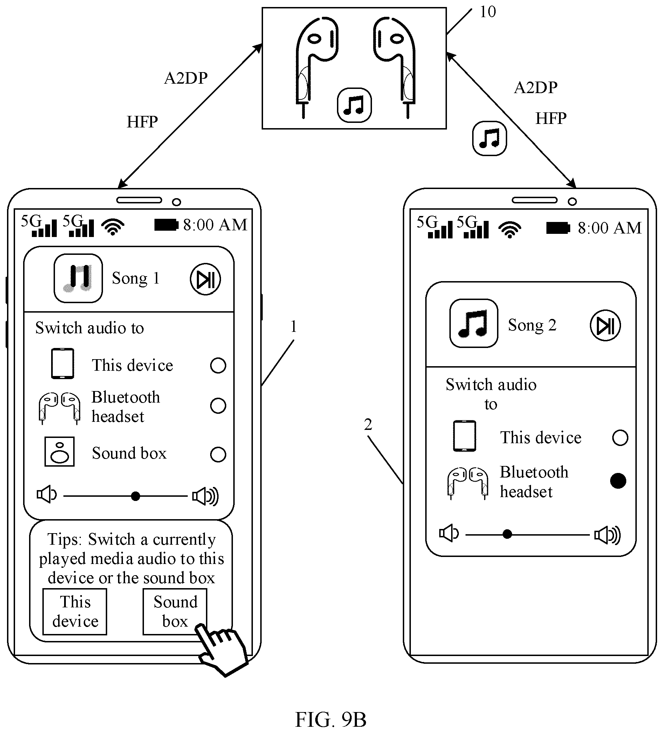

In addition, in the first scenario, a solution (referred to as a third solution) in which the user manually preempts the headset channel in the case of service concurrency may be used. The following describes the third solution by using an example with reference to FIG. 8A and FIG. 8B, FIG. 9A, and FIG. 9B.

FIG. 8A and FIG. 8B are a schematic flowchart of switching an audio service by the Bluetooth headset when the Bluetooth headset is connected to both the electronic device 1 and the electronic device 2. The A2DP specification is activated between the Bluetooth headset and both the electronic device 1 and the electronic device 2. As shown in FIG. 8A and FIG. 8B, the audio control method may include the following steps S230 to S240.

S230: The electronic device 1 receives a first operation of the user, and transmits a first media audio stream to the Bluetooth headset in response to the first operation.

S231: The Bluetooth headset receives and outputs the first media audio stream, and sends a first prompt message to the electronic device 2, so as to prompt that the Bluetooth headset is occupied.

S232: The electronic device 2 receives the first prompt message, and switches an audio channel from the headset channel to a secondary sound output channel based on the first prompt message. Optionally, the secondary sound output channel may be the local channel, and the electronic device 2 may display the first prompt message.

S233: The electronic device 2 receives a second operation of the user, and outputs a second media audio stream through the electronic device 2 or another sound output channel in response to the second operation.

For descriptions of steps S230 to S233, refer to the descriptions of steps S210 to S213 in FIG. 6A and FIG. 6B. Details are not described herein again.

The electronic device 1 may obtain, based on the received first operation of the user, for example, tapping a music playback icon on the screen of the electronic device 1 by the user, the first media audio stream corresponding to the music playback icon, and transmit the first media audio stream to the Bluetooth headset based on the A2DP specification through the ACL link. Correspondingly, after receiving the first media audio stream, the Bluetooth headset outputs the first media audio stream, for example, plays music.

Further, the Bluetooth headset sends a prompt message to the electronic device 2, so as to prompt that the Bluetooth headset is occupied. After receiving the prompt message, the electronic device 2 disables the Bluetooth headset channel, for example, automatically switches from the Bluetooth headset channel to the secondary sound output channel (for example, the speaker of the electronic device 2). In this case, if the electronic device 2 initiates an audio service, an audio stream is output not through the Bluetooth headset but through the secondary sound output channel.

Further, when the Bluetooth headset is occupied by the electronic device 1, if the electronic device 2 receives the second operation of the user, for example, tapping a video playback icon on the screen of the electronic device 2 by the user, the electronic device 1 obtains the second media audio stream corresponding to the video playback icon in response to the second operation, and outputs the second media audio stream through the electronic device 1 (for example, the speaker or the earpiece). That is, in a case in which the Bluetooth headset processes a media service initiated by the electronic device 1, if the electronic device 2 initiates a media service later, a media audio stream may be output through the electronic device 2. Compared with the case in which audio streams cannot be output normally in the case of service concurrency in the related technology, in this embodiment of this application, it can be ensured that audio streams are all output in the case of service concurrency, so that an audio playback effect in the case of service concurrency when a plurality of electronic devices share the Bluetooth headset can be improved.

S234: The electronic device 2 receives a fourth operation of the user, and enables the Bluetooth headset channel in response to the fourth operation.

In a process in which the electronic device 2 has initiated playback of a voice or a media service, the electronic device 2 pops up an audio control interface in response to a user operation (for example, a drop-down list or a status bar). Alternatively, the electronic device 2 may pop up an audio control interface in response to a user operation such as an on-demand audio or video service. The audio control interface includes an audio channel currently available to the electronic device 2, for example, includes audio channels such as a "This Device" option and a "Bluetooth Headset" option. If the electronic device 2 receives a selection operation (that is, the foregoing fourth operation) of the user on "Bluetooth Headset", the electronic device 2 may enable the Bluetooth headset channel.

S235: The electronic device 2 sends a notification message to the Bluetooth headset to indicate the user to manually preempt the Bluetooth headset channel, and transmits the second media audio stream to the Bluetooth headset.

S236: The Bluetooth headset receives and outputs the second media audio stream, and sends a prompt message to the electronic device 1, to prompt that the Bluetooth headset is occupied.

In a process in which the electronic device 2 outputs the second media audio stream through the secondary sound output channel, if the user selects to switch to the Bluetooth headset channel, the electronic device 2 enables the Bluetooth headset channel, and notifies the Bluetooth headset that the Bluetooth headset channel is manually preempted by the user. Then, the electronic device 2 transmits the second media audio stream to the Bluetooth headset based on the A2DP specification through the ACL link. Correspondingly, after receiving the second media audio stream, the Bluetooth headset outputs the second media audio stream, for example, plays a video sound. In this case, the Bluetooth headset stops playing the first media audio stream. In this embodiment of this application, the Bluetooth headset may intelligently switch to process the media services initiated by the two electronic devices, so that an audio playback effect when a plurality of electronic devices share the Bluetooth headset can be improved.

S237: The electronic device 1 receives the prompt message, and determines a type of a currently processed audio service.

S238A: If the currently processed audio service is a first-type service, the electronic device 1 continues to process the current audio service, and automatically switches to the secondary sound output channel or performs playing in mute mode. Optionally, in this case, the electronic device 1 may display the prompt message to prompt the user that the audio output channel has been switched to the secondary sound output channel (for example, the local channel).

S238B: If the currently processed audio service is a second-type service, the electronic device 1 pauses processing the current audio service, and displays a message to prompt the user whether to switch to the secondary sound output channel (for example, the local channel).

It should be noted that, for steps S238A and S238B, the electronic device 1 selects one to perform.

The Bluetooth headset sends the prompt message to the electronic device 1, to prompt that the Bluetooth headset is occupied. Correspondingly, after receiving the prompt message, the electronic device 2 may first determine the type of the media service currently processed by the electronic device 1, and then determine, based on the service type, whether to execute the following first processing policy or second processing policy.

The first processing policy: As shown in a dashed box in FIG. 8A and FIG. 8B, if the electronic device 1 determines that the currently processed media service is a first-type media service, such as a video or a game, the electronic device 1 continues the audio service (for example, continues to display a game video), and automatically switches an audio sound to the local channel for output. The first processing policy corresponds to step S238A.

The second processing policy: If the electronic device 1 determines that the currently processed media service is a second-type media service, for example, music or an alarm clock, the electronic device 1 pauses the audio service (pauses playing music), and prompts the user whether to switch current audio to the local channel for output. The second processing policy corresponds to step S238B.

S239A: The electronic device 1 receives a confirmation operation of the user for triggering switching to the secondary sound output channel, and switches an audio output channel to the secondary sound output channel. Then, the electronic device 1 outputs the first media audio stream through the secondary sound output channel.

S239B: The electronic device 1 receives a cancellation operation of the user for triggering cancellation of switching to the secondary sound output channel, sends a notification message to the Bluetooth headset to indicate the user to manually preempt the Bluetooth headset channel, and transmits the first media audio stream to the Bluetooth headset.

It should be noted that, for steps S238A and S238B, the electronic device 1 selects one to perform.

S240: The Bluetooth headset receives and outputs the first media audio stream, and sends a prompt message to the electronic device 2, to prompt that the Bluetooth headset is occupied.

When the electronic device 1 executes the second processing policy, if receiving a switching confirmation operation of the user on a pop-up box, the electronic device 1 switches the current audio to the local channel for output in response to the operation. If receiving a switching cancellation operation of the user on a pop-up box, the electronic device 1 notifies, in response to the operation, the Bluetooth headset that the Bluetooth headset channel is manually preempted (that is, preempted back) by the user, and transmits the first media audio stream to the Bluetooth headset based on the A2DP specification through the ACL link. Correspondingly, after receiving the first media audio stream, the Bluetooth headset outputs the first media audio stream, and stops outputting the second media audio stream. In addition, similar to the foregoing implementation, the Bluetooth headset sends the prompt message to the electronic device 1, to prompt that the Bluetooth headset is occupied.

FIG. 9A to FIG. 9B are respectively schematic diagrams of an application scenario of the audio control method shown in FIG. 8A and FIG. 8B. With reference to FIG. 8A and FIG. 8B, FIG. 9A, and FIG. 9B, the following describes examples of the application scenario of the audio control method provided in the third solution of this embodiment of this application.

As shown in FIG. 9A, both the electronic device 1 and the electronic device 2 establish connections to the Bluetooth headset. The electronic device 1 initiates a media service, transmits a media audio stream of a song 1 to the Bluetooth headset based on the A2DP specification through the ACL link, and outputs the media audio stream of the song 1 through the Bluetooth headset. The electronic device 1 may display an audio control interface in which a "Bluetooth Headset" option is in a selected state, to indicate that the current media audio stream is output through the Bluetooth headset. In addition, the electronic device 2 also initiates a media service, and outputs a media audio stream of a song 2 through the electronic device 2. The electronic device 2 may display an audio control interface in which a "This Device" option is in the selected state, to indicate that the current media audio stream is output through the electronic device 2.

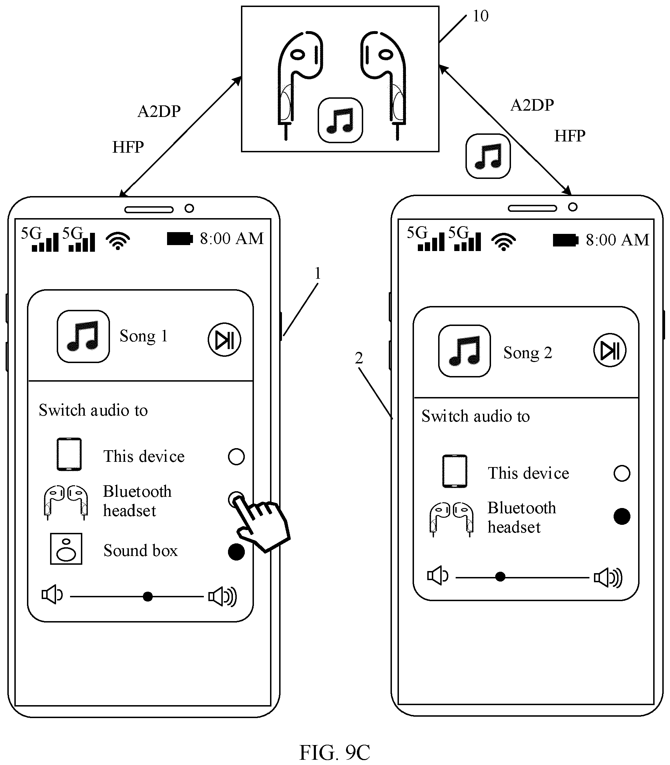

Further, if the user selects a "Bluetooth Headset" option in the audio control interface of the electronic device 2, that is, the user manually preempts the Bluetooth headset channel, as shown in FIG. 9B, the Bluetooth headset is preempted by the electronic device 2, and the electronic device 2 transmits the media audio stream of the song 2 to the Bluetooth headset through the ACL link based on the A2DP specification, that is, the song 2 may be played through the Bluetooth headset. In this case, the "Bluetooth Headset" option in the audio control interface of the electronic device 2 is in the selected state, to indicate that the current media audio stream is output through the Bluetooth headset. Because the Bluetooth headset is preempted by the electronic device 2, after determining that the current service is of a music type, the electronic device 1 that fails in preemption pauses playing the song 1. Correspondingly, none of audio output channel options in the audio control interface of the electronic device 1 is selected. In addition, the electronic device 1 may display prompt information to prompt the user to switch currently played media audio to the electronic device 1 or the sound box, for the user to select. If the user selects switching to the sound box, as shown in FIG. 9C, the electronic device 1 that fails in preemption switches the audio output channel to the sound box, and plays the song 1 through the sound box.

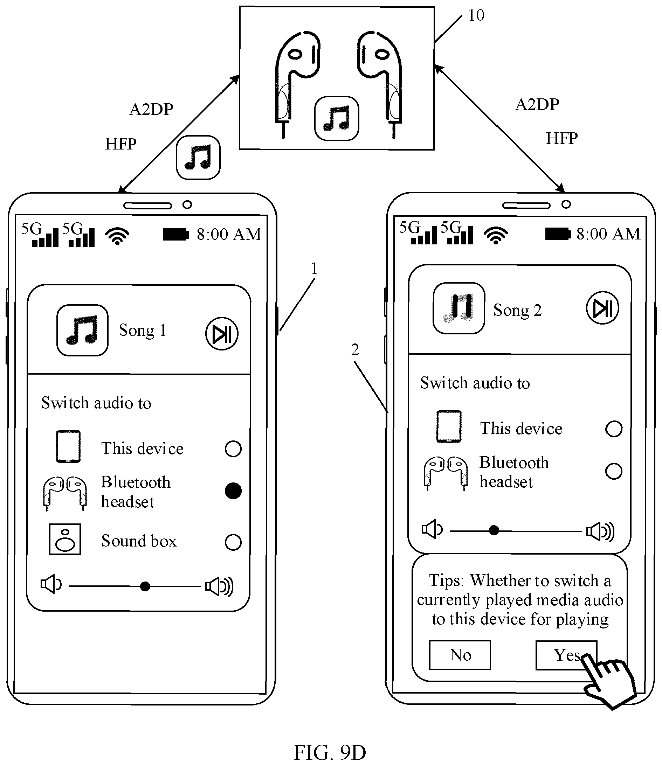

Further, as shown in FIG. 9C, if the user selects the "Bluetooth Headset" option in the audio control interface of the electronic device 1, as shown in FIG. 9D, the Bluetooth headset is preempted (preempted back) by the electronic device 1, and the electronic device 1 transmits the media audio stream of the song 1 to the Bluetooth headset through the ACL link based on the A2DP specification, and plays the song 1 through the Bluetooth headset. In this case, because the Bluetooth headset is preempted by the electronic device 1, after determining that the current service is of the music type, the electronic device 2 that fails in preemption pauses playing the song 2. Correspondingly, none of audio output channel options in the audio control interface of the electronic device 2 is selected. In addition, the electronic device 2 may display prompt information to prompt the user to switch currently played media audio to the electronic device 2, for the user to select. If the user selects switching to the electronic device 2, the electronic device 2 switches the audio output channel to the electronic device 2 in response to the user operation, and plays the song 2 through the electronic device 2. If the user cancels switching to the electronic device 2, the electronic device 2 switches the audio output channel back to the Bluetooth headset (that is, preempts back) in response to the user operation, and plays the song 2 through the Bluetooth headset.

The "Bluetooth Headset" option in the audio control interface of the electronic device 1 is in the selected state, to indicate that the current song is played through the Bluetooth headset. The "This Device" option in the audio control interface of the electronic device 2 is in the selected state, to indicate that the current media audio stream is output through the electronic device 2. Therefore, the user may manually preempt the Bluetooth headset channel based on the actual requirement, to trigger the Bluetooth headset to switch the audio service. It can be learned from the third solution that the Bluetooth device follows the preemption policy of user operation preferred.

### The second scenario: the service concurrency scenario of [a media service and a call service]

In the second scenario, it is assumed that the electronic device 1 first initiates a media service, and the electronic device 2 initiates a call service later. Because a priority of the call service is higher than that of the media service, the preemption policy is that the headset channel is first preempted by the call service. It should be noted that, similar to the descriptions of the first scenario based on the first solution, the second solution, and the third solution, the following also describes the second scenario as an example based on the first solution, the second solution, and the third solution.

### <The first solution>

The following first describes an audio control method implemented based on the first solution in the second scenario. In a process of implementing the audio control method based on the first solution, the A2DP specification may be deactivated/reactivated. Therefore, the Bluetooth headset may properly switch audio services of different electronic devices in a case of service concurrency, and it can be ensured that audio streams are output normally.

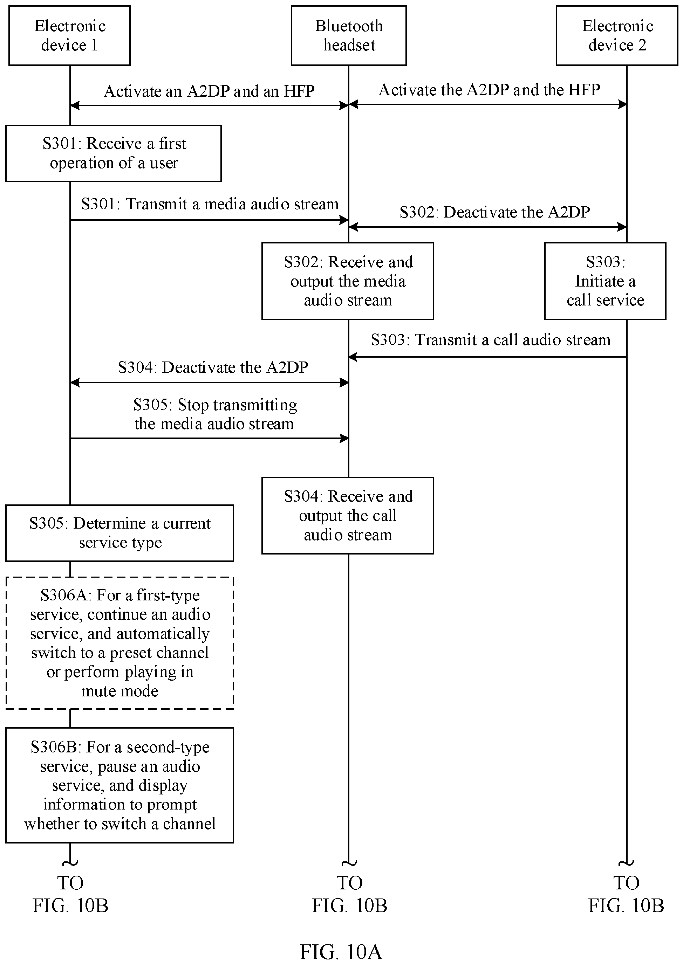

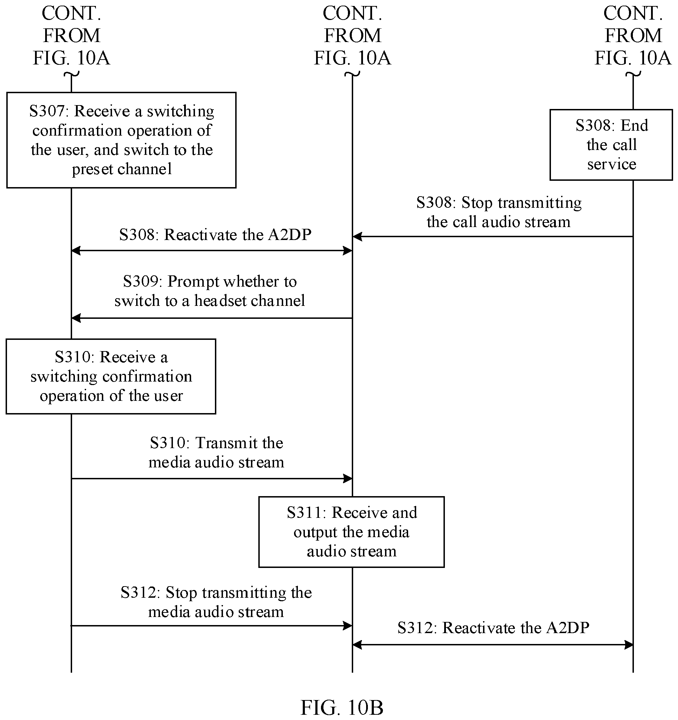

FIG. 10A and FIG. 10B are a schematic flowchart of switching an audio service by the Bluetooth headset based on the first solution when the Bluetooth headset is connected to both the electronic device 1 and the electronic device 2. As shown in FIG. 10A and FIG. 10B, the A2DP specification and the HFP specification are activated between the Bluetooth headset and both the electronic device 1 and the electronic device 2. An initial state of the Bluetooth headset is the idle state. As shown in FIG. 10A and FIG. 10B, the audio control method may include the following steps S301 to S304.

S301: The electronic device 1 receives a first operation of the user, and transmits a media audio stream to the Bluetooth headset in response to the first operation.

S302: The Bluetooth headset receives and outputs the media audio stream, and deactivates the A2DP specification between the Bluetooth headset and the electronic device 2.

For descriptions of steps S301 to S302, refer to the descriptions of steps S201 to S202 in FIG. 4. Details are not described herein again.

When the electronic device 1 receives the first operation (for example, tapping a media application icon) of the user, the electronic device 1 initiates a media service in response to the first operation, and transmits the media audio stream of the media service to the Bluetooth headset based on the A2DP specification through the ACL link. Correspondingly, after receiving the media audio stream, the Bluetooth headset outputs the media audio stream, for example, plays music, and deactivates the A2DP specification between the Bluetooth headset and the electronic device 2.

S303: The electronic device 2 initiates a call service, and transmits a call audio stream of the call service to the Bluetooth headset.

Optionally, the call service may include answering a call or making a call, a video call, a voice call, or the like, and may further include another possible call service.

S304: The Bluetooth headset receives and outputs the call audio stream, and deactivates the A2DP specification between the Bluetooth headset and the electronic device 1.

Optionally, after step S304, the audio control method further includes the following steps S305 to S312.

S305: The electronic device 1 stops transmitting the media audio stream to the Bluetooth headset, and determines a type of the currently processed audio service.

S306A: If the currently processed audio service is a first-type service, the electronic device 1 continues to process the current audio service, and automatically switches to a secondary sound output channel or performs playing in mute mode. Optionally, in this case, the electronic device 1 may display a prompt message to prompt the user that an audio output channel has been switched to the secondary sound output channel (for example, the local channel).

S306B: If the currently processed audio service is a second-type service, the electronic device 1 pauses processing the current audio service, and displays a message to prompt the user whether to switch to a secondary sound output channel (for example, the local channel).

It should be noted that, for steps S306A and S306B, the electronic device 1 selects one to perform. For descriptions of steps S305 to S306B, refer to the related descriptions in FIG. 8A and FIG. 8B. Details are not described herein again.

S307: The electronic device 1 receives a confirmation operation of the user for triggering switching to the secondary sound output channel, and switches the audio output channel to the secondary sound output channel. Then, the electronic device 1 outputs a first media audio stream through the secondary sound output channel.

In another possible case, the electronic device 1 receives a cancellation operation of the user for triggering cancellation of switching to the secondary sound output channel, sends a notification message to the Bluetooth headset to indicate the user to manually preempt the Bluetooth headset channel, and transmits the first media audio stream to the Bluetooth headset.

When the Bluetooth headset is occupied by the electronic device 1, if the electronic device 2 initiates the call service, the electronic device 2 transmits the call audio stream to the Bluetooth headset based on the HFP specification through an SCO link. That is, when the Bluetooth headset processes the media service initiated by the electronic device 1, if the electronic device 2 initiates the call service later, the electronic device 2 may preempt the Bluetooth headset. In this case, the Bluetooth headset may output the call audio stream, and deactivate the A2DP specification between the Bluetooth headset and the electronic device 1. Correspondingly, the electronic device 1 stops transmitting the call audio stream to the Bluetooth headset, determines the type of the currently processed media service, and determines, based on the service type, whether to continue the current service or pause the current service. Like the first processing policy and the second processing policy in the foregoing first scenario: For a first-type service, the audio service is continued, and the electronic device 1 automatically switches to the local channel or performs playing in mute mode. For a second-type service, the electronic device 1 pauses the audio service, and displays prompt information to indicate whether to switch to the local channel. If the electronic device 1 receives a second operation of the user for confirming switching to the local channel, the electronic device 1 switches audio to the local channel, and then the electronic device 1 outputs the media audio stream through the electronic device 1. Compared with the case in which audio streams cannot be output normally in the case of service concurrency in the related technology, in this embodiment of this application, it can be ensured that audio streams are all output in the case of service concurrency, so that an audio playback effect in the case of service concurrency when a plurality of electronic devices share the Bluetooth headset can be improved.

S308: The Bluetooth headset activates the A2DP specification between the Bluetooth headset and the electronic device 1 when the electronic device 2 ends the call service and stops transmitting the call audio stream to the Bluetooth headset.

S309: The Bluetooth device sends a prompt message to the electronic device 1, and the electronic device 2 receives and displays the prompt message.

The prompt message is used to indicate whether to switch the audio output channel to the Bluetooth headset. For example, the prompt message is in a form of a prompt box, and the prompt message may include a confirm option for confirming switching to the Bluetooth headset and a cancel option for canceling switching to the Bluetooth headset.

S310: The electronic device 1 receives a switching confirmation operation of the user on the second prompt message, and transmits the media audio stream to the Bluetooth headset in response to the operation.

The switching confirmation operation is used to trigger switching of the audio output channel to the Bluetooth headset. For example, the switching confirmation operation may be an operation of the user on the confirm option.

S311: The Bluetooth device receives and outputs a second media audio stream.

S312: The Bluetooth headset activates the A2DP specification between the Bluetooth headset and the electronic device 2 when the electronic device 1 ends the media service and stops transmitting the call audio stream to the Bluetooth headset.

When the electronic device 2 ends the call service and stops transmitting the call audio stream to the Bluetooth headset, the Bluetooth headset is in the idle state, and the Bluetooth headset may perform audio service switching according to any one of the following audio service switching policies.

Policy 1: Switch automatically. When the Bluetooth headset is in the idle state, the Bluetooth headset may query whether the electronic device 1 currently has an audio service. If the Bluetooth headset learns that the electronic device 1 currently has an audio service, the Bluetooth headset may reactivate the A2DP specification between the Bluetooth headset and the electronic device 1, and then the electronic device 1 transmits a media audio stream to the Bluetooth headset based on the A2DP specification through the ACL link. Correspondingly, the Bluetooth headset outputs the media audio stream after receiving the media audio stream. In Policy 1, the Bluetooth headset may intelligently switch to process the media service and the call service that are initiated by the two electronic devices, so that the audio playback effect when a plurality of electronic devices share the Bluetooth headset can be improved. Compared with the solution in which manual switching of the user is required in the technical solution, in the solution provided in this embodiment of this application, when the headset is normally in the idle state, both mobile phones can freely initiate services, and manual switching is not required.

Policy two: Switch based on a user requirement. When the Bluetooth headset is in the idle state, the Bluetooth headset may send a message to the electronic device 1, to indicate whether to switch audio to the Bluetooth headset, and the electronic device 1 receives the switching confirmation operation of the user. Further, the A2DP specification may be reactivated between the Bluetooth headset and the electronic device 1. The following describes three possible implementations of how to activate the A2DP specification.

In a possible implementation, if the electronic device 1 receives the switching confirmation operation, the electronic device 1 feeds back, to the Bluetooth headset, that the electronic device 1 confirms to switch the audio to the Bluetooth headset, so that the Bluetooth headset activates the A2DP specification between the Bluetooth headset and the electronic device 1. Then, the electronic device 1 transmits the media audio stream to the Bluetooth headset based on the A2DP specification through the ACL link. Correspondingly, the Bluetooth headset outputs the media audio stream after receiving the media audio stream.

In another possible implementation, if the electronic device 1 receives the switching confirmation operation, the electronic device activates the A2DP specification between the Bluetooth headset and the electronic device 1, and then transmits the media audio stream to the Bluetooth headset based on the A2DP specification through the ACL link. Correspondingly, the Bluetooth headset outputs the media audio stream after receiving the media audio stream.

In still another possible implementation, once the Bluetooth headset is in the idle state, the Bluetooth headset automatically activates the A2DP specification between the Bluetooth headset and the electronic device 1, without waiting for a confirmation of the user for audio switching to the Bluetooth headset. Therefore, the Bluetooth headset in the idle state keeps the A2DP connections to both the electronic device 1 and the electronic device 2. Then, the Bluetooth headset can process an audio service initiated by any electronic device in Bluetooth connection at any time. Further, as shown in FIG. 10A and FIG. 10B, if the electronic device 1 stops transmitting the media audio stream to the Bluetooth headset, for example, the user taps a pause control to trigger stopping of music playback, or music is automatically stopped after ending, or the user takes off the Bluetooth headset to trigger the Bluetooth headset to stop playing music, the Bluetooth headset is in the idle state. Once the Bluetooth headset is in the idle state, the Bluetooth headset automatically activates the A2DP specification between the Bluetooth headset and the electronic device 2, without waiting for a confirmation of the user for audio switching to the Bluetooth headset.

In Policy 2, the Bluetooth headset may switch, based on an actual requirement of the user, to process the media service and the call service that are separately initiated by the two electronic devices. Such an audio service switching policy can meet the actual use requirement of the user, and improve user experience.

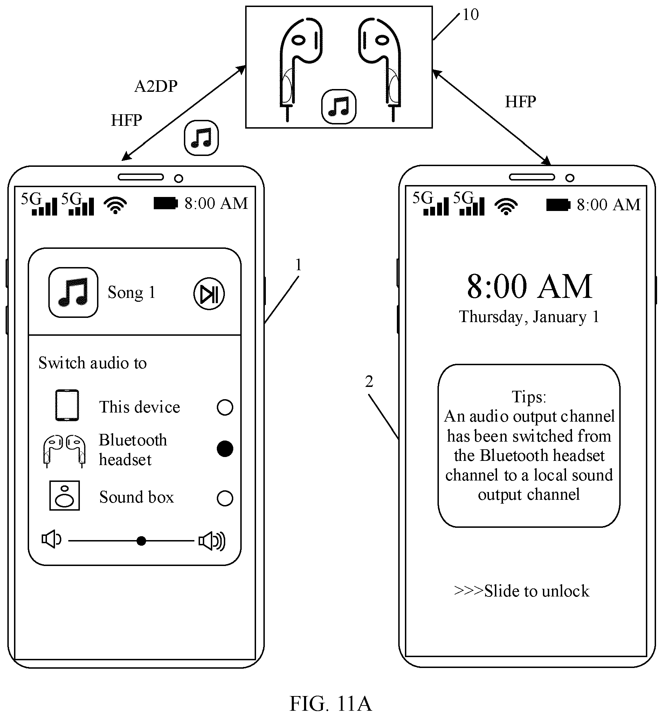

FIG. 11A to FIG. 11E are respectively schematic diagrams of an application scenario of the audio control method shown in FIG. 10A and FIG. 10B. With reference to FIG. 10A and FIG. 10B and FIG. 11A to FIG. 11E, the following describes examples of the application scenario of the audio control method provided in this embodiment of this application.

As shown in FIG. 11A, if the user performs an operation on the electronic device 1 to trigger playback of a song 1, the electronic device 1 initiates a media service in response to the operation of the user, and transmits a media audio stream of the song 1 to the Bluetooth headset based on the A2DP specification through the ACL link. The A2DP specification is deactivated between the Bluetooth headset and the electronic device 2. As shown in FIG. 11A, the electronic device 1 may display an audio control interface in which a "Bluetooth Headset" option is in a selected state, so that the user may learn that the audio stream of the electronic device 1 is currently output through the Bluetooth headset.

It should be noted that the audio control interface may be an interface displayed when the screen of the electronic device 1 is in a locked state, or may be an interface displayed when the screen of the electronic device 1 is in an unlocked state. It should be further noted that the electronic device 2 currently has no audio service, and may be in a screen-on state, or may be in a screen-off state. In this case, the electronic device 2 may display a prompt message to indicate that the audio output channel has been switched from the Bluetooth headset channel to the local sound output channel.

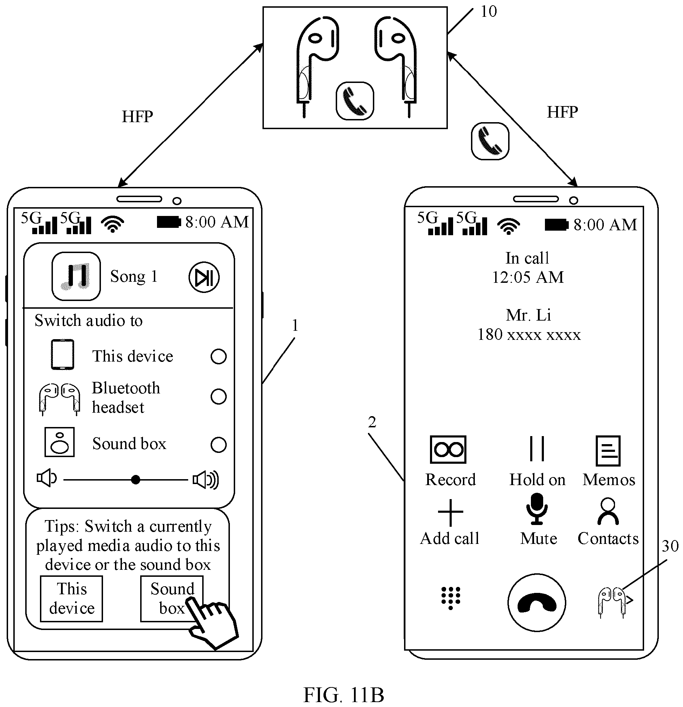

Further, as shown in FIG. 11B, if the electronic device 2 initiates a call service, for example, answering a call or making a call, the electronic device 2 preempts the Bluetooth headset, and outputs a call audio stream through the Bluetooth headset. As shown in FIG. 11B, the electronic device 2 may display a call control interface, including but not limited to a "Bluetooth Headset" option 30. The "Bluetooth Headset" option 30 is used to indicate that a call voice of the electronic device 2 is currently output through the Bluetooth headset. Correspondingly, the electronic device 1 determines that the currently processed media service is a second-type service, and therefore pauses the media service (pauses playing the song 1). In addition, the electronic device 1 may display prompt information to prompt the user whether to switch currently played media audio to the electronic device 1 or the sound box for playing. If the user selects "Sound Box" to confirm to switch the audio to the sound box for playing, the electronic device 1 may play the song 1 through the sound box in response to the operation of the user.

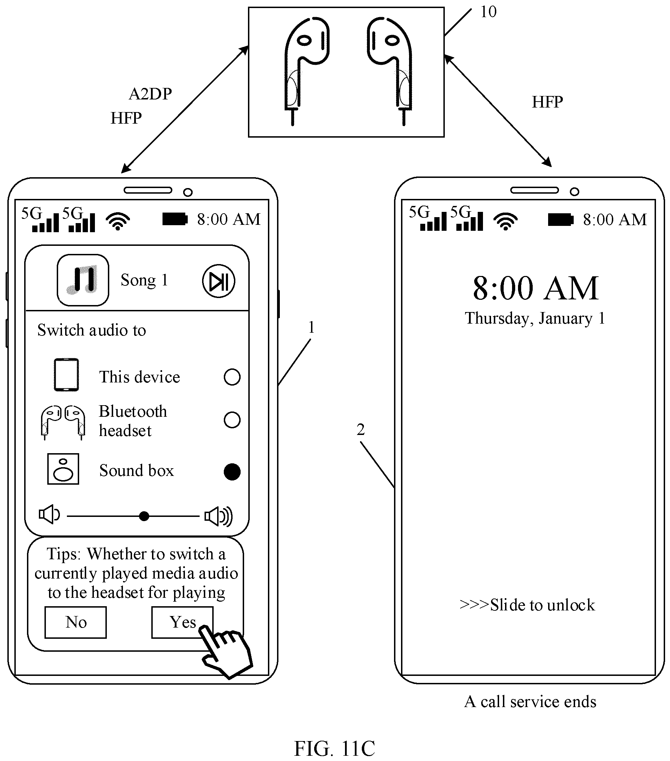

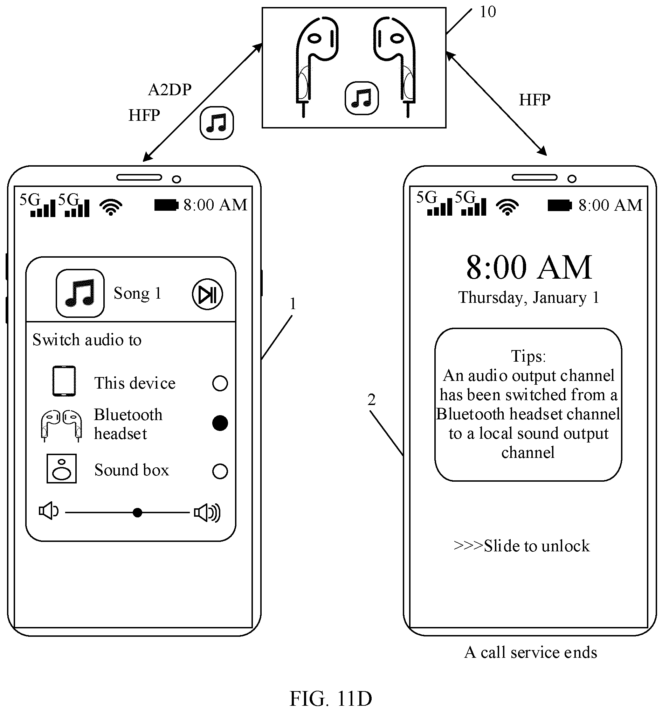

Further, as shown in FIG. 11C, if the call service of the electronic device 2 ends, the electronic device 2 stops transmitting the call audio stream to the Bluetooth headset. In this case, the Bluetooth headset is in the idle state, and the A2DP specification may be reactivated between the Bluetooth headset and the electronic device 1. Further, the Bluetooth headset may send a message to the electronic device 1 to indicate whether to switch the currently played media audio to the headset for playing. Correspondingly, the electronic device 1 may display the prompt message. If the user selects "yes" to confirm to switch the audio to the headset for playing, as shown in FIG. 11D, in response to the operation of the user, the electronic device 1 transmits the media audio stream of the song 1 to the Bluetooth headset based on the A2DP specification through the ACL link.

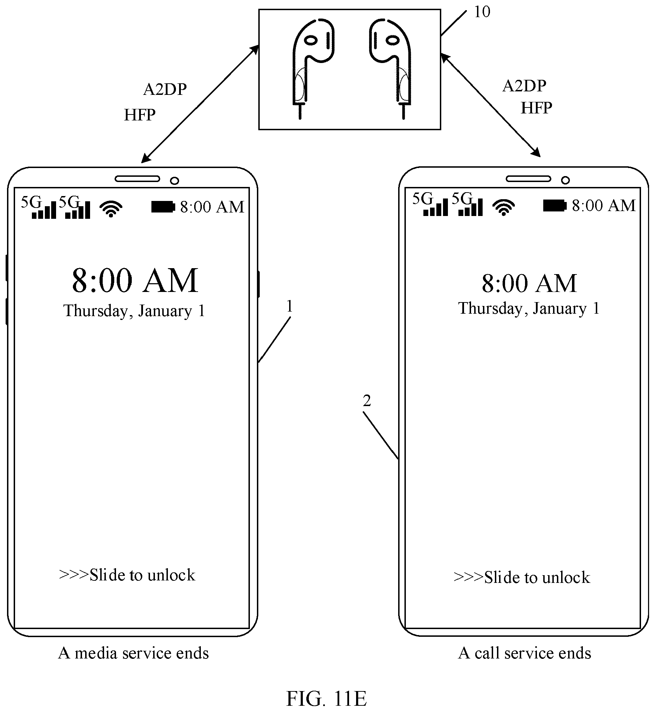

Further, as shown in FIG. 11E, if the media service of the electronic device 1 ends, the electronic device 1 stops transmitting the media audio stream to the Bluetooth headset. In this case, because neither the electronic device 1 nor the electronic device 2 has an audio service, the Bluetooth headset returns to the idle state. In this case, the Bluetooth headset may reactivate the A2DP specification between the Bluetooth headset and the electronic device 1. Therefore, the Bluetooth headset in the idle state keeps the A2DP connections and the HFP connections to both the electronic device 1 and the electronic device 2, and the Bluetooth headset may process an audio service initiated by any electronic device in Bluetooth connection at any time.

In conclusion, in the first solution, when the electronic device 1 and the headset are in an audio service, and the headset interrupts the A2DP connection to the electronic device 2, the electronic device 2 may still receive an incoming call notification on the headset when receiving an incoming call because the HFP connection between the headset and the electronic device 2 is not interrupted. After the call is answered through the headset, the A2DP connection between the headset and the electronic device 1 is actively interrupted. After the call ends, the headset reestablishes an A2DP connection to the electronic device 1, and resumes the audio service. Most video applications and games are not paused after the A2DP connection is interrupted. Therefore, after A2DP reestablishment, whether to initiate a play instruction needs to be determined. A feasible method is that, after A2DP reestablishment succeeds, the headset detects whether a mobile phone actively initiates A2DP, and if the mobile phone does not actively initiate A2DP, the headset initiates A2DP, so as to avoid playback of music on the mobile phone due to initiation of a play instruction in a game.

Compared with the case in which an audio stream is swallowed in the case of service concurrency in the related technology, in the solution provided in this embodiment of this application, when a mobile phone is in a headset service, if another mobile phone initiates an audio service, sounds may be output normally on the mobile phone, and the sounds of the service may not be swallowed by the headset (for example, audio that cannot be paused, like a video or a prompt tone). A problem that playback cannot be started (for example, music may be transmitted to Bluetooth but is quickly paused) can be solved. When a video or game service of a mobile phone fails in preemption with a voice service, music will not be woken up when a voice ends.

<The second solution> The following further describes an audio control method implemented based on the second solution in the second scenario. In a process of implementing the audio control method based on the second solution, the A2DP specification does not need to be deactivated/reactivated, but the Bluetooth headset sends a message to the electronic device that fails in preemption to notify that the Bluetooth headset is preempted, so that the electronic device disables the Bluetooth headset channel based on the notification message, and automatically switches to the secondary sound output channel. Therefore, the Bluetooth headset may properly switch audio services of different electronic devices in the case of service concurrency, and it can be ensured that audio streams are output normally.

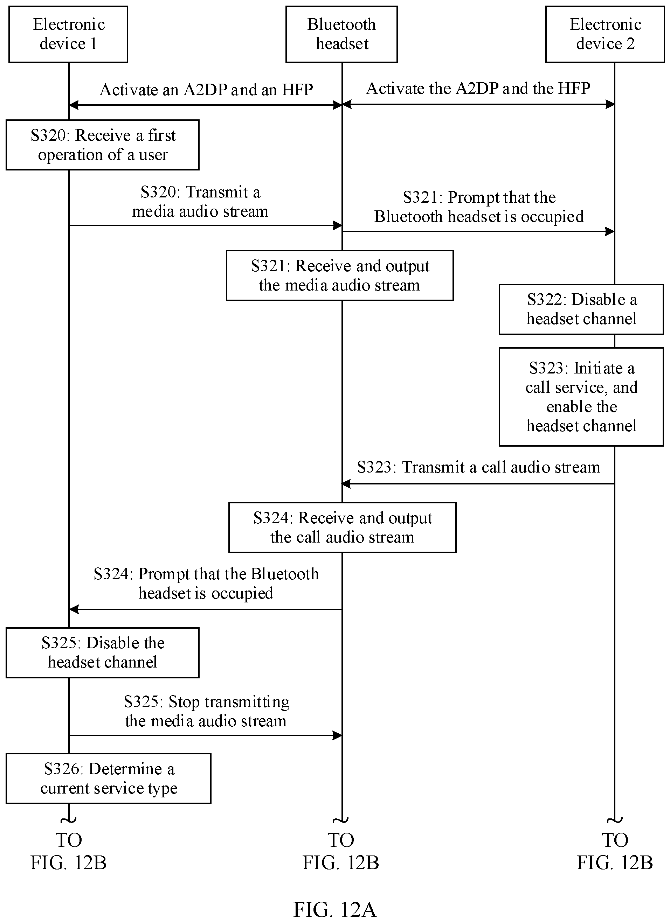

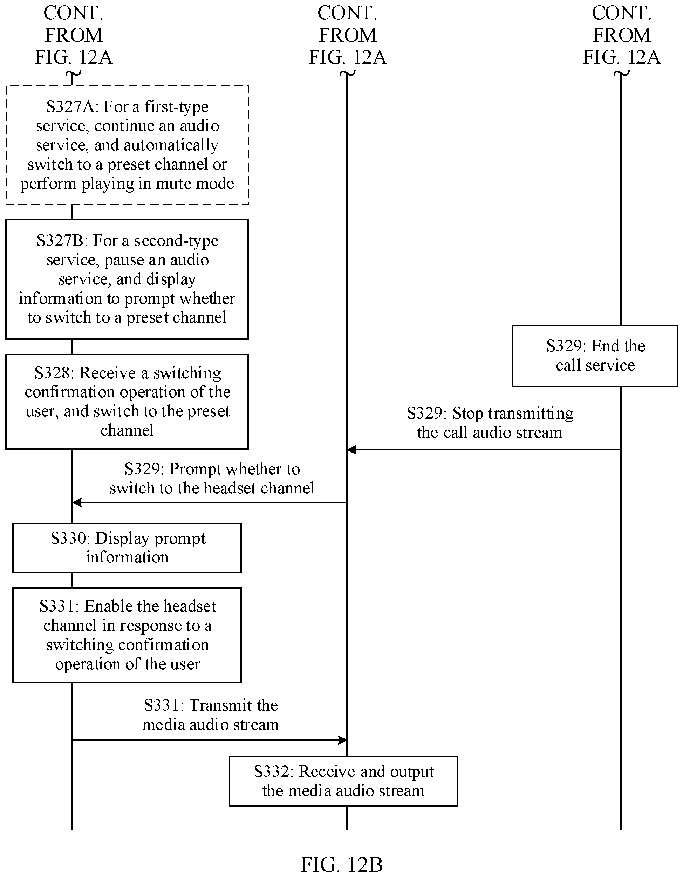

FIG. 12A and FIG. 12B are a schematic flowchart of switching an audio service by the Bluetooth headset based on the second solution when the Bluetooth headset is connected to both the electronic device 1 and the electronic device 2. As shown in FIG. 12A and FIG. 12B, the A2DP specification and the HFP specification are activated between the Bluetooth headset and both the electronic device 1 and the electronic device 2. As shown in FIG. 12A and FIG. 12B, the audio control method may include the following steps S320 to S324. For descriptions of steps S320 to S321, refer to the related descriptions in FIG. 8A and FIG. 8B. Details are not described herein again.

S322: The electronic device 2 receives the prompt message, and disables the Bluetooth headset channel, or switches the audio channel from the headset channel to a secondary sound output channel. Optionally, the electronic device 2 may display the prompt message.

S323: The electronic device 2 initiates a call service, and transmits a call audio stream of the call service to the Bluetooth headset.

S324: The Bluetooth headset receives and outputs the call audio stream.

Optionally, after step S324, the audio control method further includes the following steps S325 to S332. It should be noted that, for descriptions of steps S325 to S332, refer to the related descriptions in FIG. 8A and FIG. 8B. Details are not described herein again.

It should be noted that a difference of FIG. 12A and FIG. 12B from FIG. 10A and FIG. 10B lies in that there is no need to deactivate the A2DP specification between the Bluetooth headset and the electronic device 1 and also no need to reactivate the deactivated A2DP specification. In FIG. 12A and FIG. 12B, the party that fails in preemption is indicated, in a form of a notification message, to disable the Bluetooth headset channel.

When the electronic device 1 receives the first operation of the user, the electronic device 1 initiates the media audio stream corresponding to the media application icon in response to the first operation, and transmits the media audio stream to the Bluetooth headset based on the A2DP specification through the ACL link. Correspondingly, the Bluetooth headset outputs the media audio stream after receiving the media audio stream.

The Bluetooth headset sends the prompt message to the electronic device 2, to prompt that the Bluetooth headset is occupied. After receiving the prompt message, the electronic device 2 disables the Bluetooth headset channel, and automatically switches to the secondary sound output channel (for example, the electronic device 2). Further, when the Bluetooth headset is occupied by the electronic device 1, if the electronic device 2 initiates the call service, for example, answering a call or making a call, the electronic device 1 transmits the call audio stream to the Bluetooth headset based on the HFP specification through the SCO link. That is, when the Bluetooth headset processes the media service initiated by the electronic device 1, if the electronic device 2 initiates the call service later, the electronic device 2 may preempt the Bluetooth headset. In this case, the Bluetooth headset may output the call audio stream, and send the prompt message to the electronic device 1, to prompt that the Bluetooth headset is occupied. Correspondingly, the electronic device 1 receives the prompt message, disables the Bluetooth headset channel based on the prompt message, and stops transmitting the media audio stream to the Bluetooth headset. In this case, the electronic device 1 may determine the type of the currently processed media service, and then determine, based on the service type, whether to continue the current service or suspend the current service. Like the first processing policy and the second processing policy in the foregoing first scenario: For a first-type service, the electronic device 1 continues the audio service, and automatically switches audio to the electronic device 1 or performs playing in mute mode. For a second-type service, the electronic device 1 pauses the audio service, and displays prompt information to indicate whether to switch to the local channel. If the electronic device 1 receives the second operation of the user for confirming switching to the local channel, the electronic device 1 switches the audio to the local channel, and then the electronic device 1 outputs the media audio stream through the electronic device 1. Compared with the case in which audio streams cannot be output normally in the case of service concurrency in the related technology, in this embodiment of this application, it can be ensured that audio streams are all output in the case of service concurrency, so that an audio playback effect in the case of service concurrency when a plurality of electronic devices share the Bluetooth headset can be improved.

Further, as shown in FIG. 12A and FIG. 12B, when the electronic device 2 ends the call service and stops transmitting the call audio stream to the Bluetooth headset, the Bluetooth headset is in the idle state. In this case, the Bluetooth headset may perform audio service switching according to any one of the following audio service switching policies.

Policy 1: Switch automatically. When the Bluetooth headset is in the idle state, the Bluetooth headset may send the prompt message to the electronic device 1 to prompt that the Bluetooth headset is currently available. After receiving the notification message, the electronic device 1 may automatically switch the audio to the Bluetooth headset channel, and transmit the media audio stream to the Bluetooth headset based on the A2DP specification through the ACL link. Correspondingly, the Bluetooth headset outputs the media audio stream after receiving the media audio stream. In Policy 1, the Bluetooth headset may intelligently switch to process the media service and the call service that are initiated by the two electronic devices, so that the audio playback effect when a plurality of electronic devices share the Bluetooth headset can be improved.

Policy two: Switch based on a user requirement. When the Bluetooth headset is in the idle state, the Bluetooth headset may send the prompt message to the electronic device 1, to indicate whether to switch audio to the Bluetooth headset. After receiving the prompt message, the electronic device 1 displays the prompt message. If receiving the switching confirmation operation of the user, the electronic device 1 switches the audio to the Bluetooth headset channel (that is, enables the Bluetooth headset channel), and transmits the media audio stream to the Bluetooth headset based on the A2DP specification through the ACL link. In Policy 2, the Bluetooth headset may switch, based on the actual requirement of the user, to process the media service and the call service that are separately initiated by the two electronic devices. Such an audio service switching policy can meet the actual use requirement of the user, and improve user experience.

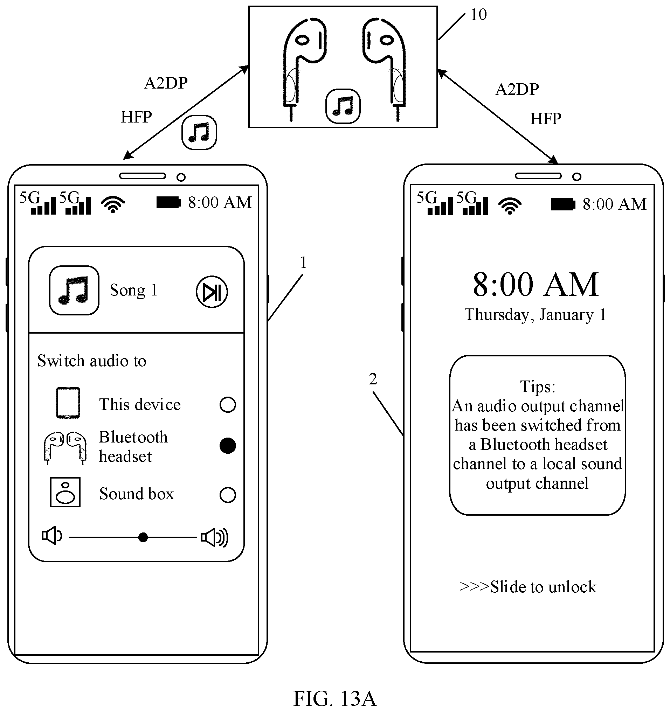

FIG. 13A to FIG. 13D are respectively schematic diagrams of an application scenario of the audio control method shown in FIG. 12A and FIG. 12B. With reference to FIG. 12A and FIG. 12B and FIG. 13A to FIG. 13D, the following describes examples of the application scenario of the audio control method provided in this embodiment of this application.

As shown in FIG. 13A, if the user taps a media application icon on the electronic device 1 to trigger playback of a song 1, the electronic device 1 transmits, in response to the operation of the user, a media audio stream of the song 1 to the Bluetooth headset based on the A2DP specification through the ACL link. The A2DP specification does not need to be deactivated between the Bluetooth headset and the electronic device 2. The electronic device 1 may display an audio control interface in which a "Bluetooth Headset" option is in a selected state, so that the user may learn that the audio stream of the electronic device 1 is currently output through the Bluetooth headset. When the Bluetooth headset is occupied by the electronic device 1, the electronic device 2 is indicated to disable the Bluetooth headset. For example, the electronic device 2 may switch the audio output channel to the preset secondary sound output channel. In this case, the electronic device 2 may be currently in a screen-on state, or may be in a screen-off state. In this case, the electronic device 2 may display a prompt message to indicate that the audio output channel has been switched from the Bluetooth headset channel to the local sound output channel.

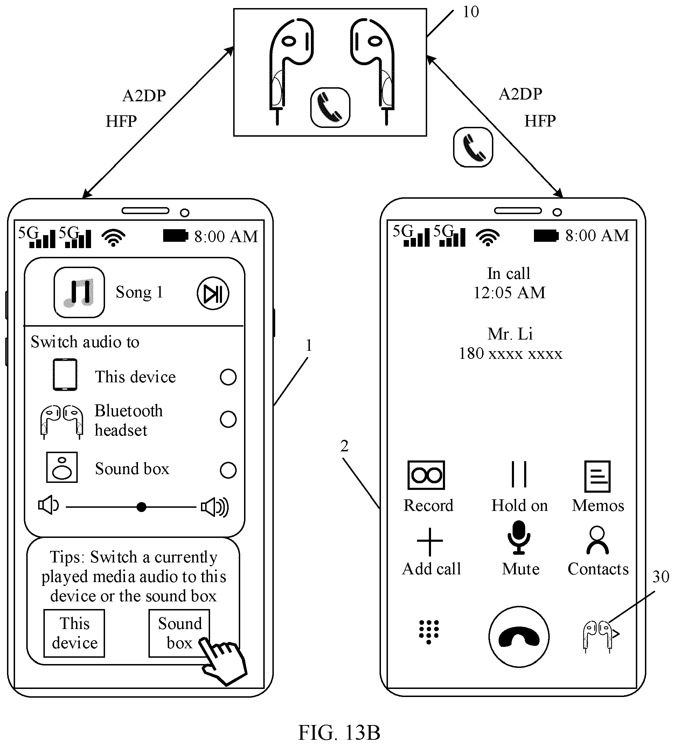

Further, as shown in FIG. 13B, if the electronic device 2 initiates a call service, for example, answering a call or making a call, the electronic device 2 preempts the Bluetooth headset, and outputs a call audio stream through the Bluetooth headset. The A2DP specification does not need to be deactivated between the Bluetooth headset and the electronic device 1. The electronic device 2 may display a call control interface, including but not limited to a headset identifier 40. The headset identifier 40 is used to indicate that a call voice of the electronic device 2 is currently output through the Bluetooth headset. Correspondingly, the electronic device 1 determines that the currently processed media service is a second-type service, and therefore pauses the media service (pauses playing the song 1). In addition, the electronic device 1 may display prompt information to prompt the user whether to switch currently played media audio to the electronic device 1 or the sound box for playing. If the user selects "Sound Box" to confirm to switch the audio to the sound box for playing, the electronic device 1 may play the song 1 through the sound box in response to the operation of the user.

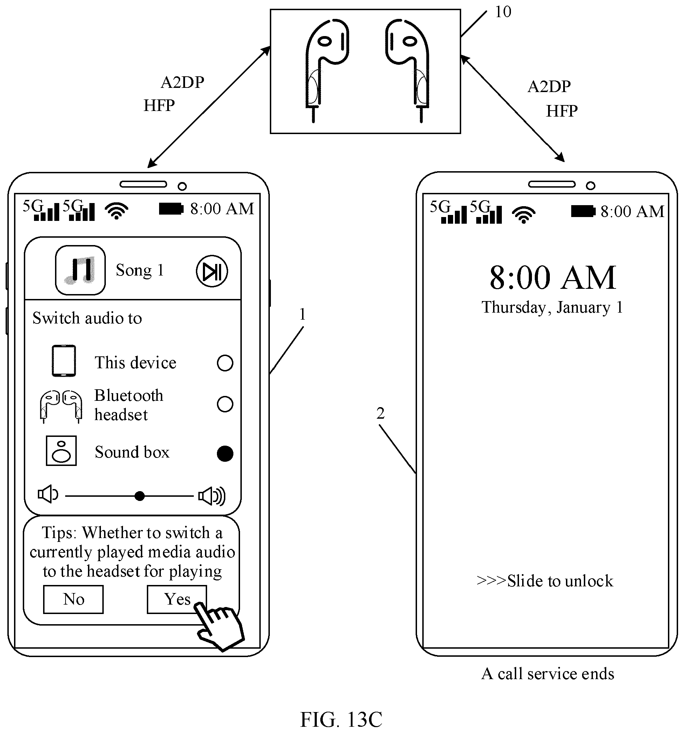

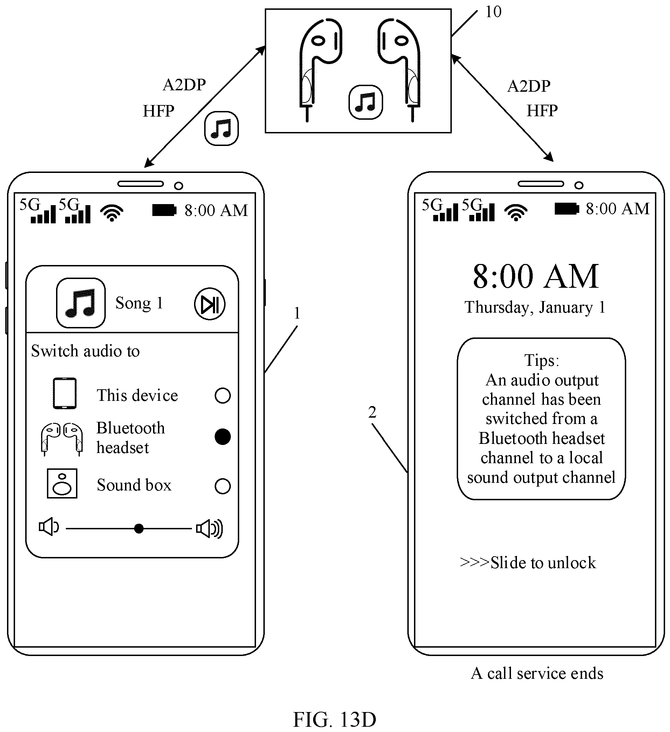

Further, as shown in FIG. 13C, if the call service of the electronic device 2 ends, the electronic device 2 stops transmitting the call audio stream to the Bluetooth headset. In this case, the Bluetooth headset is in the idle state. The Bluetooth headset may prompt the electronic device 1 whether to switch the currently played media audio to the headset for playing. Correspondingly, the electronic device 1 may display the prompt information. If the user selects "yes" to confirm to switch the audio to the headset for playing, as shown in FIG. 13D, in response to the operation of the user, the electronic device 1 transmits the media audio stream of the song 1 to the Bluetooth headset based on the A2DP specification through the ACL link. In this case, the electronic device 2 may display a prompt message to indicate that the audio output channel has been switched from the Bluetooth headset channel to the local sound output channel.

Further, if the electronic device 1 stops the media service, the electronic device 1 stops transmitting the media audio stream to the Bluetooth headset. In this case, because neither the electronic device 1 nor the electronic device 2 has an audio service, the Bluetooth headset returns to the idle state. In this case, the Bluetooth headset in the idle state keeps the A2DP connections and the HFP connections to both the electronic device 1 and the electronic device 2.

### <The third solution>

The following further describes an audio control method implemented based on the third solution in the second scenario. In a process of implementing the audio control method based on the third solution, the Bluetooth headset may be "preempted back" based on a user operation. Therefore, the Bluetooth headset may properly switch audio services of different electronic devices in the case of service concurrency, and it can be ensured that audio streams are output normally.

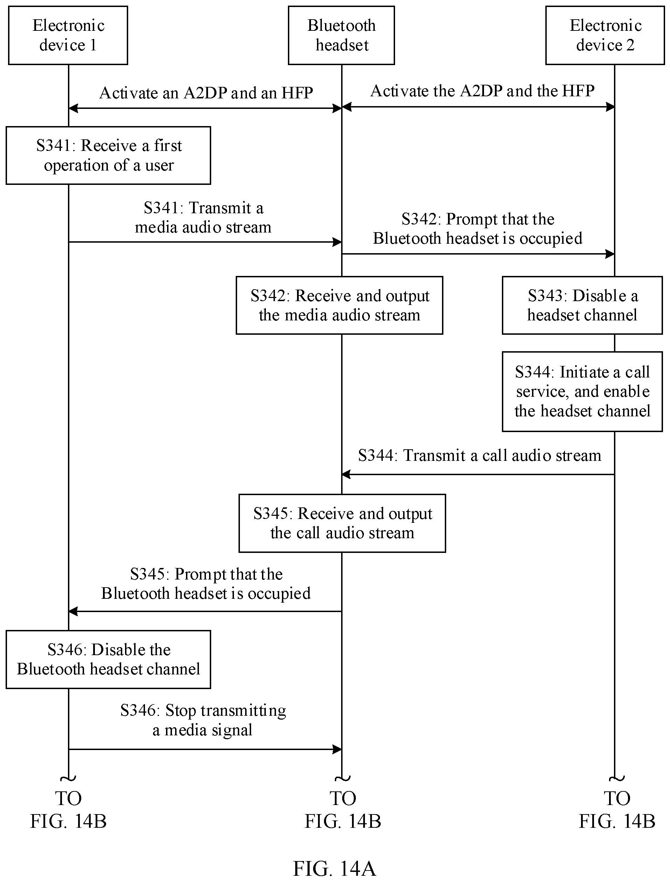

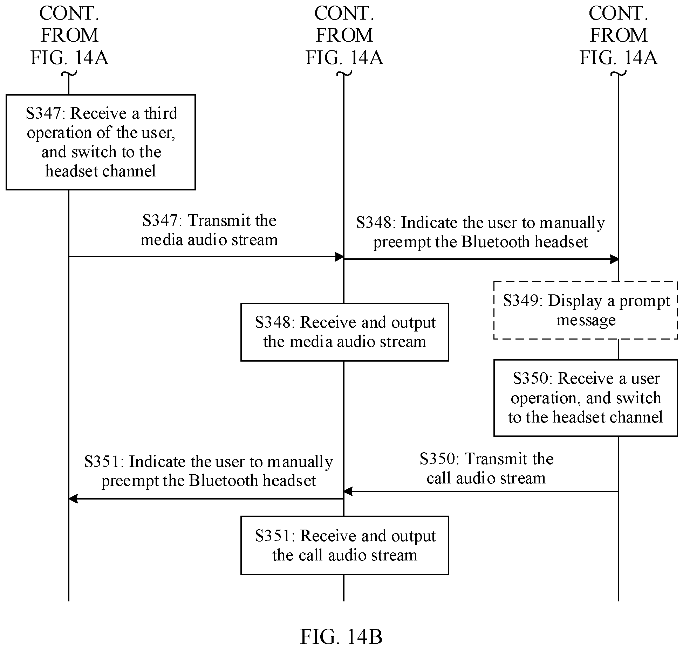

FIG. 14A and FIG. 14B are a schematic flowchart of switching an audio service by the Bluetooth headset based on the third solution when the Bluetooth headset is connected to both the electronic device 1 and the electronic device 2. With reference to FIG. 12A and FIG. 12B, as shown in FIG. 14A and FIG. 14B, the A2DP specification and the HFP specification are activated between the Bluetooth headset and both the electronic device 1 and the electronic device 2. As shown in FIG. 14A and FIG. 14B, the audio control method may include the following steps S341 to S351. For descriptions of steps S341 to S346, refer to the related descriptions in FIG. 12A and FIG. 12B. Details are not described herein again.

S347: The electronic device 1 receives a user operation, enables the Bluetooth headset channel in response to the user operation, and transmits the media audio stream to the Bluetooth headset.

In a process in which the electronic device 1 has initiated playback of a voice or a media service, the electronic device 1 pops up an audio control interface in response to a user operation (for example, a drop-down list or a status bar). Alternatively, the electronic device 1 may pop up an audio control interface in response to a user operation such as an on-demand audio or video service. The audio control interface includes an audio channel currently available to the electronic device 1, for example, includes audio channels such as a "This Device" option and a "Bluetooth Headset" option. If the electronic device 1 receives a selection operation (that is, the foregoing user operation) of the user on "Bluetooth Headset", the electronic device 1 may enable the Bluetooth headset channel.

S348: The Bluetooth headset receives and outputs the media audio stream, and sends a prompt message to the electronic device 2, to indicate the user to manually preempt the Bluetooth headset channel.

S349: The electronic device 2 displays the prompt message.

S350: The electronic device 2 receives a user operation, switches the Bluetooth headset channel in response to the user operation, and transmits the call audio stream to the Bluetooth headset.

S351: The Bluetooth device receives and transmits the call audio stream, and sends a prompt message to the electronic device 1, to indicate the user to manually preempt the Bluetooth headset channel.

Similar to the second solution, the electronic device 1 first initiates the media service to preempt the Bluetooth headset. Then, the electronic device 2 initiates the call service, and directly preempts the Bluetooth headset. In this case, the electronic device 1 may determine the type of the currently processed media service, and then determine, based on the service type, whether to continue the current service or suspend the current service.

In the third solution, if the electronic device 1 receives a third operation of the user for selecting the "Bluetooth Headset" option in the audio control interface, the electronic device 1 may switch audio to the Bluetooth headset channel, that is, "preempt back" the Bluetooth headset channel, so that the electronic device 1 may output the media audio stream through the Bluetooth headset. In addition, the Bluetooth headset sends a prompt message to the electronic device 2, to prompt that the Bluetooth headset is manually preempted by the user, and ask the user whether to agree to switch the audio to a local headset channel. Correspondingly, the electronic device 2 receives the prompt message, displays a pop-up box prompt, and stops outputting the call audio stream to the Bluetooth headset. Further optionally, if the electronic device 1 receives a fourth operation that the user does not agree to switch the audio to the local channel, the electronic device 2 may switch the audio to the Bluetooth headset channel, that is, "preempt back" the Bluetooth headset channel, and then the electronic device 2 transmits the call audio stream to the Bluetooth headset based on the HFP specification through the SCO link. In this way, similar to the foregoing implementation, the Bluetooth headset sends the prompt message to the electronic device 1, to prompt that the Bluetooth headset is manually preempted by the user, and ask the user whether to agree to switch the audio to the local headset channel.

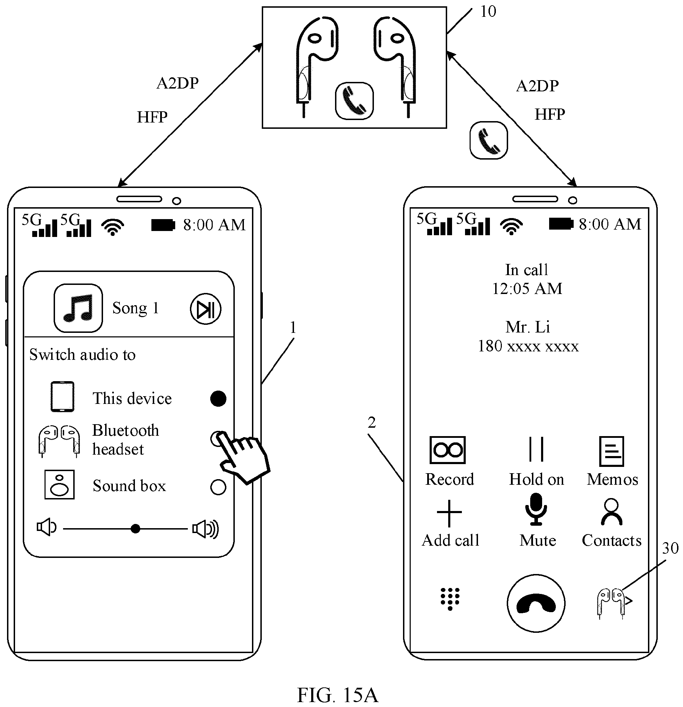

FIG. 15A to FIG. 15D are respectively schematic diagrams of an application scenario of the audio control method shown in FIG. 14A and FIG. 14B. With reference to FIG. 14A and FIG. 14B and FIG. 15A to FIG. 15D, the following describes examples of the application scenario of the audio control method provided in the third solution of this embodiment of this application.

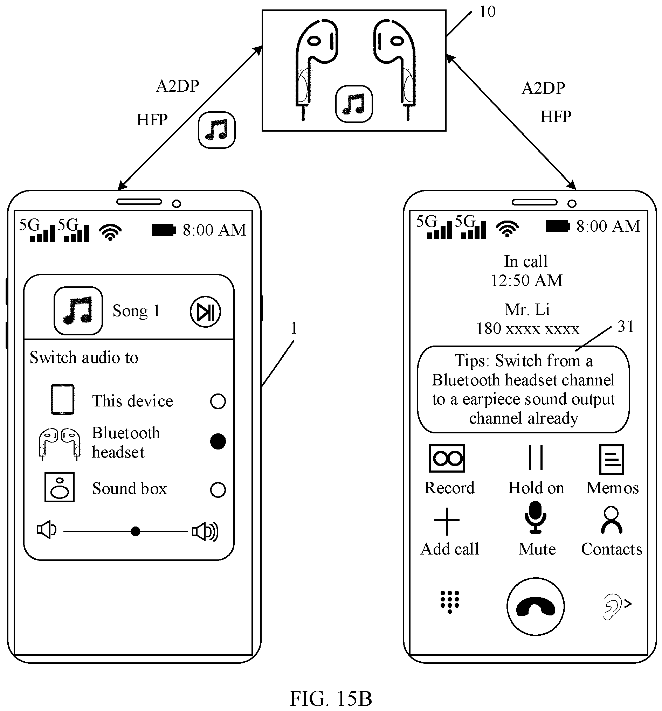

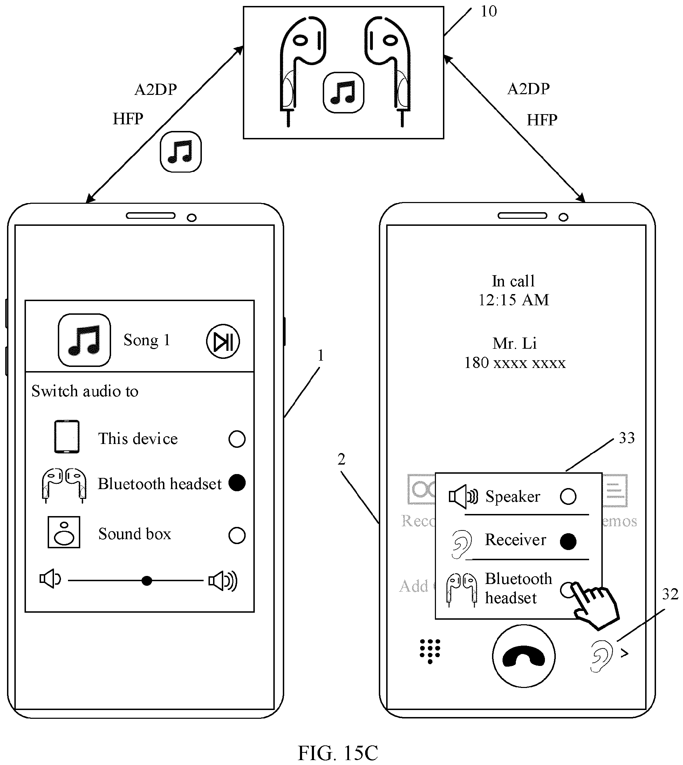

As shown in FIG. 15A, both the electronic device 1 and the electronic device 2 establish connections to the Bluetooth headset. It is assumed that the electronic device 1 plays a song 1 through the electronic device 1, and the electronic device 2 initiates a call service and occupies the Bluetooth headset. A headset identifier 30 in a call control interface displayed by the electronic device 2 is used to indicate that a current media audio stream is output through the headset. If the electronic device 1 receives an operation of the user on a "Bluetooth Headset" option in an audio management interface, the electronic device 1 may preempt the Bluetooth headset, and play the song 1 through the Bluetooth headset. In this case, as shown in FIG. 15B, the electronic device 2 may display a prompt message 31, or as shown in FIG. 15C, an audio switching interface 33 may be displayed with a pop-up box in a call control interface displayed by the electronic device 2, to prompt that a call voice of the electronic device 2 is switched from the Bluetooth headset to an earpiece sound output channel. For example, the audio switching interface 33 may include but is not limited to a "Speaker" option, an "Earpiece" option, and a "Bluetooth Headset" option. The "Earpiece" option is in a selected state to prompt that the call voice of the electronic device 2 is currently output through the earpiece. Correspondingly, the call control interface may further display an earpiece identifier 32 for indicating that the call voice is currently output from the earpiece. If no user operation is received within the preset duration, the electronic device 2 may hide the audio switching interface 33.

In a possible implementation, as shown in FIG. 15C, the user may directly select another option in the audio switching interface 33. For example, if the user selects the "Speaker" option, the electronic device 2 may switch the call voice to the speaker for output. Alternatively, if the user selects the "Bluetooth Headset" option, the electronic device 2 may switch the call voice to the Bluetooth headset for output, that is, preempt back the Bluetooth headset.

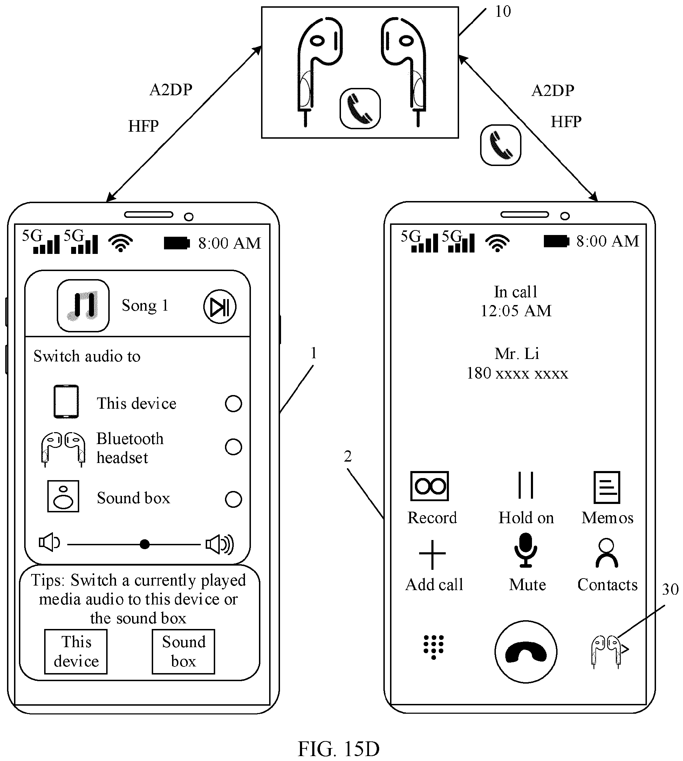

In another possible implementation, when the audio switching interface 33 is hidden, the user may tap the earpiece identifier 32 in the call control interface of the electronic device 2, to invoke the audio switching interface 33. As shown in FIG. 15C, if the user selects the "Bluetooth Headset" option, the electronic device 2 preempts the Bluetooth headset channel, transmits a media audio stream of a song 2 to the Bluetooth headset based on the A2DP specification through the ACL link, and outputs the media audio stream of the song 2 through the Bluetooth headset. Further, as shown in FIG. 15D, a headset identifier 30 is switched to be displayed in the call control interface of the electronic device 2, to indicate that the current media audio stream is output through the Bluetooth headset. In this case, the electronic device 1 may display a prompt message, to prompt to switch currently played media audio to the electronic device 1 or the sound box, for the user to select. Therefore, the user may manually preempt the Bluetooth headset channel based on the actual requirement, to trigger the Bluetooth headset to switch the audio service. It can be learned from the third solution that the Bluetooth device follows the preemption policy of user operation preferred.

In the third solution, the Bluetooth headset may intelligently switch, based on a user operation, to process the media service and the call service that are separately initiated by the two electronic devices, so that the audio playback effect when a plurality of electronic devices share the Bluetooth headset can be improved.

The third scenario: the service concurrency scenario of [a call service and a call service]

In the third scenario, it is assumed that the electronic device 1 first initiates a call service, and then the electronic device 2 initiates a call service. For the call services with a same priority, the preemption policy is that a latter path of call may preempt the headset channel prior to a previous path of call. It should be noted that, similar to the descriptions of the first scenario based on the first solution, the second solution, and the third solution, the following also describes the third scenario as an example based on the first solution, the second solution, and the third solution.

### <The first solution>

The following first describes an audio control method implemented based on the first solution in the third scenario. In a process of implementing the audio control method based on the first solution, the A2DP specification may be deactivated/reactivated, so that the Bluetooth headset may properly switch audio services of different electronic devices in the case of service concurrency, and it can be ensured that audio streams are output normally.

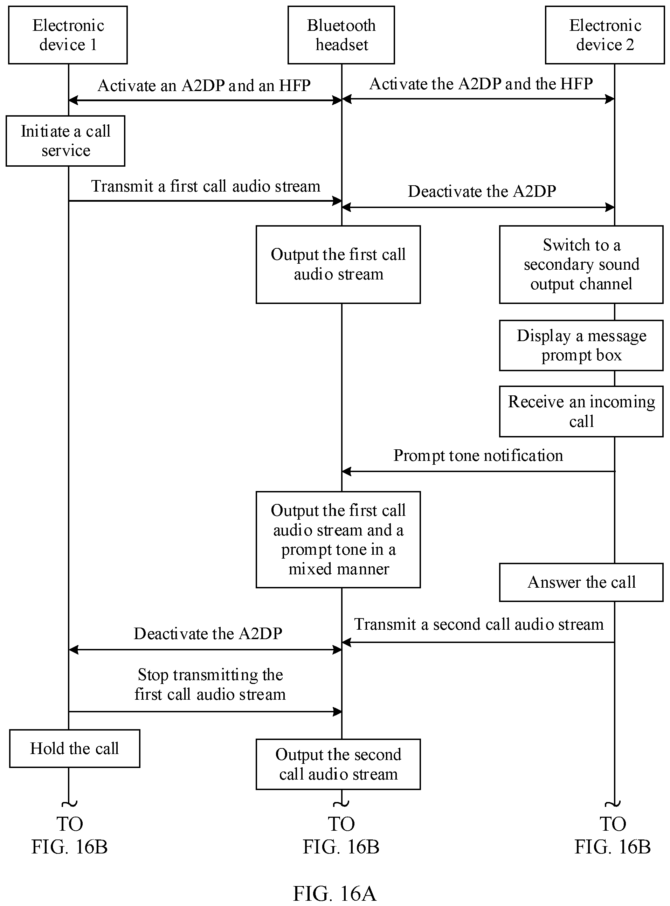

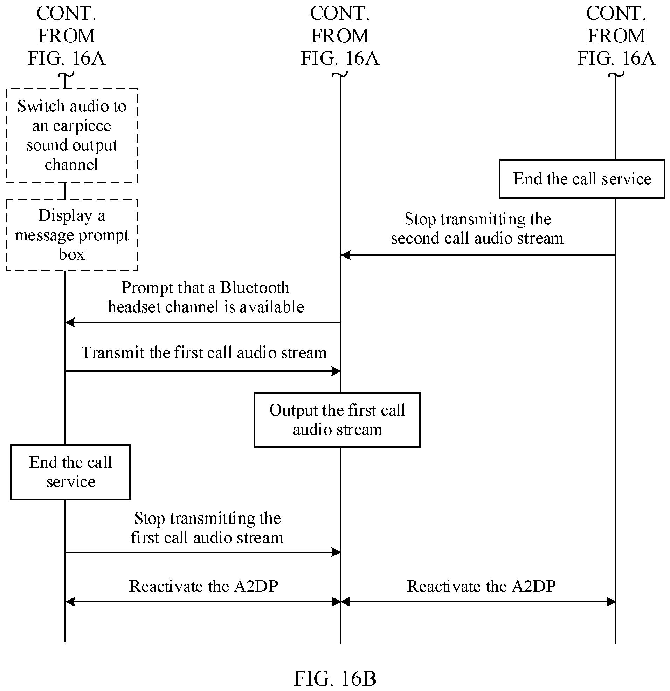

FIG. 16A and FIG. 16B are a schematic flowchart of switching an audio service by the Bluetooth headset based on the first solution when the Bluetooth headset is connected to both the electronic device 1 and the electronic device 2. As shown in FIG. 16A and FIG. 16B, the A2DP specification and the HFP specification are activated between the Bluetooth headset and both the electronic device 1 and the electronic device 2. An initial state of the Bluetooth headset is the idle state.

As shown in FIG. 16A and FIG. 16B, if the electronic device 1 initiates a call service, for example, answering a call or making a call, the electronic device 1 transmits a first call audio stream to the Bluetooth headset based on the HFP specification through the SCO link. Correspondingly, the Bluetooth headset may output the first call audio stream, and deactivate the A2DP specification between the Bluetooth headset and the electronic device 1.

Further, if the electronic device 2 receives an incoming call signal, the electronic device 2 displays an incoming call interface, and sends an incoming call prompt tone to the Bluetooth headset. In this case, the Bluetooth headset may output the first call audio stream and the incoming call prompt tone, that is, audio mixing occurs. The user may select to answer or reject the call on the incoming call interface of the electronic device 2, where rejecting does not affect a status of the call service of the electronic device 1.

Further, if the user selects to answer the incoming call of the electronic device 2, the electronic device 2 may transmit a second call audio stream to the Bluetooth headset and output the second call audio stream through the Bluetooth headset, and the Bluetooth headset may deactivate the A2DP specification between the Bluetooth headset and the electronic device 1. In this case, the electronic device 1 may switch the status of the current call service to call hold. After the call service of the electronic device 2 ends (for example, the user hangs up the phone), the electronic device 2 stops transmitting the call audio stream to the Bluetooth headset, and the Bluetooth headset is in the idle state. The Bluetooth headset may send a prompt message to the electronic device 1, to prompt that the Bluetooth headset channel is available. The electronic device 1 may directly switch the call hold state to a call answering state based on the received prompt message, and transmit the first call audio stream to the Bluetooth headset through the SCO link. Therefore, the Bluetooth headset may continue to process the call service of the electronic device 1, that is, the electronic device 1 may continue to output the first call audio stream through the Bluetooth headset. If the call service of the electronic device 1 ends, the electronic device 1 stops transmitting the call audio stream to the Bluetooth headset. In this case, the Bluetooth headset is in the idle state, and the Bluetooth headset may reactivate the A2DP specification between the Bluetooth headset and both the electronic device 1 and the electronic device 2. Therefore, the Bluetooth headset may process an audio service initiated by any electronic device in Bluetooth connection at any time.

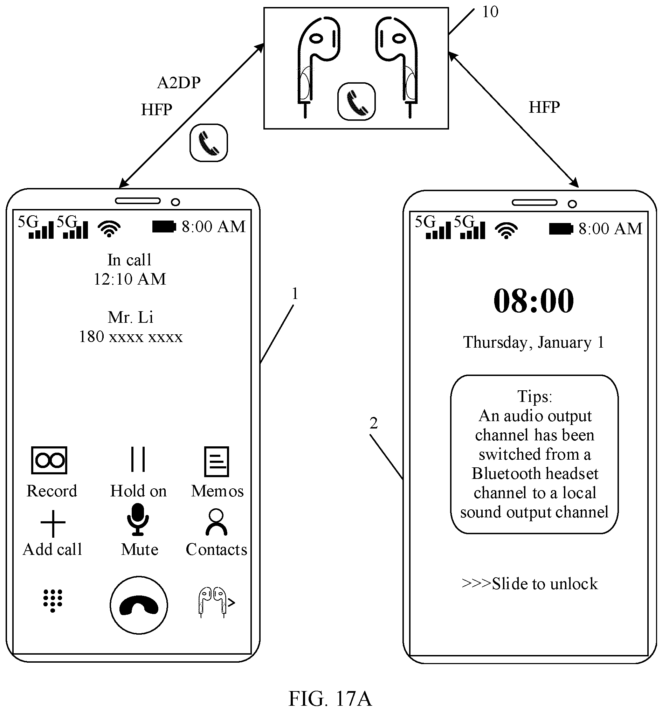

FIG. 17A to FIG. 17D are respectively schematic diagrams of an application scenario of the audio control method shown in FIG. 16A and FIG. 16B. With reference to FIG. 16A and FIG. 16B and FIG. 17A to FIG. 17D, the following describes examples of the application scenario of the audio control method provided in this embodiment of this application.

As shown in FIG. 17A, the electronic device 1 initiates a call service, and outputs a call voice through the Bluetooth headset. The A2DP specification is deactivated between the Bluetooth headset and the electronic device 2. The electronic device 1 may display a call control interface, including but not limited to a headset identifier 40. The headset identifier 40 is used to indicate that a call voice of the electronic device 1 is currently output through the Bluetooth headset. In this case, the Bluetooth headset is preempted by the electronic device 1, and the electronic device 2 may display a message prompt box to prompt the user that the audio output channel has been switched from the Bluetooth channel to the local sound output channel.

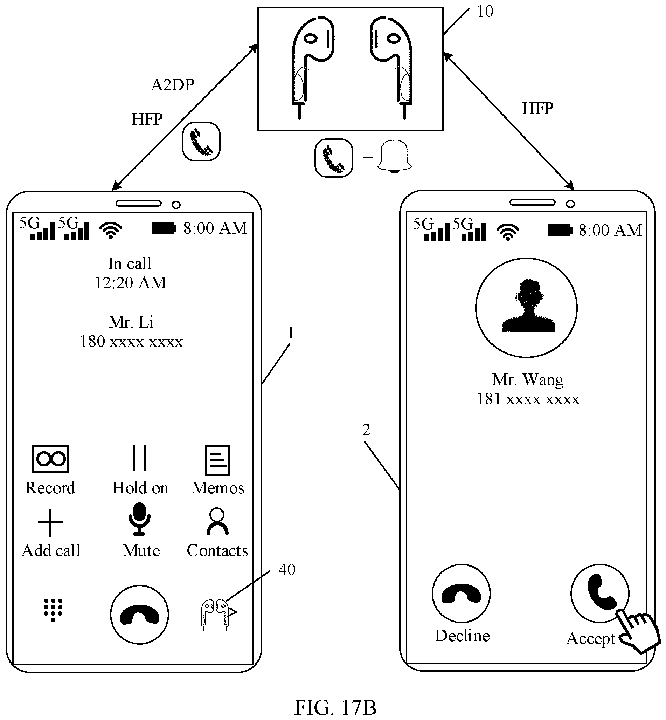

Further, as shown in FIG. 17B, if the electronic device 2 receives a call, the electronic device 2 notifies the Bluetooth headset of the incoming call, and the electronic device 2 displays an incoming call interface. In this case, the Bluetooth headset may simultaneously output the call voice of the electronic device 1 and a call prompt tone of the electronic device 2.

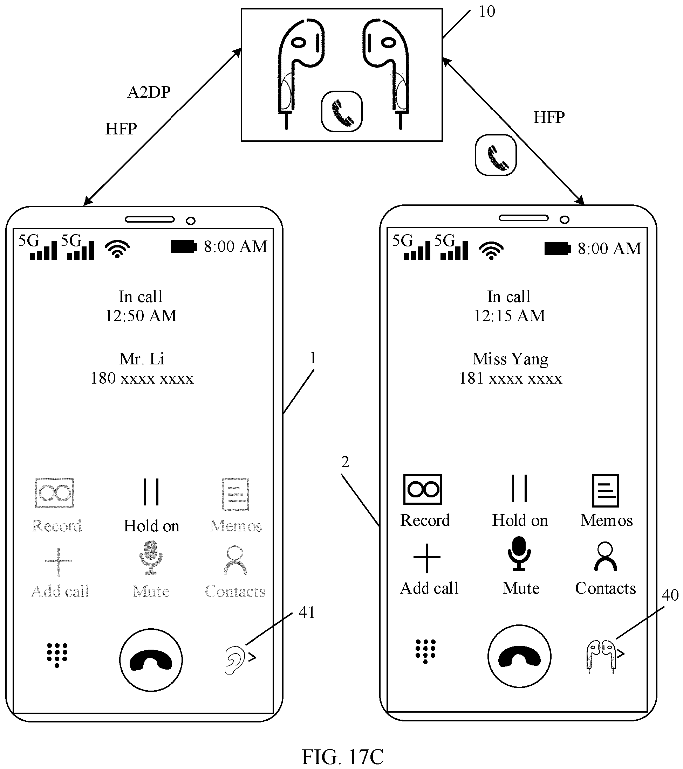

Further, if the user selects to answer, as shown in FIG. 17C, the electronic device 2 displays a call control interface, including but not limited to a headset identifier 40. The headset identifier 40 is used to indicate that a call voice of the electronic device 2 is currently output through the Bluetooth headset. Correspondingly, as shown in FIG. 17B, the call service of the electronic device 1 is switched to a call hold state or a waiting state. Alternatively, the call voice of the electronic device 1 is automatically switched to the local sound output channel (for example, the earpiece) for output, as shown by an earpiece identifier 41 in FIG. 17C. The earpiece identifier 41 is used to indicate that the call voice of the electronic device 1 is currently output through the earpiece.

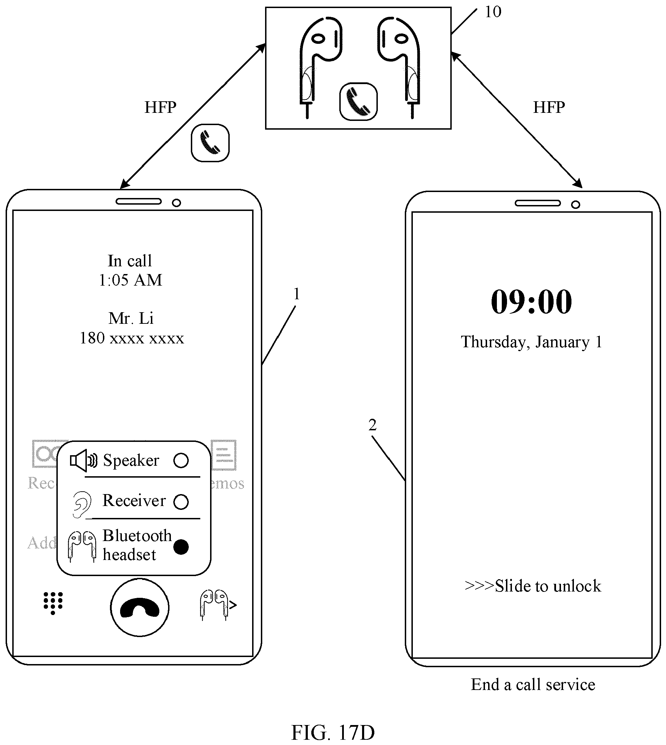

Further, as shown in FIG. 17D, if the call service of the electronic device 2 ends, the Bluetooth headset automatically switches to process the call service of the electronic device 1, and prompts the electronic device 1 that the current call voice has been switched to the headset for playing. Alternatively, the Bluetooth headset may send a prompt message to the electronic device 1, to indicate whether to switch the current call voice to the headset for playing. Correspondingly, the electronic device 1 may display the prompt message. If the user selects "yes" to determine to switch audio to the headset for playing, the electronic device 1 outputs the call voice through the Bluetooth headset.

Further, when neither the electronic device 1 nor the electronic device 2 has an audio service, the Bluetooth headset returns to the idle state. In this case, the Bluetooth headset may reactivate the A2DP specification between the Bluetooth headset and both the electronic device 1 and the electronic device 2. The Bluetooth headset keeps the A2DP connections and the HFP connections to both the electronic device 1 and the electronic device 2, so that the Bluetooth headset can process an audio service initiated by any electronic device in Bluetooth connection at any time.

In the first solution, once the electronic device 1 establishes a voice call service with the headset, the A2DP connection of the electronic device 2 is immediately interrupted. In this case, sounds of an audio playback service of the electronic device 2 are output on the mobile phone. When the electronic device 2 receives an incoming call, an incoming call notification may still be received on the headset, and an operation may be performed on the electronic device 2 or the headset to answer the call. After the call is answered, a voice is output on the headset, and the call of the electronic device 1 is transferred to the electronic device 1 for holding. After the call of the electronic device 2 ends, the call of the electronic device 1 may be resumed to be answered through the headset. Compared with a case in which audio streams cannot be normally output in a case of concurrency of related services, in the solution provided in this embodiment of this application, it can be ensured that incoming calls of both mobile phones are not missed.

<The second solution> The following further describes an audio control method implemented based on the second solution in the third scenario. In a process of implementing the audio control method based on the second solution, the A2DP specification does not need to be deactivated/reactivated, but the Bluetooth headset sends a message to the electronic device that fails in preemption to notify that the Bluetooth headset is preempted, so that the electronic device disables the Bluetooth headset channel based on the notification message, and automatically switches to the secondary sound output channel. Therefore, the Bluetooth headset may properly switch audio services of different electronic devices in the case of service concurrency, and it can be ensured that audio streams are output normally.

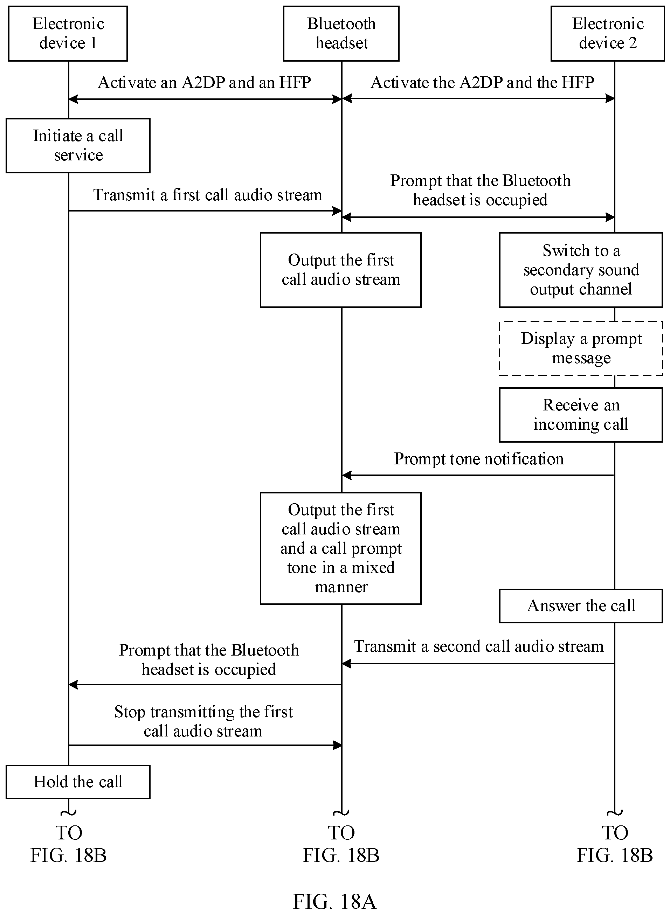

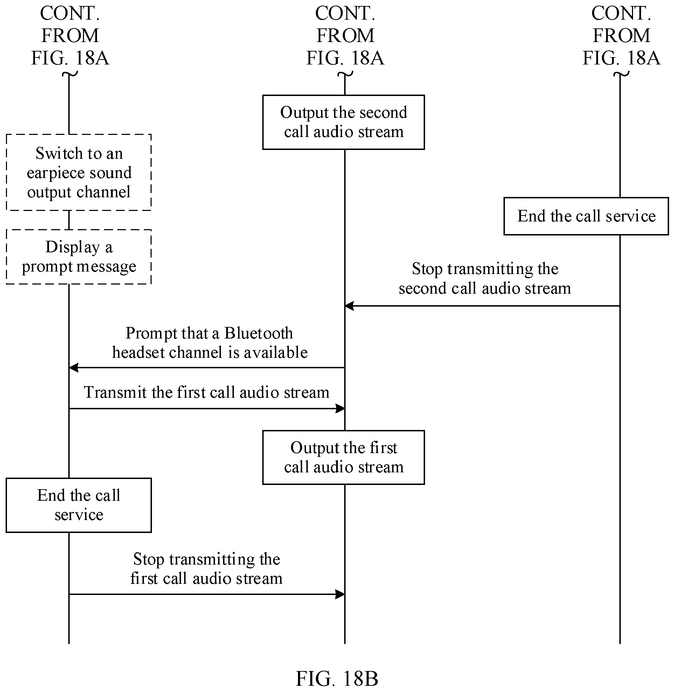

FIG. 18A and FIG. 18B are a schematic flowchart of switching an audio service by the Bluetooth headset based on the second solution when the Bluetooth headset is connected to both the electronic device 1 and the electronic device 2. As shown in FIG. 18A and FIG. 18B, the A2DP specification and the HFP specification are activated between the Bluetooth headset and both the electronic device 1 and the electronic device 2. An initial state of the Bluetooth headset is the idle state.

As shown in FIG. 18A and FIG. 18B, if the electronic device 1 initiates a call service, the electronic device 1 may transmit a first call audio stream to the Bluetooth headset and output the first call audio stream through the Bluetooth headset. A difference from a process shown in FIG. 16A and FIG. 16B lies that the A2DP specification does not need to be deactivated between the Bluetooth headset and the electronic device 1.

Further, if the electronic device 2 receives an incoming call, the electronic device 2 sends an incoming call prompt tone to the Bluetooth headset, or the electronic device 2 notifies the Bluetooth headset of the incoming call, and triggers the Bluetooth headset to invoke and play a locally prestored incoming call prompt tone. In this case, the Bluetooth headset may output the first call audio stream and the incoming call prompt tone, that is, audio mixing occurs.

Further, if the user selects to answer the incoming call of the electronic device 2, the electronic device 2 may transmit a second call audio stream to the Bluetooth headset, and output the second call audio stream through the Bluetooth headset. A difference from the process shown in FIG. 16A and FIG. 16B lies that the Bluetooth headset does not need to deactivate the A2DP specification between the Bluetooth headset and the electronic device 1. In this case, the electronic device 1 may switch a status of the current call service to call hold, or may switch a call voice to a sound output channel other than the Bluetooth headset, or display a message prompt box to prompt the user that the call voice has been switched to an earpiece sound output channel, or prompt the user whether to switch the current call voice from the headset channel to another sound output channel.

Further, after the call service of the electronic device 2 ends (for example, the user hangs up the phone), the electronic device 2 stops transmitting the call audio stream to the Bluetooth headset, and the Bluetooth headset is in the idle state. The Bluetooth headset may send a prompt message to the electronic device 1, to prompt that the Bluetooth headset channel is available. The electronic device 1 may directly switch the call hold state to a call answering state based on the received prompt message, and continue to output the first call audio stream through the Bluetooth headset. If the call service of the electronic device 1 ends, the electronic device 1 stops transmitting the call audio stream to the Bluetooth headset. In this case, the Bluetooth headset is in the idle state, and the Bluetooth headset may keep the A2DP connections to both the electronic device 1 and the electronic device 2. Therefore, the Bluetooth headset may process an audio service initiated by any electronic device in Bluetooth connection at any time.

### <The third solution>

The following further describes an audio control method implemented based on the third solution in the third scenario. In a process of implementing the audio control method based on the third solution, the Bluetooth headset may be "preempted back" based on a user operation. Therefore, the Bluetooth headset may properly switch audio services of different electronic devices in the case of service concurrency, and it can be ensured that audio streams are output normally.

In the third solution, the A2DP specification and the HFP specification are activated between the Bluetooth headset and both the electronic device 1 and the electronic device 2. Similar to the second solution, the electronic device 1 first initiates a call service to preempt the Bluetooth headset. Then, the electronic device 2 initiates a call service, and directly preempts the Bluetooth headset.

Optionally, the electronic device 1, as a party that fails in preemption, may determine a type of the currently processed service, and then determine, based on the service type, whether to continue the current service or suspend the current service. For example, if detecting that the current service is a call service, the device that fails in preemption may hold the call according to a preset policy, and switch the sound output channel to the local sound output channel. Alternatively, the device that fails in preemption may switch the sound output channel to the local sound output channel, and then output a call voice through the local sound output channel. Optionally, the device that fails in preemption may display a message prompt box, to indicate that the current audio sound channel has been switched from the headset channel to the earpiece sound output channel. Alternatively, the device that fails in preemption may display an audio switching interface, to prompt the user whether to agree to switch the current audio output channel to the earpiece sound output channel. Alternatively, the user may perform an operation in a call control interface to trigger the device to display an audio switching interface, and may further perform an operation in the audio switching interface to trigger switching of the audio output channel.

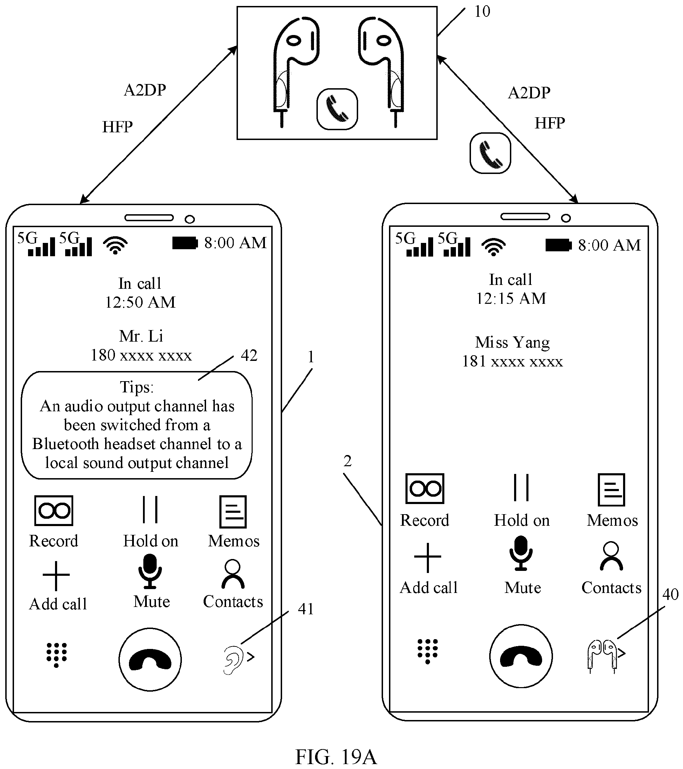

For example, as shown in FIG. 19A, the electronic device 1, as the party that fails in preemption, may display a prompt box 42 to indicate that the audio output channel has been switched from the Bluetooth headset channel to the local sound output channel. An earpiece identifier 41 in a call control interface displayed by the electronic device 1 is used to indicate that the current call audio stream is output through the headset. A headset identifier 40 in a call control interface displayed by the electronic device 2 is used to indicate that the current call audio stream is output through the headset. In this case, the electronic device 1 may display a prompt message 42 to indicate that the audio output channel has been switched from the Bluetooth headset channel to the local sound output channel.

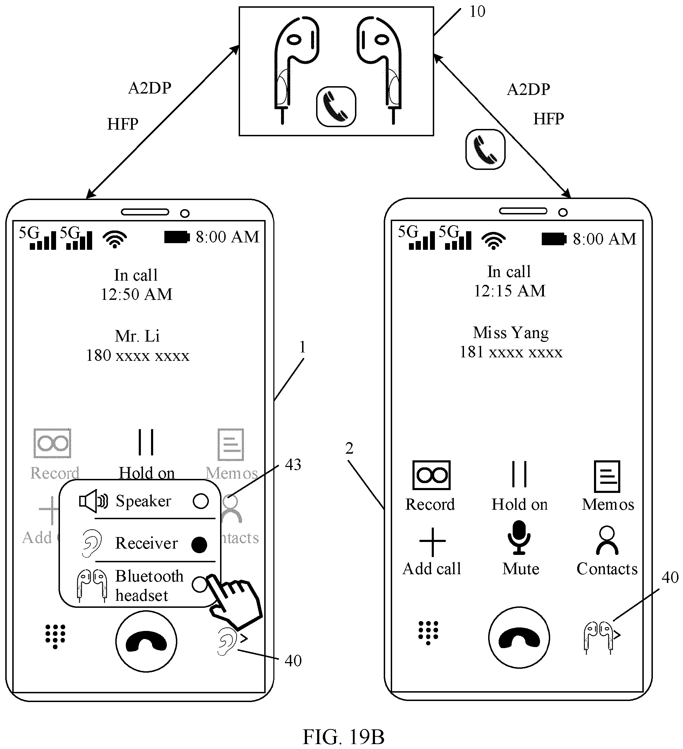

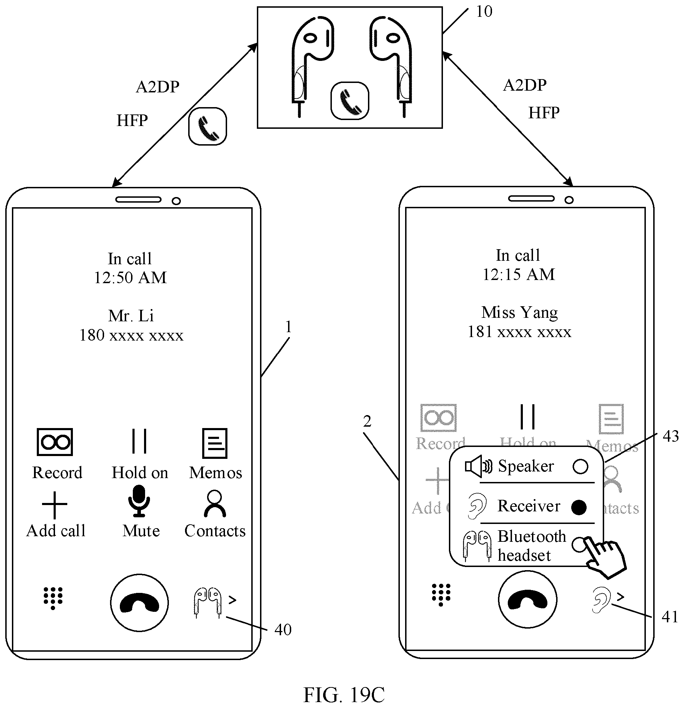

For example, as shown in FIG. 19B, the call service of the electronic device 1 serving as the party that fails in preemption is switched to the call hold state. The user may select the earpiece identifier 41 in the call control interface to trigger the device 1 to display an audio switching interface 43. If the user selects a "Bluetooth headset" option in the audio switching interface 43, as shown in FIG. 19C, the electronic device 1 may switch audio to the Bluetooth headset channel, that is, "preempt back" the Bluetooth headset channel, in response to the operation of the user, so that the electronic device 1 may output the call voice through the Bluetooth headset. As shown in FIG. 19C, the call service of the electronic device 2 serving as the party that fails in preemption is switched to the call hold state. The user may select an earpiece identifier 41 in the call control interface to trigger the device 2 to display an audio switching interface 43. Further, if the user selects a "Bluetooth headset" option in the audio switching interface 43, the electronic device 2 may switch audio to the Bluetooth headset channel, that is, "preempts back" the Bluetooth headset channel, in response to the operation of the user, so that the electronic device 2 may output the call voice through the Bluetooth headset. Therefore, similar to the foregoing implementation, the user may trigger, based on the actual use requirement, the electronic device to preempt the Bluetooth headset channel through an operation.

Optionally, in the related technology, the Bluetooth headset temporarily does not support audio mixing of two paths of A2DP audio or audio mixing of a call and A2DP audio. In this embodiment of this application, audio mixing of an A2DP audio stream and a local prompt tone may be implemented. The following describes two implementations provided in this embodiment of this application.

This solution supports audio mixing processing of two pieces of audio of a mobile phone. The Bluetooth headset needs to first negotiate with the mobile phone about an audio mixing supporting capability, including confirmation of a signaling interaction capability, a decoding capability, a supported audio mixing mode, and the like. It should be noted that a type or an application for prompt tone notification may be configured for the Bluetooth headset on the mobile phone.

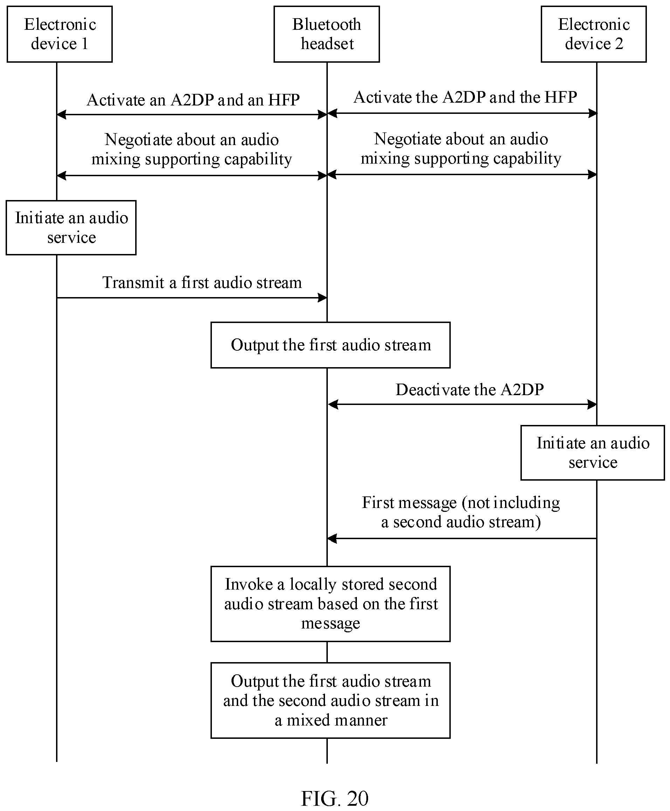

Sub-solution 1: Perform audio mixing by using a prompt tone locally prestored in the Bluetooth headset. As shown in FIG. 20, when the Bluetooth headset and the electronic device 1 are in an audio service, and the Bluetooth headset interrupts the A2DP connection to the electronic device 2, if the electronic device 2 initiates an audio service, for example, there is a prompt tone, the electronic device 2 may notify the Bluetooth headset through a prompt tone message, and the Bluetooth headset may locally invoke the prompt tone for audio mixing with the current audio service.

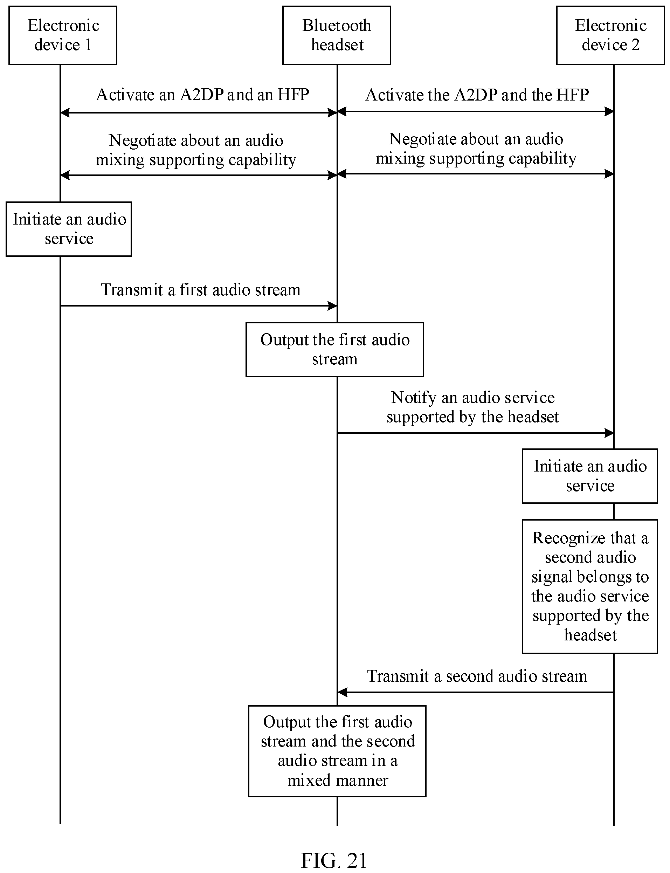

Sub-solution 2: Transmit a prompt tone of the electronic device to the Bluetooth headset for audio mixing. As shown in FIG. 21, when the Bluetooth headset and the electronic device 1 are in an audio service, if the electronic device 2 supports an audio mixing signaling interaction capability, the A2DP connection between the Bluetooth headset and the electronic device 2 may not be interrupted. The Bluetooth headset may notify the electronic device of a to-be-mixed audio type supported by the Bluetooth headset. Alternatively, the electronic device may be configured as a to-be-mixed audio type supported by the Bluetooth headset. If the electronic device 2 has an audio service that meets a support condition, the electronic device 2 may send an audio stream to the Bluetooth headset, and perform audio mixing processing on the Bluetooth headset side.

Optionally, if the electronic device 1 and the Bluetooth headset are in a call, and the incoming call of the electronic device 2 is of a virtual call type, such as a voice call or a video call, after recognizing the virtual call type, the Bluetooth headset may treat an audio voice as a special voice, control the voice in the incoming call not to be output on the Bluetooth headset side, but transfer the incoming call to the electronic device 2 for answering.

In embodiments of this application, an embodiment of this application provides an audio control method under multiple connections. When the Bluetooth headset establishes a first-type audio service with the electronic device 1, an audio service policy between the Bluetooth headset and the electronic device 2 is determined.
1. If the Bluetooth headset and the electronic device 1 are in a voice call service, or in a continuous service such as music, a video, or a game, preemption of A2DP audio of the electronic device 2 may not be accepted, and the Bluetooth headset actively interrupts the A2DP connection to the electronic device 2. In this case, the voice call service of the electronic device 2 may be accepted.
2. A method for detecting an audio service type may include: The electronic device actively notifies the Bluetooth headset of an audio service type. The Bluetooth headset determines whether to disconnect a second path of audio. The Bluetooth headset determines, through delaying, whether the second path of audio is a continuous audio service.
3. When the service of the electronic device 1 ends, the Bluetooth headset may actively reestablish an A2DP connection to the electronic device 2.
4. A method for resuming an audio service by the Bluetooth headset includes: The Bluetooth headset records a previous audio state. After the A2DP connection is resumed, the Bluetooth headset may first wait for the electronic device to actively initiate a service. If the electronic device does not initiate the service, the Bluetooth headset actively initiates the service.
5. In a case in which the Bluetooth headset and the electronic device support audio capability negotiation and signaling interaction, support may be extended to an operation performed without interrupting A2DP, and multiple pieces of audio may be mixed on the Bluetooth headset side.

When the electronic device 1 and the electronic device 2 share the same Bluetooth headset, the Bluetooth headset not only can play audio information in the electronic device 1, but also can play audio information in the electronic device 2. Therefore, in consideration of protecting privacy of the user and another person, the user usually does not connect the Bluetooth headset to an electronic device of the another person. In other words, the electronic device 1, the electronic device 2, and the Bluetooth headset usually belong to the same user, and the user is referred to as an owner in this embodiment. However, in actual use, the owner may lend both the electronic device 1 and the Bluetooth headset to another person (referred to as a non-owner in this embodiment) to use, and the owner uses only the electronic device 2. In this scenario, when the electronic device 2 receives a call service (for example, an incoming call or an outgoing call), the electronic device 2 notifies the Bluetooth headset of the current call service. Because the non-owner can answer a call through the Bluetooth headset, call privacy of the owner may be leaked.

An example in which the electronic device 1 is a tablet computer and the electronic device 2 is a mobile phone is used below to describe the process in detail with reference to the service concurrency scenario of [a media service and a call service]. It should be understood that, in the concurrency scenario of [a call service and a call service], when the Bluetooth headset is in the idle state, the foregoing problem may also exist.

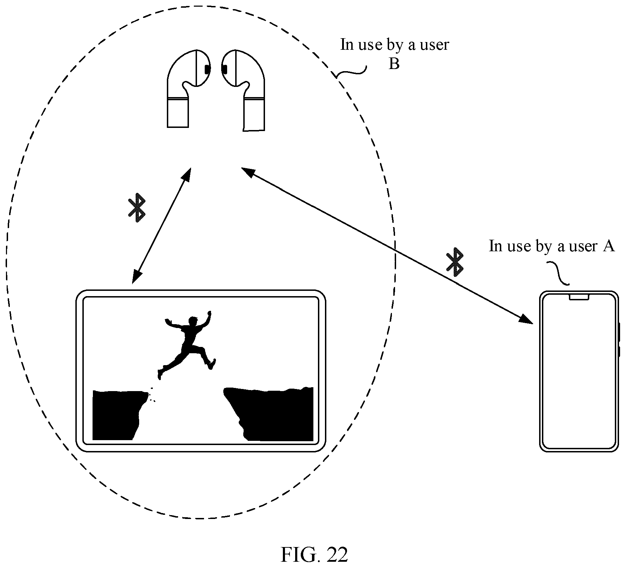

FIG. 22 is a schematic diagram of an application scenario of a Bluetooth headset according to an embodiment of this application. As shown in FIG. 22, the Bluetooth headset is in Bluetooth connection to both the tablet computer and the mobile phone. That is, the tablet computer and the mobile phone share the Bluetooth headset. The tablet computer currently plays a video, and plays, based on an A2DP connection to the Bluetooth headset, a sound in the video through the Bluetooth headset. In this case, when the mobile phone receives an incoming call or makes an outgoing call, because a priority of a call service is higher than that of a media service, the mobile phone preempts the Bluetooth headset to perform the call service. Specifically, the Bluetooth headset may interrupt the A2DP connection or an ACL link to the tablet computer, and establish an HFP connection to the mobile phone to cooperate with the mobile phone in the call.

With regard to the Bluetooth headset cooperating with the mobile phone for the call, specifically, when the mobile phone receives the incoming call, the mobile phone locally performs incoming call notification, establishes the HFP connection to the Bluetooth headset, and controls the Bluetooth headset to perform incoming call notification. A manner in which the mobile phone performs incoming call notification may be displaying an incoming call interface, playing an incoming call prompt tone (also referred to as ringing), vibration, or the like. A manner in which the Bluetooth headset performs incoming call notification may be ringing, blinking an indicator, or the like. After incoming call notification, the user may answer/reject the call through the mobile phone, or may answer/reject the call through Bluetooth headset. After the call is answered, a voice in the current call is output through the Bluetooth headset by default.

When the mobile phones make the outgoing call, the mobile phones locally perform outgoing call notification, establishes the HFP connection to the Bluetooth headset, and controls the Bluetooth headset to perform outgoing call notification. A manner in which the mobile phone performs outgoing call notification may be displaying an outgoing call interface, playing an outgoing call prompt tone (for example, "beep~beep~beep~"), or the like. A manner in which the Bluetooth headset performs outgoing call notification is playing the outgoing call prompt tone. After the call is answered, a voice in the current call is output through the Bluetooth headset by default.

Based on the scenario shown in FIG. 22, it is assumed that owners of the Bluetooth headset, the tablet computer, and the mobile phone are all a user A, the user A lends the Bluetooth headset and the tablet computer to a user B to watch a video, and the user A uses only the mobile phone. In this case, in a process in which the user B watches the video through the Bluetooth headset, after the Bluetooth headset is preempted by the mobile phone when the mobile phone receives an incoming call or makes an outgoing call, the Bluetooth headset not only performs call notification (including incoming call notification and outgoing call notification), but also cannot play a sound in the video. Consequently, the user B cannot normally watch the video, and user experience is poor.

In addition, for the scenario in which the mobile phone receives the incoming call, the Bluetooth headset has a capability of answering/rejecting the call based on a user operation after ringing. If the user B answers the call of the user A through the Bluetooth headset, because a voice in the current call is output through the Bluetooth headset, privacy of the user A may be leaked. For the scenario in which the mobile phone makes the outgoing call, in a process in which the Bluetooth headset plays an outgoing call prompt tone, after the call is answered by a peer end, because a voice in the current call is output through the Bluetooth headset by default, actually, the user B talks to the peer end through the Bluetooth headset. Consequently, privacy of the user A may also be leaked.

In view of this, an embodiment of this application provides a call method, and the mobile phone determines, based on whether a user (that is, a wearer) of the Bluetooth headset is the owner, whether to use the Bluetooth headset to cooperate in performing a call service. When a plurality of devices share one Bluetooth headset, through the call method provided in this embodiment, call privacy of the owner can be protected to some extent, and user experience when the non-owner uses the Bluetooth headset can be improved.

The call method provided in this embodiment is performed based on that a person recognition call function of the Bluetooth headset is enabled (that is, the Bluetooth headset has the person recognition call function). After the Bluetooth headset is bound to the owner, the person recognition call function may be enabled by default, or the person recognition call function may be enabled based on a user instruction. In this embodiment, the person recognition call function includes a person recognition call answering function and a person recognition call making function. It should be noted that, in this embodiment, if the mobile phone supports person recognition call, but person recognition call is not enabled, it is considered that the mobile phone does not have the person recognition call function. If the Bluetooth headset supports person recognition call, but person recognition call is not enabled, it is considered that the Bluetooth headset does not have the person recognition call function.

The following describes a process of enabling the person recognition call function of the Bluetooth headset based on the user instruction.

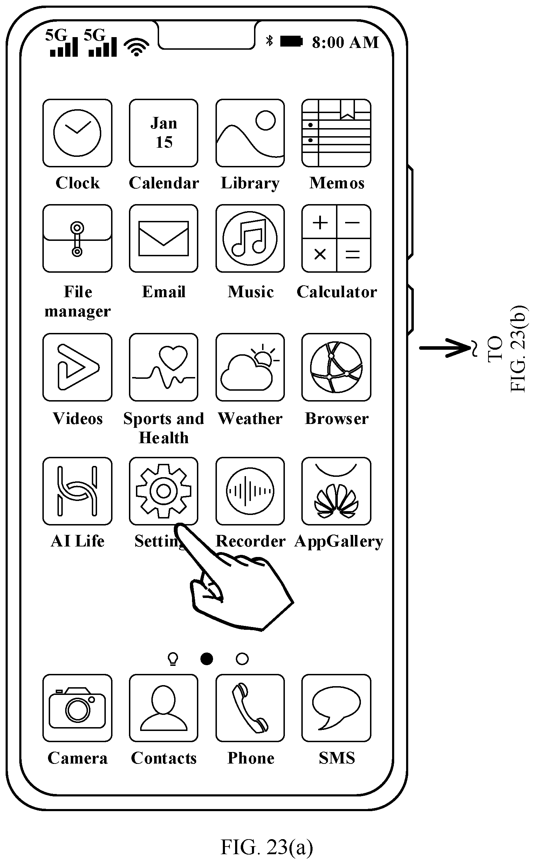

FIG. 23(a) to FIG. 23(e) are schematic diagrams of a setting process of a Bluetooth headset according to an embodiment of this application, and relates to a process in which a user operates on the mobile phone to enable the person recognition call function of the Bluetooth headset.

For example, as shown in FIG. 23(a), icons of various applications (applications, Apps) are displayed on a desktop of the mobile phone, including icons such as "Clock", "Calendar", "Library", "Settings", "Browser", and "AI Life". After detecting an operation of the user on the "Settings" icon on the desktop of the mobile phone, the mobile phone displays a setting interface.

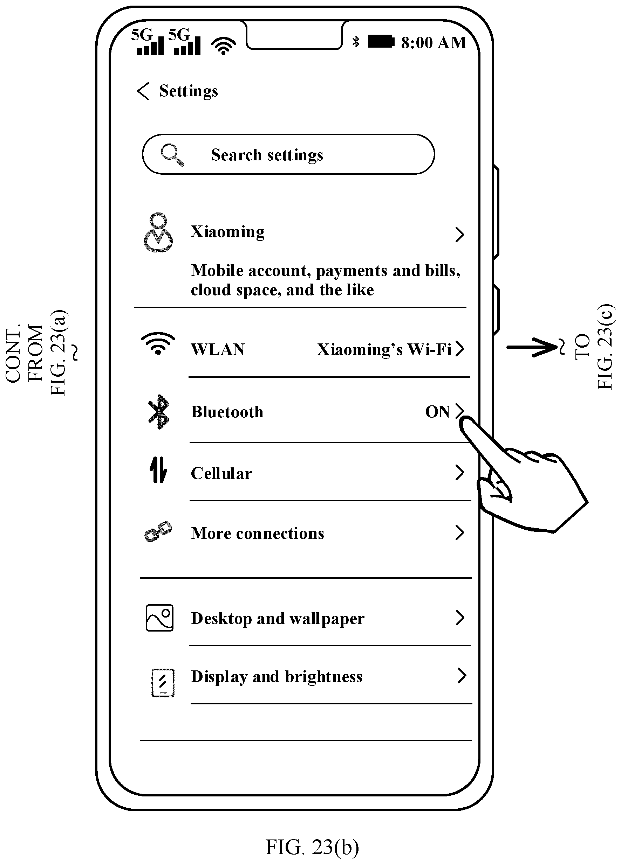

For example, as shown in FIG. 23(b), the setting interface includes content such as an "Account" setting item, a "Wireless Local Area Network (wireless local area network, WLAN) setting item, a "Bluetooth" setting item, a "Mobile Network" setting item, a "desktop and Wallpaper" setting item, and a "Display and Brightness" setting item. After detecting an operation of the user on the "Bluetooth" setting item, the mobile phone displays a Bluetooth setting interface.

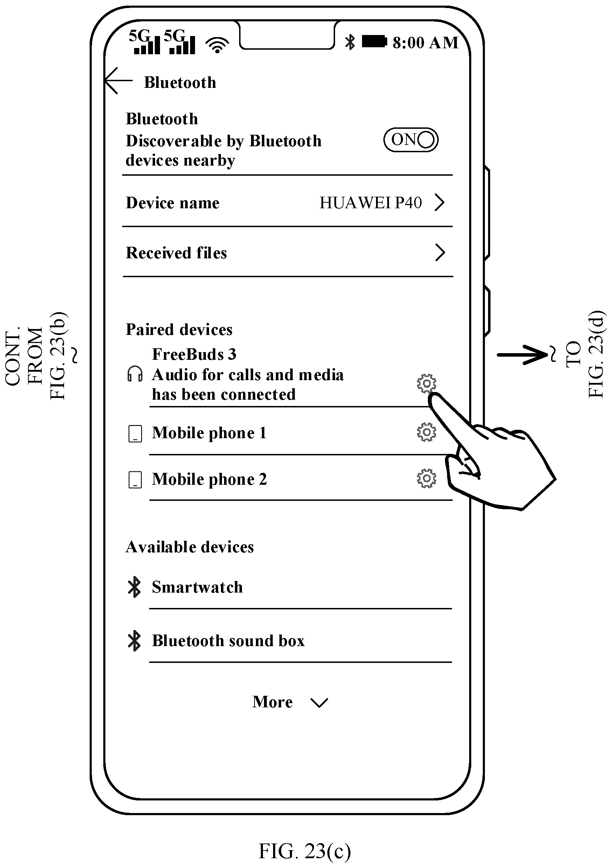

For example, as shown in FIG. 23(c), the Bluetooth setting interface includes a Bluetooth enabling control icon, a name of the mobile phone (for example, HUAWEI P40), basic information (for example, a Bluetooth headset FreeBuds 3, a mobile phone 1, and a mobile phone 2) of an electronic device (that is, a paired device) that has been paired with the mobile phone, and basic information of an electronic device (that is, an available device, such as a smartwatch or a Bluetooth sound box) that can be found by the mobile phone but has not been paired with the mobile phone. After detecting an operation of the user on a setting icon of the Bluetooth headset, the mobile phone displays a headset setting interface.

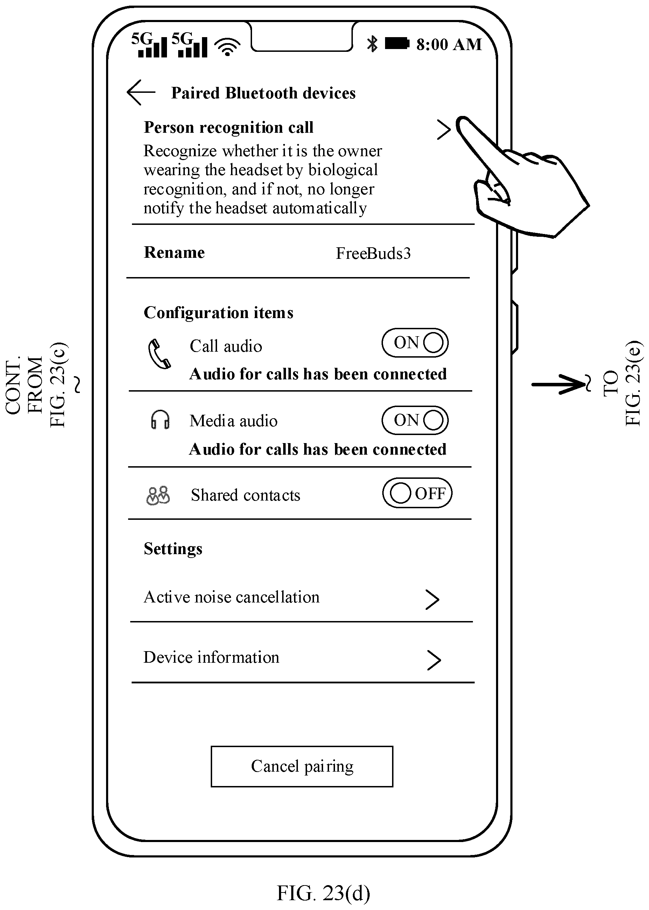

For example, as shown in FIG. 23(d), the headset setting interface includes a "Person Recognition Call" setting item, a "Rename" setting item, a "Call Audio" setting item, a "Media Audio" setting item, a "Shared Contacts" setting item, and the like. After detecting an operation of the user on the "Person Recognition Call" setting item, the mobile phone displays a person recognition call setting interface.

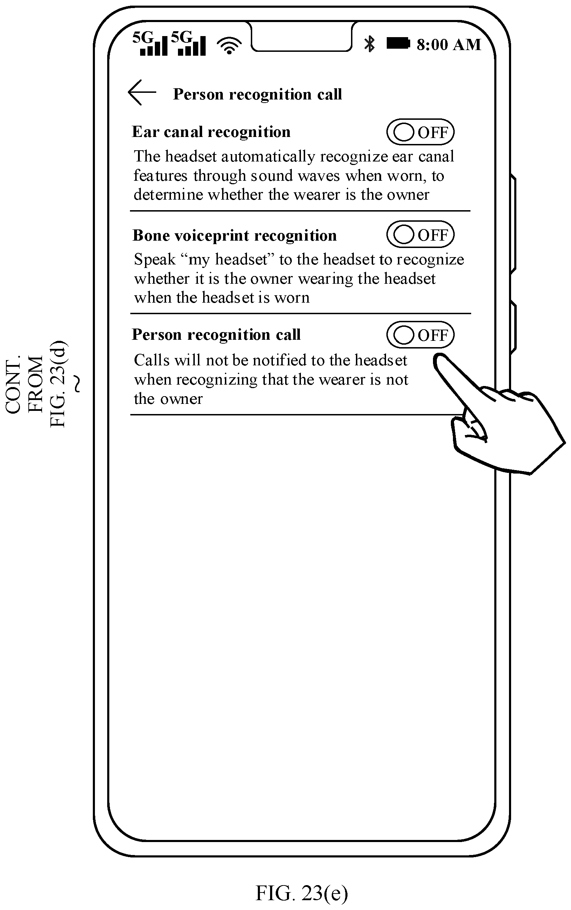

For example, as shown in FIG. 23(e), the person recognition call setting interface includes an "Ear Canal Recognition" setting item, a "Bone Voiceprint Recognition" setting item, and a "Person Recognition Call" setting item. After the mobile phone detects an operation of the user for enabling person recognition call, the person recognition call function of the Bluetooth headset is enabled.

In this embodiment, operations of the user on controls such as the icons, options, and the setting items include touch operations such as tap, double-tap, multiple taps, touch and hold, heavy press, and dragging and sliding a target.

In some other embodiments, the setting interface of the mobile phone may further include a "Person Recognition Call with Headset" setting item, and the setting item is used to control the person recognition call function of all Bluetooth headsets that are connected to the mobile phone and have the person recognition call function to be enabled/disabled. In this manner, when the mobile phone is connected to different Bluetooth headsets, there is no need to separately enable/disable the person recognition call function for each Bluetooth headset.

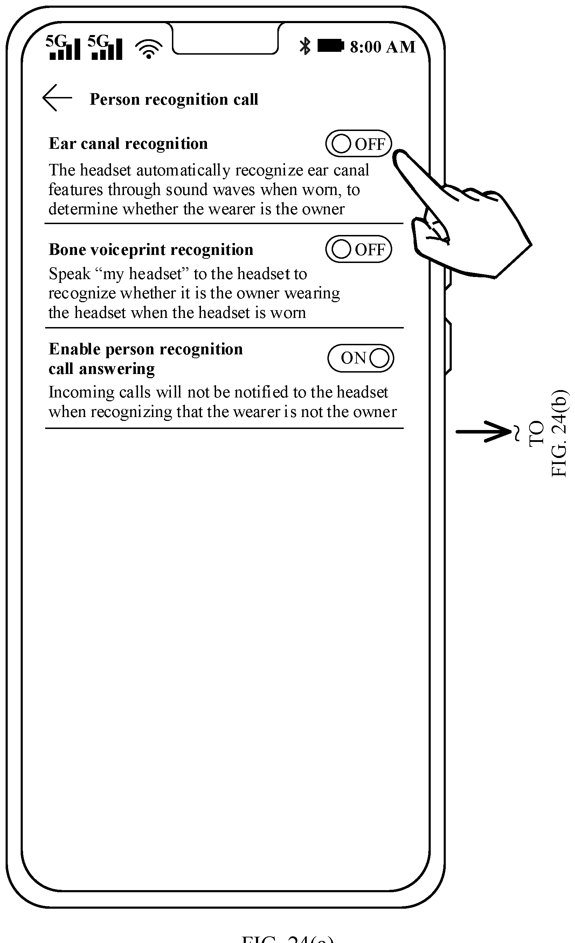

FIG. 24(a) to FIG. 24(c) are schematic diagrams of a setting process of a Bluetooth headset according to another embodiment of this application, and relates to a process in which the mobile phone sets an owner recognition manner of the Bluetooth headset based on a user operation.

In the person recognition call setting interface, the user may select to set the owner recognition manner of the Bluetooth headset to ear canal recognition, bone voiceprint recognition, voice password recognition (not shown in FIG. 24(a) to FIG. 24(c)), or the like. Ear canal recognition means that each time the user wears the Bluetooth headset, the Bluetooth headset automatically recognizes an ear canal feature of the user through a sound wave, so as to determine whether the user is the owner. Bone voiceprint recognition means that each time the user wears the Bluetooth headset, the Bluetooth headset obtains bone voiceprint information of a verification voice (for example, "my headset") input by the user, so as to recognize whether the user is the owner. Voice password recognition means that each time the user wears the Bluetooth headset, the Bluetooth headset obtains a voice password (for example, "123456") entered by the user, so as to recognize whether the user is the owner.

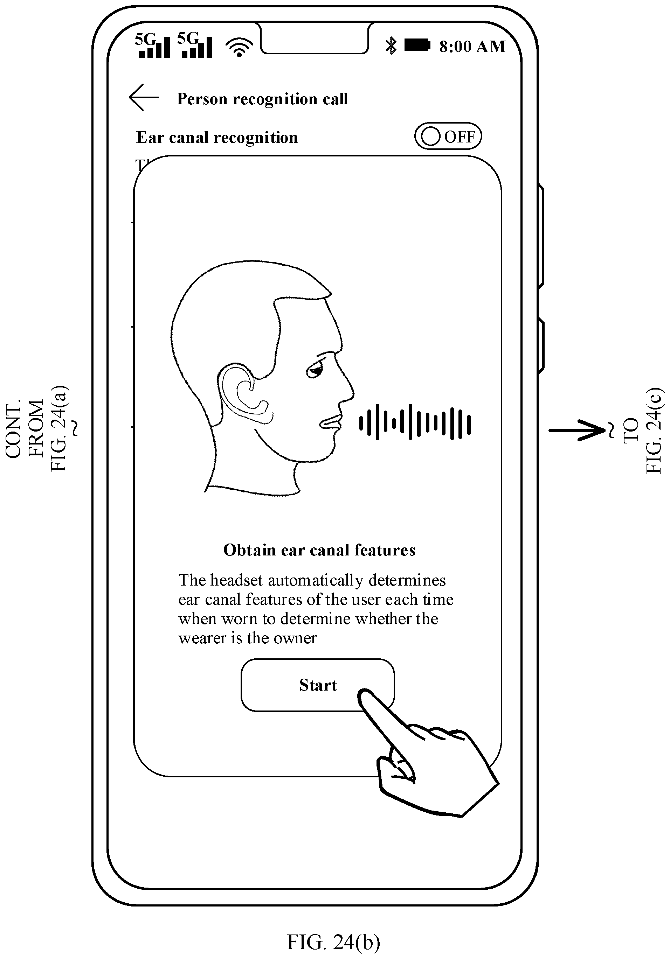

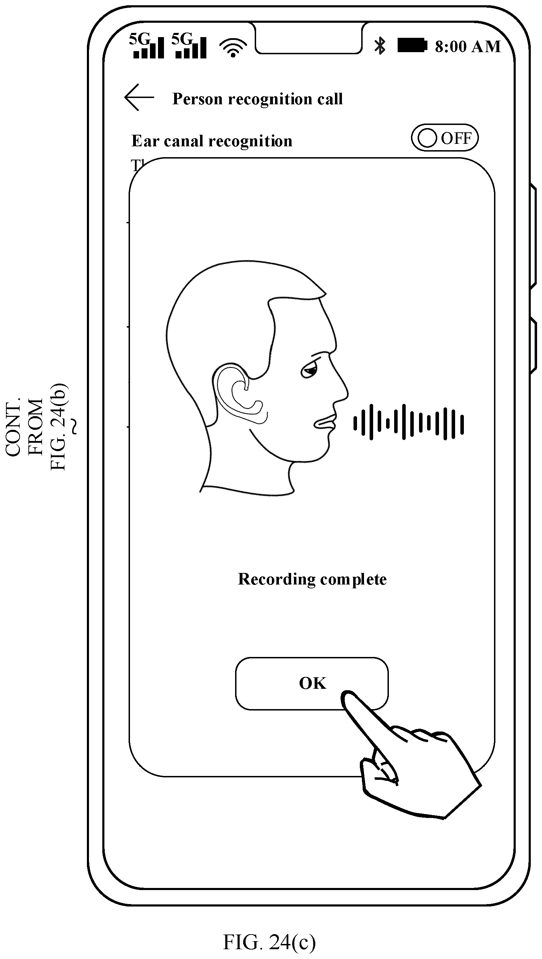

Ear canal recognition is used as an example. As shown in FIG. 24(a), after detecting an operation of the user for enabling ear canal recognition, the mobile phone displays an ear canal feature obtaining interface shown in FIG. 24(b). The interface includes a "Start" icon. After detecting an operation of the user on the "Start" icon, the mobile phone controls the Bluetooth headset to obtain and store ear canal feature information of the user. After successfully recording the ear canal feature information, the Bluetooth headset notifies the mobile phone that recording is completed. For example, as shown in FIG. 24(c), after determining that the Bluetooth headset completes recording of ear canal information, the mobile phone displays prompt information "recording complete" and an "OK" icon. After the mobile phone detects an operation of the user on the "OK" icon, recording of the ear canal information ends.

In addition, the mobile phone may control, based on a user instruction, the Bluetooth headset to record the bone voiceprint information, voice password information, and the like of the user. For a specific recording method, refer to a process of recording the ear canal feature shown in FIG. 24(a) to FIG. 24(c). Details are not described in this embodiment again.

The person recognition call function is usually implemented through proprietary protocols of suppliers to which the mobile phone and the Bluetooth headset belong. Therefore, in mobile phones connected to the Bluetooth headset, some mobile phones have the person recognition call function and support related settings, while some mobile phones may not have the person recognition call function and do not support related settings. Based on this, optionally, the user may further manage and set the Bluetooth headset through an AI life application installed on the mobile phone, including performing device connection management (for example, establishing/interrupting a Bluetooth connection to an electronic device) on the Bluetooth headset, setting a shortcut operation (for example, selecting a control instruction corresponding to double-tapping a left/right headset), enabling/disabling the person recognition call function of the Bluetooth headset, selecting the owner recognition manner, and the like. It may be understood that, through the AI life application, even a mobile phone that does not have the person recognition call function may perform a setting related to person recognition call on the Bluetooth headset.

After the person recognition call function of the Bluetooth headset is enabled, when the mobile phone connected to the Bluetooth headset receives an incoming call or makes an outgoing call, the mobile phone and the Bluetooth headset may execute the call method provided in this embodiment. The following describes the call method provided in this embodiment separately with reference to a mobile phone with the person recognition call function and a mobile phone without the person recognition call function.

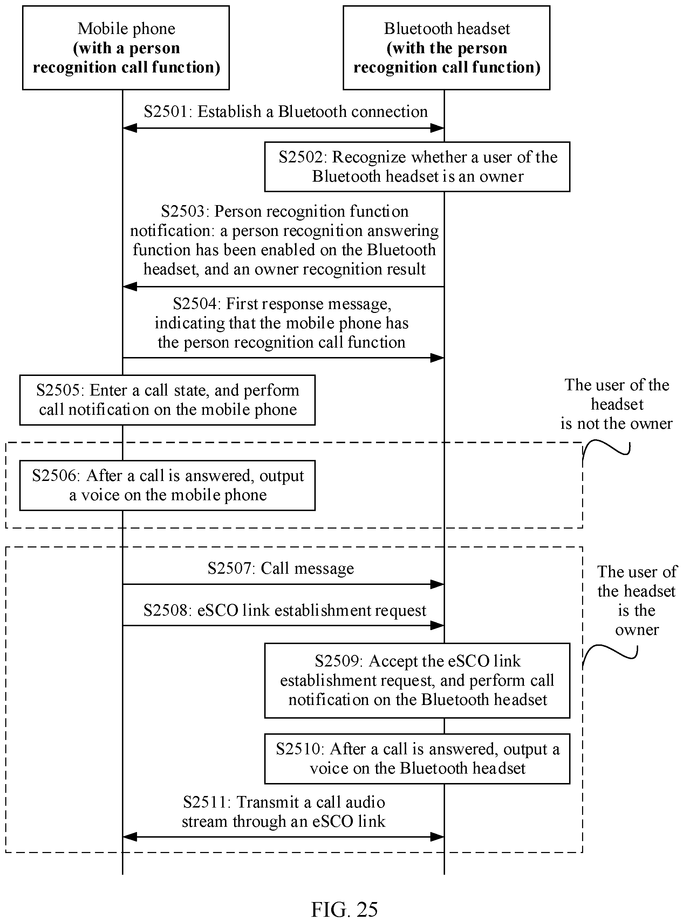

FIG. 25 is a flowchart of a call method according to an embodiment of this application, and relates to a process of how to use the Bluetooth headset during a call when a mobile phone with a person recognition call function is in Bluetooth connection to the Bluetooth headset.

S2501: The mobile phone establishes a Bluetooth connection to the Bluetooth headset.

A process of establishing the Bluetooth connection between the mobile phone and the Bluetooth headset specifically includes the following content.
(1) The mobile phone pages, as a master device (master, that is, a device initiating the connection), the Bluetooth headset serving as a slave device (slave, that is, a device receiving the connection). Specifically, after scanning basic information (such as a headset address and a headset model) broadcast by the Bluetooth headset, the mobile phone pages the Bluetooth headset based on the headset address in a frequency hopping manner based on a user instruction. The Bluetooth headset scans external paging at a fixed carrier frequency interval, and after scanning paging of the mobile phone, responds to the paging.
(2) An asynchronous connectionless ACL link is established between the mobile phone and the Bluetooth headset according to a link management protocol (link manager Protocol, LMP).
(3) The mobile phone and the Bluetooth headset establish a channel connection (channel link) based on a link control and adaptation specification (logical link control and adaption protocol, L2CAP).
(4) The mobile phone queries, through a session description specification (session description protocol, SDP), specifications (Profile) supported by the Bluetooth headset, such as A2DP and HFP, so as to establish an application connection.

S2502: The Bluetooth headset recognizes whether the user of the Bluetooth headset is the owner.

In some embodiments, when the Bluetooth headset and the mobile phone are associated with a same account, the Bluetooth headset recognizes whether the user of the Bluetooth headset is the owner. This is because when a plurality of electronic devices share one Bluetooth headset, although an owner usually connects the Bluetooth headset to only an electronic device of the owner, a case in which an electronic device of a non-owner is connected cannot be excluded. Therefore, the Bluetooth headset needs to determine whether an electronic device connected to the Bluetooth headset is an electronic device of the owner. Specifically, when the mobile phone and the Bluetooth headset are associated with a same account, it is considered that the mobile phone belongs to the owner, and the call method provided in this embodiment is executed. When the mobile phone and the Bluetooth headset are associated with different accounts, it is considered that the mobile phone does not belong to the owner, and the Bluetooth headset controls an electronic device of a non-owner. Therefore, the call method provided in this embodiment is not executed.

In some other embodiments, it may not be determined whether the Bluetooth headset and the mobile phone are associated with a same account. That is, regardless of whether the mobile phone is a mobile phone of the owner, the call method provided in this embodiment is executed.

For the Bluetooth headset, an owner recognition manner of the Bluetooth headset varies based on different user settings. For example, the owner recognition manner may be ear canal recognition, bone voiceprint recognition, voice password recognition, or the like. A specific implementation of the owner recognition manner is not limited in this embodiment.

Ear canal recognition determines, based on an ear canal feature of the user, whether the user is the owner. Specifically, after the user wears the Bluetooth headset, the Bluetooth headset emits a sound wave to the ear canal of the user. The sound wave passes through the tympanic membrane of the outer ear canal to the middle ear and the inner ear, and then is reflected back to the tympanic membrane, to form an acoustic resonance spectrum. Because each person has different ear canal features, when a same sound wave is propagated in different ear canals, acoustic resonance spectrums formed by the sound wave are different. The Bluetooth headset collects and analyzes the acoustic resonance spectrum. When the acoustic resonance spectrum of the user matches an acoustic resonance spectrum of the owner that is pre-stored in the Bluetooth headset, it is determined that the user is the owner. When ear canal feature information of the user does not match an acoustic resonance spectrum of the owner that is pre-stored in the Bluetooth headset, it is determined that the user is not the owner. The ear canal recognition technology is not affected by a movement state of a human body, and can accurately recognize a user identity even if the user is moving.

Bone voiceprint recognition uses a bone conduction technology to determine whether the user is the owner. Specifically, after the user wears the Bluetooth headset, the Bluetooth headset can collect, through a bone conduction sensor (voice pick-up unit, VPU), bone voiceprint information formed by propagating a sound wave through bones when the user speaks a specific word (for example, "my headset"). In addition, the Bluetooth headset captures word information through a microphone, and determines a target operation corresponding to the word. The Bluetooth headset is controlled with reference to the bone voiceprint information and the target operation. For example, when determining that the word information spoken by the user is "my headset", the Bluetooth headset matches the bone voiceprint information of the word captured by the VPU with preset bone voiceprint information when the owner speaks the word. If the two match, it is determined that the user is the owner. If the two do not match, it is determined that the user is not the owner.

Voice password recognition is to determine whether the user is the owner based on word information corresponding to a voice. Specifically, after the user wears the Bluetooth headset, the Bluetooth headset can capture, through the microphone, a word spoken by the user, and recognize the word. If the word is the same as a preset word (for example, "123456") stored in the Bluetooth headset, it is determined that the user is the owner. If the word is different from a preset term stored in the Bluetooth headset, it is determined that the user is not the owner.

Each time the user wears the headset, the Bluetooth headset is triggered to perform owner recognition. If the Bluetooth headset does not correctly recognize the owner (that is, fails in recognition, rather than recognizes that the user of the Bluetooth headset is not the owner), a pop-up box is displayed on the mobile phone or a prompt tone is played on the headset, to prompt the user that recognition fails and advise the user to perform recognition again. For example, if the Bluetooth headset currently uses ear canal recognition, after recognition fails, the user may be prompted to adjust a wearing position of the Bluetooth headset to perform recognition again. If the Bluetooth headset currently uses bone voiceprint recognition or voice recognition, after recognition fails, the user may be prompted to speak a recognition password again to perform owner recognition again.

S2503: The Bluetooth headset sends a person recognition function notification to the mobile phone, where the notification includes indication information indicating that the person recognition call function the Bluetooth headset has been enabled, and an owner recognition result.

In some embodiments, after completing owner recognition, the Bluetooth headset may actively send the person recognition function notification to the mobile phone through a Bluetooth link.

In some other embodiments, because the person recognition call function of the Bluetooth headset is generally implemented through a preset person recognition call specification, the mobile phone may also query, through an SDP service, whether the Bluetooth headset has the person recognition call function. After receiving a query message sent by the mobile phone, the Bluetooth headset may send a response message to the mobile phone. The response message includes the foregoing human recognition function notification.

S2504: The mobile phone sends a first response message to the Bluetooth headset, where the first response message is used to indicate that the mobile phone has the person recognition call function.

The Bluetooth headset is not sure about whether the connected mobile phone has the person recognition call function. Therefore, the mobile phone needs to make a response after receiving the person recognition function notification. Specifically, when the mobile phone has the person recognition call function, the mobile phone sends the first response message to the Bluetooth headset, to indicate that the mobile phone has the person recognition call function. When the mobile phone does not have the person recognition call function, the mobile phone cannot recognize the person recognition function notification. Therefore, the mobile phone sends a second response message to the Bluetooth headset, to indicate that the mobile phone does not have the person recognition call function.

S2505: The mobile phone enters a call state, and performs call notification locally.

The call state includes an incoming call or an outgoing call. Call notification includes incoming call notification and outgoing call notification. When the mobile phone receives an incoming call, the mobile phone performs incoming call notification locally, and displays an incoming call interface. In addition, if the mobile phone is not in silent mode, the mobile phone rings to perform incoming call notification. If the mobile phone is in vibration mode, the mobile phone vibrates to perform incoming call notification. When the mobile phones make an outgoing call, the mobile phone locally displays an outgoing call interface for outgoing call notification. It should be understood that, regardless of whether the mobile phone finally indicates the Bluetooth headset to perform call notification, the mobile phone locally performs call notification, to notify the user of an incoming/outgoing call.

After S2505, when the current user of the Bluetooth headset is not the owner, S2506 is performed, and S2507 to S2511 are not performed. When the current user of the Bluetooth headset is the owner, S2506 is not performed, and S2507 to S2511 are performed.

S2506: When the user of the Bluetooth headset is not the owner, the mobile phone outputs a voice locally after a call is answered.

When the mobile phone makes an outgoing call, after a peer end answers the outgoing call, a voice in the current call is output locally.

When the mobile phone receives an incoming call, the mobile phone may answer the call based on a first answering operation of the user of the mobile phone. After the call is answered, the mobile phone locally outputs a voice. In this embodiment, the first answering operation includes sliding (including sliding up, sliding down, sliding left, and sliding right) an answer icon on the incoming call interface of the mobile phone, tapping the answer icon, placing the mobile phone close to an ear, touching and holding a fingerprint sensor, and the like. After the call is answered, a local earpiece of the mobile phone plays a call voice of the peer end, and a local microphone of the mobile phone collects a voice of the user.

In addition, the user of the mobile phone may perform a local operation on the mobile phone to reject the call. For example, the call may be rejected by tapping or sliding (including sliding up, sliding down, sliding left, and sliding right) a call rejection icon, or by pressing a power button disposed on a side wall of the mobile phone.

In some embodiments, if the user expects that the voice in the current call is output on a Bluetooth headset side, for example, in the scenario shown in FIG. 22, the owner (that is, the user A) expects the user B to answer the call, after the call is answered, the user may manually select, on the call interface, to switch the voice in the current call to the Bluetooth headset for output. Otherwise, the Bluetooth headset does not output the voice.

In conclusion, in a case in which the mobile phone has the person recognition call function, when the user of the Bluetooth headset is not the owner, when the mobile phone receives an incoming call or makes an outgoing call, call notification is performed only locally, and the Bluetooth headset is not notified to perform the call service. According to the method, user experience when a non-owner uses the Bluetooth headset can be improved, and a problem that call privacy of the owner is leaked because a call is answered by the non-owner is also avoided to some extent.

Based on this, with reference to the application scenario of the Bluetooth headset shown in FIG. 22, it can be learned that, when the user B uses the Bluetooth headset, even if the mobile phone of the user A receives an incoming call or makes an outgoing call, headset use experience of the user B is not affected, and the user B cannot answer the call of the mobile phone through the Bluetooth headset, thereby ensuring call privacy of the user A to some extent.

S2507: When the user of the Bluetooth headset is the owner, the mobile phone sends a call message to the Bluetooth headset.

In this embodiment, the mobile phone sends the call message to the Bluetooth headset based on an attention (Attention, AT) command in the HFP protocol. The call message includes an incoming call message or an outgoing call message. When the mobile phone receives an incoming call, the mobile phone sends an incoming call message to the Bluetooth headset to prompt the user. When the mobile phone makes an outgoing call, the mobile phone sends an outgoing call message to the Bluetooth headset to prompt the user. In addition, the call message further includes a call notification manner of the Bluetooth headset, for example, playing audio information carried in the incoming call message to perform call notification, or playing local preset audio of the Bluetooth headset to perform call notification.

S2508: The mobile phone sends an eSCO link establishment request to the Bluetooth headset.

It should be noted that, in the solution provided in this embodiment of this application, whether a link for a voice call is an SCO link or an eSCO link is not limited. For ease of description, the following uses the eSCO link as an example to describe this solution.

The eSCO link is used to transmit a call audio stream. Audio information during a call may be transmitted only after the Bluetooth headset establishes an eSCO link with the mobile phone. It should be understood that, regardless of an incoming call or an outgoing call of the mobile phone, the mobile phone needs to establish an eSCO link with Bluetooth to transmit a call audio stream. Therefore, when receiving an incoming or making an outgoing call, the mobile phone needs to actively request the Bluetooth headset to establish an eSCO link.

S2509: The Bluetooth headset accepts the eSCO link establishment request, and performs call notification locally.

After the Bluetooth headset accepts the eSCO link establishment request from the mobile phone, the eSCO link is established successfully, and the Bluetooth headset successfully establishes an HFP connection to the mobile phone. The Bluetooth headset may play an incoming call prompt tone or an outgoing call prompt tone of the current call based on the HFP connection to the mobile phone. Alternatively, the Bluetooth headset may control a call function of the mobile phone, for example, a function such as answering, ending, rejecting, or voice dialing.

S2510: The Bluetooth headset outputs the voice in the call after the call is answered.

When the mobile phone receives an incoming call, in a case in which the Bluetooth headset is currently worn by the owner, the mobile phone may answer the call based on a first answering operation of the user on the mobile phone, or may answer the call based on a second answering operation of the user on the Bluetooth headset. After the current call is answered, the Bluetooth headset outputs the voice by default. The call audio stream is transmitted between the Bluetooth headset and the mobile phone through the eSCO link. However, if the Bluetooth headset is currently not worn, after the current call is answered, the mobile phone locally outputs the voice.

In this embodiment, the second answering operation may be double-tapping a left headset, double-tapping a right headset, sending an answering voice instruction (for example, a voice "answer the call"), pressing a call answering button of the Bluetooth headset, or the like. After the call is answered, the earpiece of the Bluetooth headset plays the call voice of the peer end, and the microphone of the Bluetooth headset collects the voice of the local user, and sends the voice to the peer end through the mobile phone.

In addition, the call audio stream includes voice data of the peer end of the call, voice data of the local user collected by the Bluetooth headset, and other call audio, for example, an incoming call message of a new incoming call during the call.

When the mobile phone makes an outgoing call, in a case in which the Bluetooth headset is currently worn by the user, after a peer end answers the call, a voice in the current call is output on the Bluetooth headset side by default. Audio information during the call is transmitted between the Bluetooth headset and the mobile phone through eSCO link. However, if the Bluetooth headset is currently not worn, after the current call is answered, the mobile phone locally outputs the voice.

S2511: The call audio stream is transmitted between the mobile phone and the Bluetooth headset through the eSCO link.

After the call ends, the user may perform a local operation on the mobile phone to hang up the call, or may perform an operation on the Bluetooth headset side to hang up the phone, or may not wait for the peer end of the call to hang up the phone without performing an operation. This is not limited in this embodiment.

Based on the foregoing content, in the case in which the mobile phone has the person recognition call function, when the current user of the Bluetooth headset is the owner, and the mobile phone receives an incoming call or makes an outgoing call, the Bluetooth headset may be notified, through a normal procedure, to cooperate in performing the call service. Because the current user of the Bluetooth headset is the owner, privacy leakage of the owner after the user answers the call through the Bluetooth headset can be avoided.

In conclusion, it can be seen that, in the embodiment shown in FIG. 25, both the mobile phone and the Bluetooth headset have the person recognition call function. After the mobile phone enters the call state, the mobile phone locally decides whether to notify the Bluetooth headset of the call, so as to use the Bluetooth headset to cooperate in the call. The following describes a process of using the Bluetooth headset during a call when a mobile phone without a person recognition call function is in Bluetooth connection to the Bluetooth headset.

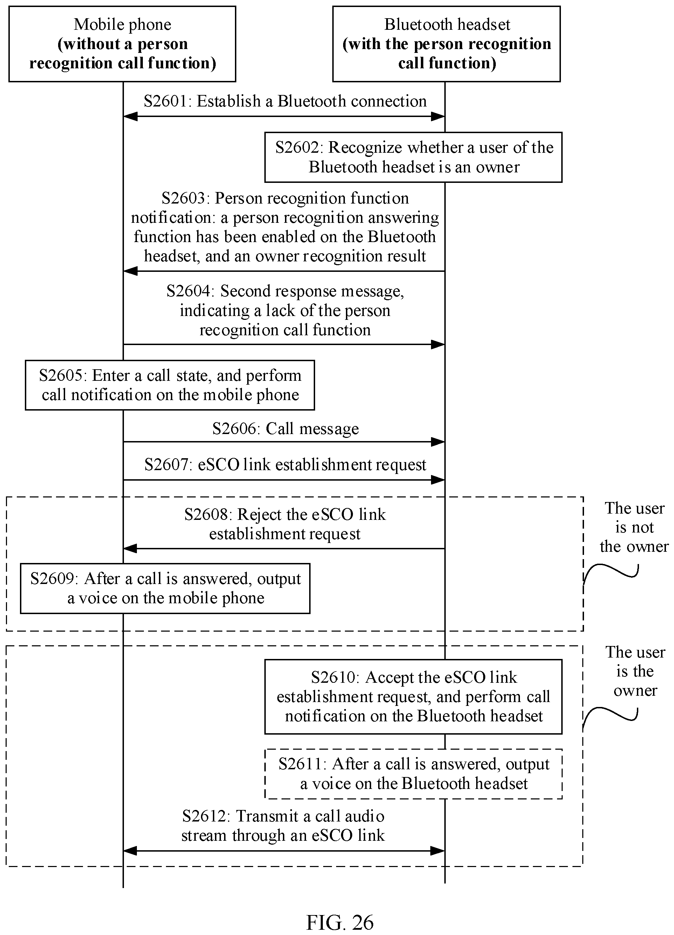

FIG. 26 is a flowchart of a call method according to another embodiment of this application, and relates to a process of how to use the Bluetooth headset during the call when the mobile phone without the person recognition call function is in Bluetooth connection to the Bluetooth headset.

S2601: The mobile phone establishes a Bluetooth connection to the Bluetooth headset.

S2602: The Bluetooth headset recognizes whether the user is the owner.

S2603: The Bluetooth headset sends a person recognition function notification to the mobile phone, where the notification includes indication information indicating that the person recognition call function of the Bluetooth headset has been enabled, and an owner recognition result.

For S2601 to S2603, refer to the descriptions of S2501 to S2503. Details are not described in this embodiment again.

S2604: The mobile phone sends a second response message to the Bluetooth headset, where the second response message is used to indicate that the mobile phone does not have the person recognition call function.

The person recognition call function of the mobile phone and the Bluetooth headset is usually implemented through proprietary protocols. When the mobile phone and the Bluetooth headset do not belong to a same supplier, the mobile phone may not have the person recognition call function, and cannot recognize the person recognition function notification sent by the Bluetooth headset. Therefore, the mobile phone needs to send the second response message to the Bluetooth headset, so as to notify the Bluetooth headset that the mobile phone does not have the person recognition call function.

S2605: The mobile phone enters a call state, and the mobile phone performs call notification locally.

In this embodiment, for details of S2605, refer to the description of S2505. Details are not described in this embodiment again.

S2606: The mobile phone sends a call message to the Bluetooth headset.

In this embodiment, because the mobile phone does not have a person recognition call capability, the mobile phone does not actively select, based on whether the current user of the Bluetooth headset is the owner, whether to use the Bluetooth headset for a call, but actively selects, according to a conventional method, to use the Bluetooth headset for the call after entering the call state, and sends the call message to the Bluetooth headset. For specific content of the call message, refer to S2507. Details are not described in this embodiment again.

S2607: The mobile phone sends an eSCO link establishment request to the Bluetooth headset.

In this embodiment, for details of S2607, refer to the description of S2508. Details are not described in this embodiment again.

After S2607, when the current user of the Bluetooth headset is not the owner, S2608 to S2609 are performed, and S2610 to S2612 are not performed. When the current user of the Bluetooth headset is the owner, S2608 to S2609 are not performed, and S2610 to S2612 are directly performed.

S2608: When the mobile phone does not have the person recognition call function, and the user of the Bluetooth headset is not the owner, the Bluetooth headset rejects the eSCO link establishment request of the mobile phone.

After the Bluetooth headset rejects the eSCO link establishment request of the mobile phone, establishment of an eSCO link between the mobile phone and the Bluetooth headset fails, and establishment of an HFP connection also fails. When the mobile phone receives an incoming call or makes an outgoing call, the Bluetooth headset does not perform call notification, and the user cannot answer, through the Bluetooth headset, reject, or end the call. In addition, the user can only answer, reject, or end the call on the mobile phone.

S2609: After the call is answered, the mobile phone locally outputs a voice.

In this embodiment, for details of S2609, refer to S2506. Details are not described in this embodiment again.

It can be learned based on the foregoing content that, although the mobile phone does not have the person recognition call function, the method provided in this embodiment can also be implemented. When the user of the headset is not the owner, the mobile phone performs call notification only locally when receiving an incoming call or making an outgoing call, and the Bluetooth headset does not perform call notification. According to the method, not only is use experience of a non-owner using the Bluetooth headset improved, but also a problem that call privacy of the owner is leaked because a call is answered by the non-owner is avoided to some extent.

Based on this, with reference to the application scenario of the Bluetooth headset shown in FIG. 22, it can be learned that, when the user B uses the Bluetooth headset, even if the mobile phone of the user A receives an incoming call or makes an outgoing call, headset use experience of the user B is not affected, and the user B cannot answer the call of the mobile phone through the Bluetooth headset, thereby ensuring call privacy of the user A to some extent.

S2610: When the mobile phone does not have the person recognition call function, and the user of the headset is the owner, the Bluetooth headset accepts the eSCO link establishment request, and the Bluetooth headset locally performs call notification.

In S2610, for content that the Bluetooth headset accepts the eSCO link establishment request and locally performs call notification, refer to S2509. Details are not described in this embodiment again.

S2611: After the call is answered, the Bluetooth headset outputs a voice.

S2612: A call audio stream is transmitted between the Bluetooth headset and the mobile phone through an eSCO link.

Specifically, for S2611 to S2612, refer to S2510 to S2511. Details are not described in this embodiment again.

Based on the foregoing content, through the method provided in this embodiment, when the mobile phone does not have the person recognition call function, the mobile phone automatically selects by using a conventional method to use the Bluetooth headset for the call after entering the call state, and the Bluetooth headset decides, based on whether the user of the headset is the owner, to establish the HFP connection to cooperate with the mobile phone in the call, including: When the user of the Bluetooth headset is the owner, the Bluetooth headset is used to cooperate in the call. In addition, when the wearer of the Bluetooth headset is not the owner, the HFP specification is not activated, and the Bluetooth headset is not used to cooperate in the call. In addition, the user cannot perform an operation on the current call on the Bluetooth headset side, so as to avoid a case in which the user answers the call of the owner and call privacy of the owner is leaked.

In conclusion, it can be learned that in the embodiment shown in FIG. 26, when the mobile phone does not have the person recognition call function, but the Bluetooth headset has the person recognition call function, the mobile phone uses the headset according to a normal headset use process after entering the call state, and the Bluetooth headset decides, based on the owner recognition result, whether to locally perform call notification and whether to cooperate with the mobile phone in the call.

In some embodiments, based on that the Bluetooth headset may independently determine whether to cooperate with the mobile phone in the call service, in the technical solution provided in FIG. 26, S2603 and S2604 may not be separately performed. After entering the call state, the mobile phone requests the Bluetooth headset to establish the eSCO link according to a normal call process. Regardless of whether the mobile phone has the person recognition call capability, the Bluetooth headset completely independently decides whether to accept the request to cooperate with the mobile phone in the call.

In addition, in some other embodiments, based on that the mobile phone supports person recognition call, the user may set, in the mobile phone, whether to enable the person recognition call function of the mobile phone. If the user enables the person recognition call function of the mobile phone, it indicates that the user wants to perform privacy notification during the call, and the Bluetooth headset worn by the non-owner is not notified of an incoming or an outgoing call on the mobile phone Specifically, when the person recognition call function of the mobile phone is enabled, and the person recognition call function of the Bluetooth headset is also enabled, the call method shown in FIG. 25 may be performed.

If the user disables the person recognition call function of the mobile phone, it indicates that the user does not want to perform privacy notification on the call of the mobile phone. Specifically, after the person recognition call function of the mobile phone is disabled, regardless of whether the person recognition call function of the Bluetooth headset is enabled, the mobile phone controls the Bluetooth headset to normally perform call notification. It may be understood that, after the person recognition call function of the mobile phone is disabled, even if the person recognition call function of the Bluetooth headset is enabled, and a person recognition function notification is sent to the mobile phone, the mobile phone ignores the notification, and normally uses the Bluetooth headset.

In a process in which the electronic device 1 and the electronic device 2 share the same Bluetooth headset, the Bluetooth headset keeps Bluetooth connections to the two electronic devices at the same time, power consumption of the Bluetooth headset is relatively high, and a use time after charging is relatively short. Therefore, in a possible implementation, in a process in which a plurality of electronic devices share the same Bluetooth headset, the Bluetooth headset may establish a Bluetooth connection only to an electronic device that initiates a service (including a media service or a call service), and establish a broadcast connection to another electronic device. Because power consumption in the broadcast connection is relatively low, the power consumption of Bluetooth can be reduced by this method.

In this embodiment, the broadcast connection between the Bluetooth headset and the electronic device means that, based on that the Bluetooth headset is paired with the electronic device, the Bluetooth headset broadcasts status information (for example, a service status) of the headset, and the electronic device receives the status information broadcast by the Bluetooth headset, and learns a current working condition of the Bluetooth headset through the status information. When needing to initiate an audio service to the Bluetooth headset, the electronic device establishes a connection to the Bluetooth headset according to the working condition of the Bluetooth headset, and transmits audio information through an ACL link or an SCO link. For example, when the Bluetooth headset is in the idle state or processes a low-priority service, the electronic device may establish the connection to the Bluetooth headset to preempt the Bluetooth headset.

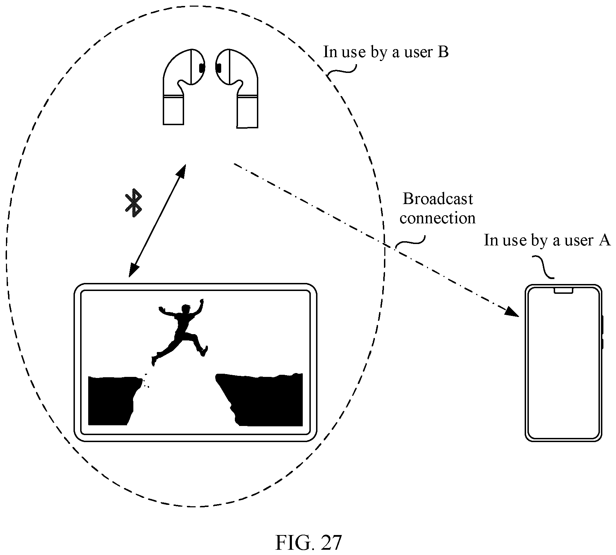

FIG. 27 is a schematic diagram of an application scenario of a Bluetooth headset according to another embodiment of this application. As shown in FIG. 27, the Bluetooth headset is in Bluetooth connection to the tablet computer Bluetooth, and is in broadcast connection to the mobile phone. The tablet computer currently plays a video, and plays, based on an A2DP connection to the Bluetooth headset, a sound in the video through the Bluetooth headset. In this case, when the mobile phone receives an incoming call or makes an outgoing call, because a priority of a call service is higher than a priority of a media service, the mobile phone first establishes a Bluetooth connection to the Bluetooth headset. Subsequently, the Bluetooth headset is preempted automatically or based on a user instruction to perform the call service. Specifically, the Bluetooth headset may interrupt the A2DP connection or an ACL link to the tablet computer, and establish an HFP connection to the mobile phone to cooperate with the mobile phone in a call.

Refer to the description of the scenario shown in FIG. 22. Based on a scenario shown in FIG. 27, when the mobile phone receives an incoming call or makes an outgoing call, the mobile phone also preempts the Bluetooth headset. As a result, privacy of the owner may be leaked, and headset use experience of the non-owner is affected. Therefore, in this embodiment of this application, the following call method may be used to determine whether to use the Bluetooth headset to cooperate in a call during the call.

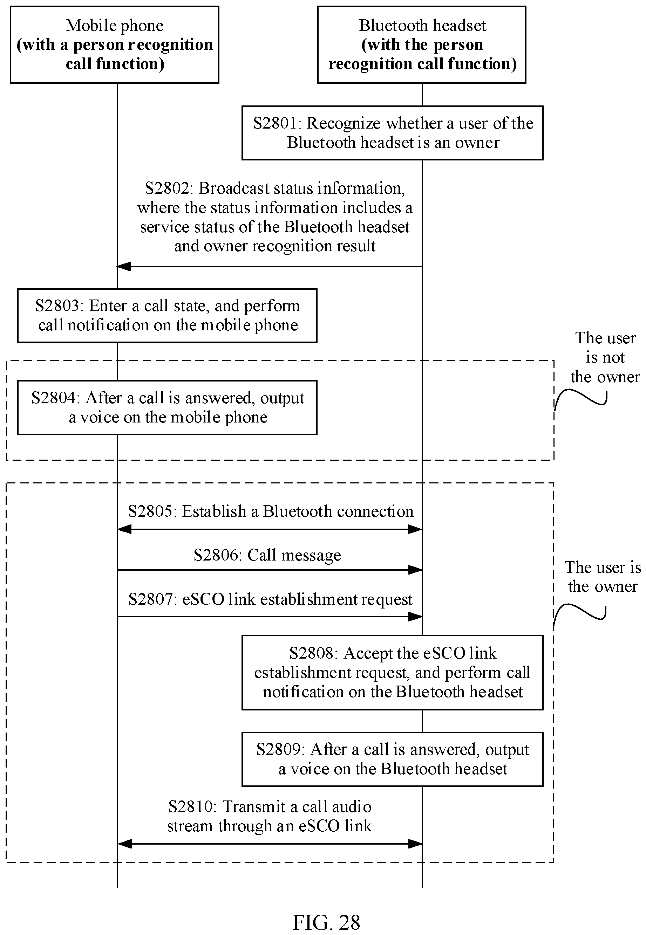

FIG. 28 is a flowchart of a call method according to still another embodiment of this application, and relates to a process of how to use the Bluetooth headset during the call when a mobile phone with the person recognition call function is in broadcast connection to the Bluetooth headset.

S2801: The Bluetooth headset recognizes whether the user is the owner.

Specifically, for S2801, refer to S2502. Details are not described in this embodiment again.

S2802: The Bluetooth headset broadcasts status information to the mobile phone, where the status information includes a service status of the Bluetooth headset and an owner recognition result.

In some embodiments, the Bluetooth headset may broadcast the status information of the Bluetooth headset to the mobile phone through a HiBeacon broadcast. For example, refer to Table 1. The HiBeacon broadcast may include a broadcast address, a length, a type, a universally unique identifier (Universally Unique Identifier, UUID), device information, and a device status. In this embodiment, the status information of the headset may be added to the device status, so that the status information of the Bluetooth headset is sent to the mobile phone through the HiBeacon broadcast.

**Table 1 Format of HiBeacon broadcast**

| | | | | | |
|---|---|---|---|---|---|
| Adv Address (broadcast address) | Length (length) | AD Type (broadcast type) | UUID (universally unique identifier) | Device Info (device information) | Device Status (device status) |

Specifically, based on that the Bluetooth headset has been paired with the mobile phone, the Bluetooth headset broadcasts the status information of the Bluetooth headset to the mobile phone at intervals of a preset time based on an address of the mobile phone. The status information includes at least the service status and the owner recognition result. The service status includes an idle state, a media service, a call service, or the like. Different services may correspond to different priorities, and a higher-priority service may be first processed by the Bluetooth headset. The owner recognition result is used to indicate whether the current user of the Bluetooth headset is the owner, and includes two cases: the current user is the owner or a non-owner.

Optionally, the status information of the Bluetooth headset further includes a wearing status. The wearing status is used to indicate whether the Bluetooth headset is currently worn by the user, and includes two cases: worn and not worn. The mobile phone determines, based on whether the Bluetooth headset is worn, whether to use the Bluetooth headset. When the mobile phone is an electronic device of the owner, the Bluetooth headset recognizes whether the current user of the headset is the owner, so as to subsequently determine, based on the owner recognition result when the mobile phone receives an incoming call or makes an outgoing call, whether to use the Bluetooth headset to cooperate in the call.

Optionally, the status information of the Bluetooth headset further includes power information, a device model, a device name, a connection status, and the like. The connection status includes discoverable, pairable, connectable, or the like.

S2803: The mobile phone enters a call state, and performs call notification locally.

Specifically, for S2803, refer to S2505. Details are not described in this embodiment again.

After S2803, when the user of the Bluetooth headset is not the owner, S2804 is performed, and S2805 to S2809 are not performed. When the user of the Bluetooth headset is the owner, S2804 is not performed, and S2805 to S2809 are directly performed.

S2804: When the user of the Bluetooth headset is not the owner, the mobile phone does not establish a Bluetooth connection to the Bluetooth headset, and the mobile phone locally outputs a voice after the call is answered.

Specifically, in S2804, for specific content that the mobile phone locally outputs a voice after the call is answered, refer to S2506. Details are not described in this embodiment again.

S2805: When the user of the Bluetooth headset is the owner, the mobile phone establishes a Bluetooth connection to the Bluetooth headset.

In this embodiment, based on that the current user of the Bluetooth headset is the owner, if a level of a current service of the Bluetooth headset is lower than that of the call service, the mobile phone preempts the Bluetooth headset, and establishes the Bluetooth connection to the Bluetooth headset. When the level of the current service is equal to or higher than that of the call service, the Bluetooth connection to the Bluetooth headset is not established, and only call notification is performed locally.

Optionally, the mobile phone determines, based on whether the Bluetooth headset is worn, whether to use the Bluetooth headset. Specifically, when the current user of the Bluetooth headset is the owner, and the level of the current service of the Bluetooth headset is lower than that of the call service, if the Bluetooth headset is worn, the mobile phone establishes the Bluetooth connection to the Bluetooth headset. If the Bluetooth headset is not worn, the mobile phone does not establish the Bluetooth connection to the Bluetooth headset.

It should be noted that, when the mobile phone is in broadcast connection to the Bluetooth headset, the mobile phone has been paired with the Bluetooth headset, and a shared link key (link key) has been created. The link key may be used for authentication when the two devices establish the Bluetooth connection. Specifically, the mobile phone and the Bluetooth headset quickly verify, through a character derived from the Bluetooth key, whether each other has a matched link key. If the link keys match, the phone and Bluetooth headset may continue to create a session password and establish the Bluetooth connection.

S2806: The mobile phone sends a call message to the Bluetooth headset.

S2807: The mobile phone sends an eSCO link establishment request to the Bluetooth headset.

S2808: The Bluetooth headset accepts the eSCO link establishment request, and performs call notification locally.

S2809: After the call is answered, the Bluetooth headset outputs a voice.

S2810: A call audio stream is transmitted between the mobile phone and the Bluetooth headset through an eSCO link.

Specifically, for S2806 to S2810, refer to S2507 to S2511. Details are not described in this embodiment again.

Based on the foregoing content, when the current user of the Bluetooth headset is not the owner, the mobile phone only performs call notification locally, and does not establish the Bluetooth connection to the Bluetooth headset, and does not indicate the Bluetooth headset to perform call notification. According to the method, user experience of a non-owner using the Bluetooth headset can be improved, and a problem that call privacy of the owner is leaked because a call is answered by the non-owner is also avoided to some extent.

With reference to the application scenario of the Bluetooth headset shown in FIG. 27, it can be learned that, when the user B uses the Bluetooth headset, even if the mobile phone receives an incoming call or makes an outgoing call, headset use experience of the user B is not affected, and the user B cannot answer the call of the mobile phone, thereby ensuring call privacy of the user A to some extent.

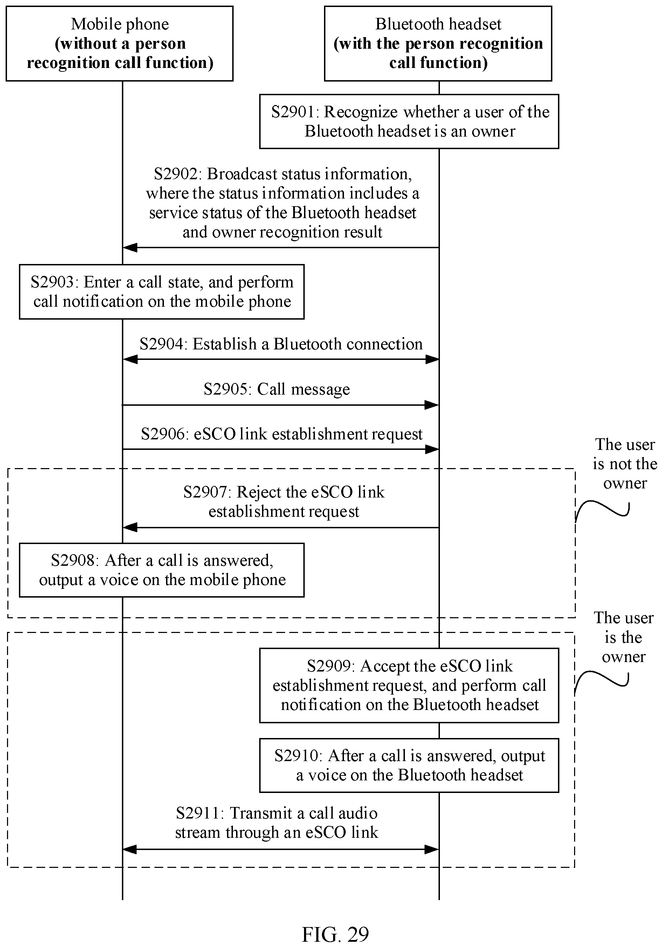

Because the person recognition call function of the mobile phone and the Bluetooth headset is generally implemented through proprietary person recognition call protocols, when the mobile phone and the Bluetooth headset do not belong to a same supplier, the mobile phone may not have the person recognition call function. Therefore, in this embodiment, when the mobile phone does not have the person recognition call function, but this function of the Bluetooth headset is enabled, the mobile phone and the Bluetooth headset may use the call method shown in FIG. 29 to perform call notification.

FIG. 29 is a flowchart of a call method according to yet another embodiment of this application, and relates to a process of how to use the Bluetooth headset during a call when a mobile phone without the person recognition call function is in broadcast connection to the Bluetooth headset.

S2901: The Bluetooth headset recognizes whether the user of the Bluetooth headset is the owner.

S2902: The Bluetooth headset broadcasts status information to the mobile phone, where the status information includes a service status of the Bluetooth headset and an owner recognition result.

S2903: The mobile phone enters a call state, and performs call notification locally.

S2904: The mobile phone establishes a Bluetooth connection to the Bluetooth headset.

In a case in which the mobile phone is in broadcast connection to the Bluetooth headset, because the mobile phone does not have the person recognition call function, that is, the mobile phone cannot locally determine, based on whether the user of the headset is the owner, whether to use the Bluetooth headset, after the mobile phone enters the call state, the Bluetooth headset is used by default, and S2904 to S2906 are performed.

S2905: The mobile phone sends a call message to the Bluetooth headset.

S2906: The mobile phone sends an eSCO link establishment request to the Bluetooth headset.

For specific content of S2901 to S2906, refer to S2801 to S2803 and S2805 to S2807. Details are not described in this embodiment again.

In a case in which the mobile phone does not have the person recognition call function, but person recognition call of the Bluetooth headset is enabled, after receiving the call message sent by the mobile phone, the Bluetooth headset locally determines, based on whether the user of the headset is the owner, whether to cooperate with the mobile phone in a call. Specifically, after S2906, when the current user of the Bluetooth headset is not the owner, S2907 to S2908 are performed, and S2909 to S2911 are not performed. When the current user of the Bluetooth headset is the owner, S2907 to S2908 are not performed, and S2909 to S2911 are directly performed.

S2907: When the user of the headset is not the owner, the Bluetooth headset rejects an eSCO link establishment request of the mobile phone.

S2908: After the call is answered, the mobile phone locally outputs a voice.

Specifically, for S2907 to S2908, refer to S2608 to S2609. Details are not described in this embodiment again.

S2909: When the user of the headset is the owner, the Bluetooth headset accepts an eSCO link establishment request, and performs call notification locally.

S2910: After the call is answered, the Bluetooth headset outputs a voice.

S2911: A call audio stream is transmitted between the mobile phone and the Bluetooth headset through an eSCO link.

Specifically, for S2909 to S2911, refer to S2610 to S2612. Details are not described in this embodiment again.

According to the call method provided in this embodiment of this application, when the mobile phone and the Bluetooth headset are in broadcast connection, even if the mobile phone and the Bluetooth headset do not belong to a same supplier, and the mobile phone does not have the person recognition call function, the mobile phone can still implement person recognition call during the call. That is, when the owner uses the Bluetooth headset, the Bluetooth headset performs call notification, and cooperates with the mobile phone in the call. When the owner does not use the Bluetooth headset, the Bluetooth headset does not perform call notification, and does not cooperate with the mobile phone in a voice call.

Based on this, with reference to the application scenario of the Bluetooth headset shown in FIG. 27, it can be learned that, when the user B uses the Bluetooth headset, even if the mobile phone receives an incoming call or makes an outgoing call, headset use experience of the user B is not affected, and the user B cannot answer the call of the mobile phone, thereby ensuring call privacy of the user A to some extent.

In addition, a private call, that is, a call that is not convenient for the non-owner to answer, may be set in the mobile phone. Based on this, in a case in which the mobile phone is in Bluetooth or broadcast connection to the Bluetooth headset, the mobile phone may select different manners to use the Bluetooth headset.

In some embodiments, when there is an incoming/outgoing private call, the mobile phone performs the call method provided in this application, that is, determines, based on whether the user of the headset is the owner, whether to use the Bluetooth headset to cooperate with the mobile phone in private call. However, for another nonprivacy call, regardless of whether the user of the headset is the owner, the call is notified to the Bluetooth headset, so as to use the Bluetooth headset to cooperate with the mobile phone in the call.

In some other embodiments, when there is an incoming/outgoing private call on the mobile phone, regardless of whether the user of the headset is the owner, the Bluetooth headset is not used to cooperate in the call, so as to ensure user privacy as much as possible. In addition, this embodiment is also extended to a case in which the mobile phone is connected to another electronic device (for example, an in-vehicle call apparatus or a Bluetooth sound box).

In conclusion, when a plurality of electronic devices share one Bluetooth headset, according to the call method provided in this embodiment, call privacy of the owner can be protected to some extent, and user experience when the non-owner uses the Bluetooth headset can be improved.

The embodiments described in this specification may be independent solutions, or may be combined based on internal logic, to achieve different technical effects. These solutions fall within the protection scope of this application.

A specific structure of the execution body of the method provided in embodiments of this application is not specially limited in embodiments of this application, provided that a program recording code for the method provided in embodiments of this application can be run to implement the method provided in embodiments of this application. To implement functions in the method provided in embodiments of this application, the Bluetooth headset may include a hardware structure and/or a software module, and the foregoing functions are implemented in a form of a hardware structure, a software module, or both a hardware structure and a software module. Whether a function in the foregoing functions is performed by using the hardware structure, the software module, or the combination of the hardware structure and the software module depends on particular applications and design constraints of the technical solutions.

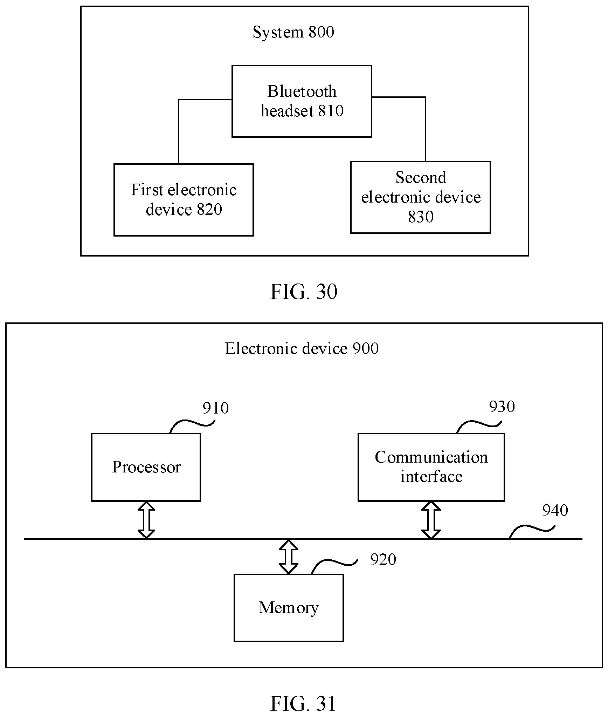

FIG. 30 is a schematic block diagram of an audio control system 800 according to an embodiment of this application. The system 800 includes a Bluetooth headset 810, a first electronic device 820, and a second electronic device 830. The Bluetooth headset 810 establishes a first Bluetooth connection to the first electronic device 820, and establishes a second Bluetooth connection to the second electronic device 830. The first Bluetooth connection and the second Bluetooth connection support media audio stream transmission and call audio stream transmission.

In a feasible embodiment, the system 800 provided in this embodiment of this application may correspondingly perform the audio control methods corresponding to the first solution, the second solution, and the third solution in the first scenario described in embodiments of this application. Through the system 800, in a case in which a Bluetooth headset establishes Bluetooth connections with two electronic devices, when the Bluetooth headset transmits a media audio stream of a media service with one of the electronic devices, if the other electronic device initiates a media service, for the media services initiated by both devices, the first initiated service first preempts the Bluetooth headset, and the media service initiated later does not preempt the Bluetooth headset. The Bluetooth connection between the Bluetooth headset and the electronic device that fails in preemption is interrupted, or a message is sent to the electronic device that fails in preemption to indicate the electronic device that fails in preemption to disable the Bluetooth headset. In this way, the electronic device that succeeds in preemption may output the media audio stream through the Bluetooth headset, and the electronic device that fails in preemption may output a media audio stream through the electronic device that fails in preemption or another Bluetooth audio device, so as to avoid service concurrency on a Bluetooth headset side. Therefore, a problem in a related technology of information loss caused by a service conflict that occurs when a plurality of electronic devices connected to a Bluetooth device all initiate audio services can be solved.

In a feasible embodiment, the system 800 provided in this embodiment of this application may correspondingly perform the audio control methods corresponding to the first solution, the second solution, and the third solution in the second scenario described in embodiments of this application. Through the system 800, in a case in which a Bluetooth headset establishes Bluetooth connections with two electronic devices, when the Bluetooth headset transmits a media audio stream of a media service with one of the electronic devices, if the other electronic device initiates a call service, because a priority of the call service is set higher than that of the media service, the call service may preempt the Bluetooth headset to output a call audio stream. The Bluetooth connection between the Bluetooth headset and the other electronic device is interrupted, or a message is sent to the other electronic device to indicate the other electronic device to disable the Bluetooth headset. In this way, the electronic device that succeeds in preemption may output the call audio stream through the Bluetooth headset, and the electronic device that fails in preemption may output the media audio stream through the electronic device that fails in preemption or another Bluetooth audio device, so as to avoid service concurrency on a Bluetooth headset side. Therefore, a problem in a related technology of information loss caused by a service conflict that occurs when a plurality of electronic devices connected to a Bluetooth device all initiate audio services can be solved.

In a feasible embodiment, the system 800 provided in this embodiment of this application may correspondingly perform the audio control method corresponding to the first solution, the second solution, and the third solution in the third scenario described in embodiments of this application. Through the system 800, in a case in which a Bluetooth headset establishes Bluetooth connections with two electronic devices, when the Bluetooth headset transmits a call audio stream of a call service with one of the electronic devices, if the other electronic device initiates a call service later, for the call services initiated by both devices, the latter path of call service may preempt the Bluetooth headset prior to the previous path of call service. The Bluetooth connection between the Bluetooth headset and the electronic device that fails in preemption is interrupted, or a message is sent to the electronic device that fails in preemption to indicate the electronic device that fails in preemption to disable the Bluetooth headset. In this way, the electronic device that succeeds in preemption may output a call audio stream through the Bluetooth headset, and the electronic device that fails in preemption may output the call audio stream through the electronic device that fails in preemption or another Bluetooth audio device, so as to avoid service concurrency on a Bluetooth headset side. Therefore, a problem in a related technology of information loss caused by a service conflict that occurs when a plurality of electronic devices connected to a Bluetooth device all initiate audio services can be solved.

In a feasible embodiment, the system 800 provided in this embodiment of this application may correspondingly perform the call method described in embodiments of this application. Through the system 800, during a call, a mobile phone may determine, based on whether a user of a Bluetooth headset is an owner, whether to use the Bluetooth headset to cooperate in the call. When the user of the Bluetooth headset is the owner, the Bluetooth headset is used to cooperate in the call. When the user of the Bluetooth headset is not the owner, the mobile phone locally outputs a voice in the call. When a plurality of devices share one Bluetooth headset, through the call method provided in this embodiment, call privacy of the owner can be protected to some extent, and user experience when a non-owner uses the Bluetooth headset can be improved.

The system 800 provided in this embodiment of this application may correspondingly perform the audio control method described in embodiments of this application, and the foregoing and other operations and/or functions of the modules in the system 800 are separately used to implement corresponding procedures of the method. For brevity, details are not described herein again.

FIG. 31 is a schematic diagram depicting a structure of an electronic device 900 according to an embodiment of this application. The electronic device 900 includes a processor 910, a memory 920, a communication interface 930, and a bus 940.

The processor 910 may be connected to the memory 920. The memory 920 may be configured to store program code and data. Therefore, the memory 920 may be a storage unit in the processor 910, an external storage unit independent of the processor 910, or a component including the storage unit in the processor 910 and the external storage unit independent of the processor 910.

Optionally, the electronic device 900 may further include the bus 940. The memory 920 and the communication interface 930 may be connected to the processor 910 by using the bus 940. The bus 940 may be a peripheral component interconnect (peripheral component interconnect, PCI) bus, an extended industry standard architecture (extended industry standard architecture, EISA) bus, or the like. The bus 940 may be categorized into an address bus, a data bus, a control bus, or the like. For ease of representation, only one line is used in FIG. 31 for representation, but it does not mean that there is only one bus or one type of bus.

It should be understood that in this embodiment of this application, the processor 910 may be a central processing unit (central processing unit, CPU). The processor may alternatively be a general-purpose processor, a digital signal processor (digital signal processor, DSP), an application-specific integrated circuit (application-specific integrated circuit, ASIC), a field programmable gate array (field programmable gate array, FPGA) or another programmable logic device, discrete gate or transistor logic device, discrete hardware component, or the like. The general-purpose processor may be a microprocessor, or the processor may be any conventional processor or the like. Alternatively, the processor 910 is configured to execute a related program by using one or more integrated circuits, to implement technical solutions provided in embodiments of this application.

The memory 920 may include a read-only memory and a random access memory, and provides instructions and data to the processor 910. A part of the processor 910 may further include a non-volatile random access memory. For example, the processor 910 may further store device type information.

When the electronic device 900 runs, the processor 910 executes computer executable instructions in the memory 920, to perform the operation steps of the foregoing method by using the system 800.

It should be understood that the electronic device 900 according to this embodiment of this application may correspond to the first electronic device or the second electronic device in the system 800 in embodiments of this application, and the foregoing and other operations and/or functions of the units in the system 800 are separately used to implement corresponding procedures of the method. For brevity, details are not described herein again.

Optionally, in some embodiments, an embodiment of this application further provides a computer-readable medium. The computer-readable medium stores program code. When the computer program code is run on a computer, the computer is enabled to perform the methods in the foregoing aspects.

Optionally, in some embodiments, an embodiment of this application further provides a computer program product. The computer program product includes computer program code. When the computer program code is run on a computer, the computer is enabled to perform the methods in the foregoing aspects.

In embodiments of this application, an electronic device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

Aspects or features of this application may be implemented as a method, an apparatus, or a product that uses standard programming and/or engineering technologies. The term "product" used in this specification may cover a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel, and various other media that can store, include, and/or carry instructions and/or data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM. For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit or module division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the methods described in embodiments of this application. The foregoing storage medium may include but is not limited to any medium that can store program code, such as a USB flash drive, a removable hard disk, a read-only memory (read-only memory, ROM), a random access memory (random access memory, RAM), a magnetic disk, or an optical disc.

Unless otherwise defined, all technical and scientific terms used in this specification have same meanings as those usually understood by a person skilled in the art of this application. The terms used in this specification of this application are merely for the purpose of describing specific embodiments, and are not intended to limit this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An audio control system, comprising a Bluetooth headset, a first electronic device, and a second electronic device, wherein the Bluetooth headset establishes a first Bluetooth connection to the first electronic device and establishes a second Bluetooth connection to the second electronic device, and the first Bluetooth connection and the second Bluetooth connection support media audio stream transmission and call audio stream transmission;
the first electronic device is configured to send a first media audio stream to the Bluetooth headset in response to a first operation of a user;
the Bluetooth headset is configured to receive the first media audio stream sent by the first electronic device, and output the first media audio stream;
the second electronic device is configured to output, in response to a second operation of the user, a second media audio stream through a first preset channel other than the Bluetooth headset; and
the Bluetooth headset is further configured to: when receiving the first operation of the user, perform at least one of the following actions: interrupting the second Bluetooth connection between the Bluetooth headset and the second electronic device, and sending a first message to the second electronic device, wherein the first message indicates that the Bluetooth headset is occupied.

2. The system according to claim 1, wherein the second electronic device is further configured to:
switch an audio channel of the second electronic device from the Bluetooth headset to the first preset channel if it is detected that the second Bluetooth connection between the Bluetooth headset and the second electronic device is interrupted; or
receive the first message sent by the Bluetooth headset, and switch an audio channel of the second electronic device from the Bluetooth headset to the first preset channel based on the first message.

3. The system according to claim 1 or 2, wherein
the second electronic device is further configured to display first prompt information when the audio channel of the second electronic device is switched from the Bluetooth headset to the first preset channel, wherein the first prompt information is used for prompting that the audio channel is already switched from the Bluetooth headset to the first preset channel.

4. The system according to any one of claims 1 to 3, wherein
the Bluetooth headset is further configured to perform a second action if the first media audio stream sent by the first electronic device is not received within preset duration, wherein the second action is any one of the following: when the second Bluetooth connection between the Bluetooth headset and the second electronic device is interrupted, reestablishing the second Bluetooth connection, and sending a second message to the second electronic device; or when the second Bluetooth connection is not interrupted, sending a second message to the second electronic device, wherein the second message indicates that the Bluetooth headset is not occupied; and
the second electronic device is further configured to receive the second message sent by the Bluetooth headset, and switch the audio channel of the second electronic device from the first preset channel to the Bluetooth headset based on the second message, or switch the audio channel of the second electronic device to the Bluetooth headset in response to a confirmation operation of the user for the second message, wherein the confirmation operation is used for triggering switching of the audio channel of the second electronic device to the Bluetooth headset.

5. The system according to any one of claims 1 to 4, wherein
the first electronic device is further configured to display a first audio switching interface in response to the first operation, wherein the first audio switching interface comprises at least two audio channel options and channel usage status information, the at least two audio channel options comprise a Bluetooth headset option, and the channel usage status information indicates that the Bluetooth headset is being used; and
the second electronic device is further configured to display a second audio switching interface in response to the second operation, wherein the second audio switching interface comprises at least two audio channel options and channel usage status information, the at least two audio channel options comprise the Bluetooth headset option and the first preset channel option, and the channel usage status information indicates that the first preset channel is being used.

6. The system according to claim 5, wherein
the second electronic device is further configured to send the second media audio stream to the Bluetooth headset in response to a third operation of the user on the second audio switching interface, wherein the third operation is used for triggering the second media audio stream to be output through the Bluetooth headset;
the Bluetooth headset is further configured to receive the second media audio stream sent by the second electronic device, output the second media audio stream, and send the first message to the first electronic device; and
the first electronic device is further configured to receive the first message sent by the Bluetooth headset, and switch an audio channel of the first electronic device from the Bluetooth headset to a second preset channel based on the first message.

7. The system according to claim 6, wherein
the first electronic device is further configured to receive the first message sent by the Bluetooth headset, determine a service type of a first media service that is currently processed, and perform a third action based on the service type of the first media service, wherein
the first media audio stream is an audio stream of the first media service, and the third action is any one of the following: stopping processing the first media service; continuing to process the first media service; continuing to process the first media service, and decreasing an audio volume of the first media service; and stopping processing the first media service, and displaying second prompt information, wherein the second prompt information is used for prompting whether to switch the audio channel from the Bluetooth headset to the second preset channel.

8. The system according to any one of claims 1 to 7, wherein the first Bluetooth connection comprises an advanced audio distribution profile A2DP connection, and the second Bluetooth connection comprises the A2DP connection.

9. The system according to any one of claims 1 to 8, wherein the outputting a second media audio stream through a first preset channel other than the Bluetooth headset comprises:
sending, by the second electronic device, the second media audio stream to another Bluetooth device, wherein the another Bluetooth device already establishes a third Bluetooth connection to the second electronic device; or
playing, by the second electronic device, the second media audio stream through a speaker or an earpiece.

10. An audio control system, comprising a Bluetooth headset, a first electronic device, and a second electronic device, wherein the Bluetooth headset establishes a first Bluetooth connection to the first electronic device and establishes a second Bluetooth connection to the second electronic device, and the first Bluetooth connection and the second Bluetooth connection support media audio stream transmission and call audio stream transmission;
the first electronic device is configured to send a first media audio stream to the Bluetooth headset in response to a first operation of a user;
the Bluetooth headset is configured to receive the first media audio stream sent by the first electronic device, output the first media audio stream, and perform a first action, wherein the first action is any one of the following: interrupting the second Bluetooth connection between the Bluetooth headset and the second electronic device, and sending a first message to the second electronic device, wherein the first message indicates that the Bluetooth headset is occupied;
the second electronic device is configured to initiate a first call service, and send a first call audio stream of the first call service to the Bluetooth headset; and
the Bluetooth headset is configured to receive the first call audio stream sent by the second electronic device, output the first call audio stream, and perform a second action, wherein the second action is any one of the following: interrupting the first Bluetooth connection between the Bluetooth headset and the first electronic device, and sending the first message to the first electronic device.

11. The system according to claim 10, wherein the first electronic device is further configured to:
switch an audio channel of the first electronic device from the Bluetooth headset to a first preset channel if it is detected that the first Bluetooth connection between the Bluetooth headset and the first electronic device is interrupted; or
receive the first message sent by the Bluetooth headset, and switch an audio channel of the first electronic device from the Bluetooth headset to a first preset channel based on the first message.

12. The system according to claim 10 or 11, wherein
the Bluetooth headset is further configured to: if it is detected that the first call audio stream is a preset service prompt tone, perform audio mixing on the first media audio stream and the first call audio stream, and output a mixed audio stream.

13. The system according to any one of claims 10 to 12, wherein
the first electronic device is further configured to receive the first message sent by the Bluetooth headset, determine a service type of a first media service that is currently processed, and perform a third action based on the service type of the first media service, wherein
the first media audio stream is an audio stream of the first media service, and the third action is any one of the following: stopping processing the first media service; continuing to process the first media service; continuing to process the first media service, and decreasing an audio volume of the first media service; and stopping processing the first media service, and displaying second prompt information, wherein the second prompt information is used for prompting whether to switch the audio channel from the Bluetooth headset to the first preset channel.

14. The system according to any one of claims 10 to 12, wherein
the Bluetooth headset is further configured to perform a fourth action if a first call audio stream sent by the second electronic device is not received within preset duration, wherein the fourth action is any one of the following: when the first Bluetooth connection between the Bluetooth headset and the first electronic device is interrupted, reestablishing the first Bluetooth connection, and sending a second message to the first electronic device; or when the first Bluetooth connection is not interrupted, sending a second message to the first electronic device, wherein the second message indicates that the Bluetooth headset is not occupied; and
the first electronic device is further configured to receive the second message sent by the Bluetooth headset, and switch the audio channel of the first electronic device from the first preset channel to the Bluetooth headset based on the second message; or switch the audio channel of the first electronic device to the Bluetooth headset in response to a confirmation operation of the user for the second message, wherein the confirmation operation is used for triggering switching of the audio channel of the first electronic device to the Bluetooth headset.

15. The system according to any one of claims 10 to 14, wherein
the first electronic device is further configured to display a first audio switching interface in response to the first operation, wherein the first audio switching interface comprises at least two audio channel options and channel usage status information, and the at least two audio channel options comprise a Bluetooth headset option; and
the second electronic device is further configured to display a second audio switching interface when the first call service is initiated, wherein the second audio switching interface comprises at least two audio channel options and channel usage status information, the at least two audio channel options comprise the Bluetooth headset option, and the channel usage status information indicates that the Bluetooth headset is being used.

16. The system according to claim 15, wherein
the first electronic device is further configured to send the first media audio stream to the Bluetooth headset in response to a second operation of the user on the second audio switching interface, wherein the second operation is used for triggering the first media audio stream to be output through the Bluetooth headset;
the Bluetooth headset is further configured to receive the first media audio stream sent by the first electronic device, output the first media audio stream, and send the first message to the second electronic device; and
the second electronic device is further configured to receive the first message sent by the Bluetooth headset, and switch an audio channel of the second electronic device from the Bluetooth headset to a second preset channel based on the first message.

17. The system according to any one of claims 10 to 16, wherein the first Bluetooth connection comprises an advanced audio distribution profile A2DP connection and a hands-free profile HFP connection, and the second Bluetooth connection comprises the A2DP connection and the HFP connection.

18. The system according to any one of claims 10 to 17, wherein
the Bluetooth headset is further configured to:
recognize whether a wearer of the Bluetooth headset is an owner of the Bluetooth headset, and send a recognition result to the first electronic device and/or the second electronic device; and
the first electronic device and/or the second electronic device are/is further configured to:
if the wearer of the Bluetooth headset is the owner, send a call audio stream to the Bluetooth headset when a call service is performed, or
if the wearer of the Bluetooth headset is not the owner, skip sending a call audio stream to the Bluetooth headset when a call service is performed.

19. The system according to any one of claims 10 to 17, wherein
the Bluetooth headset is further configured to:
recognize whether a wearer of the Bluetooth headset is an owner of the Bluetooth headset; and
if the wearer of the Bluetooth headset is the owner, after receiving a call audio stream, output the call audio stream, or
if the wearer of the Bluetooth headset is not the owner, after receiving a call audio stream, skip outputting the call audio stream.

20. The system according to claim 18 or 19, wherein recognition of whether a wearer of the Bluetooth headset is an owner of the Bluetooth headset by the Bluetooth headset comprises:
recognizing, by the Bluetooth headset based on a manner of ear canal recognition, bone voiceprint recognition, or voice recognition, whether the wearer of the Bluetooth headset is the owner of the Bluetooth headset.

21. An audio control system, comprising a Bluetooth headset, a first electronic device, and a second electronic device, wherein the Bluetooth headset establishes a first Bluetooth connection to the first electronic device and establishes a second Bluetooth connection to the second electronic device, and the first Bluetooth connection and the second Bluetooth connection support media audio stream transmission and call audio stream transmission;
the first electronic device is configured to initiate a first call service, and send a first call audio stream of the first call service to the Bluetooth headset;
the Bluetooth headset is configured to receive the first call audio stream sent by the first electronic device, output the first call audio stream, and perform a first action, wherein the first action is any one of the following: interrupting the second Bluetooth connection between the Bluetooth headset and the second electronic device, and sending a first message to the second electronic device, wherein the first message indicates that the Bluetooth headset is occupied;
the second electronic device is configured to initiate the first call service, and send a second call audio stream of the first call service to the Bluetooth headset; and
the Bluetooth headset is configured to receive the second call audio stream sent by the second electronic device, output the second call audio stream, and perform a second action, wherein the second action is any one of the following: interrupting the first Bluetooth connection between the Bluetooth headset and the first electronic device, and sending the first message to the first electronic device.

22. The system according to claim 21, wherein the first electronic device is further configured to:
switch an audio channel of the first electronic device from the Bluetooth headset to a first preset channel if it is detected that the first Bluetooth connection between the Bluetooth headset and the first electronic device is interrupted; or
receive the first message sent by the Bluetooth headset, and switch an audio channel of the first electronic device from the Bluetooth headset to a first preset channel based on the first message.

23. The system according to claim 21 or 22, wherein
the first electronic device is further configured to receive the first message sent by the Bluetooth headset, determine a service type of the first call service that is currently processed, and perform a third action based on the service type of the first call service, wherein
the first call audio stream is an audio stream of the first call service, and the third action is any one of the following: switching the first call service to call hold; outputting the first call audio stream through the first preset channel; outputting the first call audio stream through the first preset channel, and decreasing a volume of the first call audio stream; and switching the first call service to call hold, and displaying prompt information, wherein the prompt information is used for prompting whether to switch the audio channel from the Bluetooth headset to the first preset channel.

24. The system according to any one of claims 21 to 23, wherein
the Bluetooth headset is further configured to perform a fourth action if the second call audio stream sent by the second electronic device is not received within preset duration, wherein the fourth action is any one of the following: when the first Bluetooth connection between the Bluetooth headset and the first electronic device is interrupted, reestablishing the first Bluetooth connection, and sending a second message to the first electronic device; or when the first Bluetooth connection is not interrupted, sending a second message to the first electronic device, wherein the second message indicates that the Bluetooth headset is not occupied; and
the first electronic device is further configured to receive the second message sent by the Bluetooth headset, and switch the audio channel of the first electronic device from the first preset channel to the Bluetooth headset based on the second message; or switch the audio channel of the first electronic device to the Bluetooth headset in response to a confirmation operation of a user for the second message, wherein the confirmation operation is used for triggering switching of the audio channel of the first electronic device to the Bluetooth headset.

25. The system according to any one of claims 21 to 24, wherein
the first electronic device is further configured to display a first audio switching interface when the first call service is initiated, wherein the first audio switching interface comprises at least two audio channel options and channel usage status information, and the at least two audio channel options comprise a Bluetooth headset option; and
the second electronic device is further configured to display a second audio switching interface when the second call service is initiated, wherein the second audio switching interface comprises at least two audio channel options and channel usage status information, the at least two audio channel options comprise the Bluetooth headset option, and the channel usage status information indicates that the Bluetooth headset is being used.

26. The system according to claim 25, wherein
the first electronic device is further configured to send the first call audio stream to the Bluetooth headset in response to a first operation of the user on the second audio switching interface, wherein the first operation is used for triggering the first call audio stream to be output through the Bluetooth headset;
the Bluetooth headset is further configured to receive the first call audio stream sent by the first electronic device, output the first call audio stream, and send the first message to the second electronic device; and
the second electronic device is further configured to receive the first message sent by the Bluetooth headset, and switch an audio channel of the second electronic device from the Bluetooth headset to a second preset channel based on the first message.

27. The system according to any one of claims 21 to 26, wherein the first Bluetooth connection comprises an advanced audio distribution profile A2DP connection and a hands-free profile HFP connection, and the second Bluetooth connection comprises the A2DP connection and the HFP connection.

28. The system according to any one of claims 21 to 27, wherein
the Bluetooth headset is further configured to:
recognize whether a wearer of the Bluetooth headset is an owner of the Bluetooth headset, and send a recognition result to the first electronic device and/or the second electronic device; and
the first electronic device and/or the second electronic device are/is further configured to:
if the wearer of the Bluetooth headset is the owner, send a call audio stream to the Bluetooth headset when a call service is performed, or
if the wearer of the Bluetooth headset is not the owner, skip sending a call audio stream to the Bluetooth headset when a call service is performed.

29. The system according to any one of claims 21 to 27, wherein
the Bluetooth headset is further configured to:
recognize whether a wearer of the Bluetooth headset is an owner of the Bluetooth headset; and
if the wearer of the Bluetooth headset is the owner, after receiving a call audio stream, output the call audio stream, or
if the wearer of the Bluetooth headset is not the owner, after receiving a call audio stream, skip outputting the call audio stream.

30. The system according to claim 28 or 29, wherein recognition of whether a wearer of the Bluetooth headset is an owner of the Bluetooth headset by the Bluetooth headset comprises:
recognizing, by the Bluetooth headset based on a manner of ear canal recognition, bone voiceprint recognition, or voice recognition, whether the wearer of the Bluetooth headset is the owner of the Bluetooth headset.
